# EUROPEAN PATENT APPLICATION

(11) **EP 3 979 060 A1**
(43) Date of publication of application: **06.04.2022**
(21) Application number: 21211382.3
(22) Date of filing: 31.05.2017
(51) Int. Cl.: G06F 3/0487, G06F 3/0488, G06F 3/0481, G06F 3/041, G06F 3/0482, G06F 3/0484, H04M 1/725, H04N 5/232, G06F 3/01, G06F 3/04817, G06F 3/0485, G06F 3/04883, G06F 3/04847, G06F 3/04845, H04L 51/066, H04L 51/10, H04M 1/72439, G06F 3/04842

(54) **DIGITAL TOUCH ON LIVE VIDEO**

(30) Priority: 12.06.2016 US 201662349075 P; 08.08.2016 DK PA201670596
(62) Divisional of application: 17820835.1
(71) Applicant: Apple Inc., Cupertino, CA 95014 (US)
(72) Inventor: CHAUDHRI, Imran, San Francisco, 94118 (US); ANZURES, Freddy, Allen, Cupertino, 95014 (US); KING, Nicholas, V., Cupertino, 95014 (US)
(74) Representative: COPA Copenhagen Patents

(57) **Abstract**

The present disclosure generally relates to electronic touch communications that include visual information, such as a video or image in combination with visual representations that are based on a single-finger touch input or a multiple-finger touch input.

## Description

### CROSS-REFERENCE TO RELATED APPLICATIONS

This application claims priority to U.S. provisional patent application 62/349,075, entitled "DIGITAL TOUCH ON LIVE VIDEO", filed on June 12, 2016, the content of which is hereby incorporated by reference in its entirety. This application claims priority to Denmark Patent Application No. PA 2016 70596, entitled "DIGITAL TOUCH ON LIVE VIDEO", filed on August 8, 2016, the content of which is hereby incorporated by reference in its entirety.

This application relates to the following co-pending applications: U.S. Patent Application Serial No. 14/839,918, entitled "Electronic Touch Communication," filed August 28, 2015; U.S. Patent Application Serial No. 14/839,921, entitled "Electronic Touch Communication," filed August 28, 2015; and U.S. Patent Application Serial No. 14/839,919, entitled "Electronic Touch Communication," filed August 28, 2015. The contents of these applications are hereby incorporated by reference in their entireties.

### FIELD

The present disclosure relates generally to computer user interfaces, and more specifically to user interfaces for communicating with other users.

### BACKGROUND

Users can communicate electronically with one another by way of messages, such as text messages and messages containing videos or pictures. However, there is a need to enhance electronic communications by improving the communication of emotions, electronically, between users.

### BRIEF SUMMARY

Some techniques for electronic communications using electronic devices, however, are generally cumbersome and inefficient. For example, some existing techniques use a complex and time-consuming user interface, which can optionally include multiple key presses or keystrokes, and thereby delay communication of messages with a recipient. Existing techniques require more time than necessary, wasting user time and device energy, and lending to delays in communication.

Accordingly, the present technique provides electronic devices with faster, more efficient methods and interfaces for electronic communications. Such methods and interfaces optionally complement or replace other methods for electronic communications. Such methods and interfaces reduce the cognitive burden on a user and produce a more efficient human-machine interface. For example, the methods, systems, and user interfaces described herein provide for enhanced communication of emotions between users by permitting greater expression beyond the constraints of traditional video, images, and textual messages. For example, users can draw and/or add graphics to live or otherwise recently-captured video and images for quick and efficient communication with a recipient. Such communications can optionally be ephemeral and expire over time, which can optionally decrease user inhibitions for expression. Further, the present systems, methods, and user interfaces herein allow for quick and easy editing of the recently-captured video and/or image, for example by adding drawings and/or graphics based on touch inputs immediately after, during, and/or before capturing thereof. In this way, communication delays can optionally be minimized since edited communications can optionally be quickly sent to a recipient, and user expressions or emotions can optionally be more real, live, and/or authentic. In another aspect, the efficiency of such methods and interfaces in editing, capturing, and communicating with external devices can optionally conserve power and increase the time between battery charges of the device. Other benefits can optionally be contemplated.

Example methods are disclosed herein. An example method includes, at an electronic device having a touch-sensitive display and a camera, displaying, on the touch-sensitive display, a drawing area, where the drawing area includes a digital viewfinder that presents camera image data received from the camera; while displaying the drawing area, detecting a first touch input, at a first location in the drawing area, representing a first stroke; in response to detecting the first touch input, displaying a visual representation, at the first location in the drawing area, of the first stroke; while displaying the drawing area, detecting a user request to capture the camera image data presented in the digital viewfinder; in response to detecting the user request, capturing the camera image data presented in the digital viewfinder ; and sending data representing the captured camera image data and the first stroke to an external device, where the sent data indicates a portion of the captured camera image data that corresponds to the first location of the first stroke.

An example method includes, at an electronic device having a touch-sensitive display and a camera, displaying, on the touch-sensitive display, an image in a digital viewfinder, where the image is based on camera image data received from the camera; detecting a first touch input at a first location in the digital viewfinder; in response to detecting the first touch input and in accordance with a determination that the first touch input is detected while an operational mode of the camera is a recording mode, displaying, in the digital viewfinder, a visual representation corresponding to the first touch input at the first location; and in response to detecting the first touch input and in accordance with a determination that the first touch input is detected while an operational mode of the camera is a non-recording mode, altering the image displayed in the digital viewfinder by adjusting a characteristic of the camera image data.

An example method includes, at an electronic device having a touch-sensitive display and a camera, displaying, on the touch-sensitive display, a text messaging user interface associated with a contact, where the text messaging user interface includes a message transcript area, and a compact drawing area, where the compact drawing area includes an expand affordance corresponding to an enlarged drawing area; detecting a first user input corresponding to the expand affordance; in response to detecting the first user input, replacing the displayed text messaging interface with display of the enlarged drawing area, where the enlarged drawing area includes a camera affordance, detecting a second user input corresponding to the camera affordance; and in response to detecting the second user input, displaying a digital viewfinder, in the enlarged drawing area, that presents camera image data received from the camera.

An example method includes, at an electronic device having a touch-sensitive display, receiving, at the electronic device, message data including a visual information capable of playback over time from a contact; displaying, on the touch-sensitive display, the message data including the visual information in a text messaging user interface of a messaging application, where the text messaging user interface includes a text message transcript associated with the contact, further where displaying the message data including the visual information comprises displaying a looped playback of the visual information in the text message transcript; in accordance with a determination that a status of the message data including the visual information meets a display criteria, maintaining the looped playback of the visual information in the text message transcript; and in accordance with a determination that a status of the message data including the visual information does not meet the display criteria, ceasing displaying the looped playback of the visual information in the text message transcript.

Exemplary devices are disclosed herein. An example device includes a touch-sensitive display; a camera; one or more processors; a memory; and one or more programs. The one or more programs are stored in the memory and configured to be executed by the one or more processors and include instructions for displaying, on the touch-sensitive display, a drawing area, where the drawing area includes a digital viewfinder that presents camera image data received from the camera; while displaying the drawing area, detecting a first touch input, at a first location in the drawing area, representing a first stroke; in response to detecting the first touch input, displaying a visual representation, at the first location in the drawing area, of the first stroke; while displaying the drawing area, detecting a user request to capture the camera image data presented in the digital viewfinder; in response to detecting the user request, capturing the camera image data presented in the digital viewfinder ; and sending data representing the captured camera image data and the first stroke to an external device, where the sent data indicates a portion of the captured camera image data that corresponds to the first location of the first stroke.

An example electronic device comprises a touch-sensitive display; a camera; one or more processors; a memory; and one or more programs, where the one or more programs are stored in the memory and configured to be executed by the one or more processors. The one or more programs include instructions for displaying, on the touch-sensitive display, an image in a digital viewfinder, where the image is based on camera image data received from the camera; detecting a first touch input at a first location in the digital viewfinder; in response to detecting the first touch input and in accordance with a determination that the first touch input is detected while an operational mode of the camera is a recording mode, displaying, in the digital viewfinder, a visual representation corresponding to the first touch input at the first location; and in response to detecting the first touch input and in accordance with a determination that the first touch input is detected while an operational mode of the camera is a non-recording mode, altering the image displayed in the digital viewfinder by adjusting a characteristic of the camera image data.

An example electronic device comprises a touch-sensitive display; a camera; one or more processors; a memory; and one or more programs, where the one or more programs are stored in the memory and configured to be executed by the one or more processors. The one or more programs include instructions for displaying, on the touch-sensitive display, a text messaging user interface associated with a contact, where the text messaging user interface includes a message transcript area, and a compact drawing area, where the compact drawing area includes an expand affordance corresponding to an enlarged drawing area; detecting a first user input corresponding to the expand affordance; in response to detecting the first user input, replacing the displayed text messaging interface with display of the enlarged drawing area, where the enlarged drawing area includes a camera affordance, detecting a second user input corresponding to the camera affordance; and in response to detecting the second user input, displaying a digital viewfinder, in the enlarged drawing area, that presents camera image data received from the camera.

An example electronic device comprises a touch-sensitive display; one or more processors; a memory; and one or more programs. The one or more programs are stored in the memory and configured to be executed by the one or more processors. The one or more programs including instructions for receiving, at the electronic device, message data including a visual information capable of playback over time from a contact; displaying, on the touch-sensitive display, the message data including the visual information in a text messaging user interface of a messaging application, where the text messaging user interface includes a text message transcript associated with the contact, further where displaying the message data including the visual information comprises displaying a looped playback of the visual information in the text message transcript; in accordance with a determination that a status of the message data including the visual information meets a display criteria, maintaining the looped playback of the visual information in the text message transcript; and in accordance with a determination that a status of the message data including the visual information does not meet the display criteria, ceasing displaying the looped playback of the visual information in the text message transcript.

Example non-transitory computer readable storage media are disclosed herein. A non-transitory computer readable storage medium stores one or more programs. The one or more programs comprise instructions, which when executed by one or more processors of an electronic device, cause the device to display, on a touch-sensitive display, a drawing area, where the drawing area includes a digital viewfinder that presents camera image data received from a camera; while displaying the drawing area, detect a first touch input, at a first location in the drawing area, representing a first stroke; in response to detecting the first touch input, display a visual representation, at the first location in the drawing area, of the first stroke; while displaying the drawing area, detect a user request to capture the camera image data presented in the digital viewfinder; in response to detecting the user request, capture the camera image data presented in the digital viewfinder ; and send data representing the captured camera image data and the first stroke to an external device, where the sent data indicates a portion of the captured camera image data that corresponds to the first location of the first stroke.

An example non-transitory computer readable storage medium stores one or more programs. The one or more programs comprising instructions, which when executed by one or more processors of an electronic device, cause the device to display, on a touch-sensitive display, an image in a digital viewfinder, where the image is based on camera image data received from a camera; detect a first touch input at a first location in the digital viewfinder; in response to detecting the first touch input and in accordance with a determination that the first touch input is detected while an operational mode of the camera is a recording mode, display, in the digital viewfinder, a visual representation corresponding to the first touch input at the first location; and in response to detecting the first touch input and in accordance with a determination that the first touch input is detected while an operational mode of the camera is a non-recording mode, alter the image displayed in the digital viewfinder by adjusting a characteristic of the camera image data.

An example non-transitory computer readable storage medium stores one or more programs. The one or more programs comprise instructions, which when executed by one or more processors of an electronic device, cause the device to display, on a touch-sensitive display, a text messaging user interface associated with a contact, where the text messaging user interface includes a message transcript area, and a compact drawing area, where the compact drawing area includes an expand affordance corresponding to an enlarged drawing area; detect a first user input corresponding to the expand affordance; in response to detecting the first user input, replace the displayed text messaging interface with display of the enlarged drawing area, where the enlarged drawing area includes a camera affordance, detect a second user input corresponding to the camera affordance; and in response to detecting the second user input, display a digital viewfinder, in the enlarged drawing area, that presents camera image data received from a camera.

An example non-transitory computer readable storage medium stores one or more programs. The one or more programs comprising instructions, which when executed by one or more processors of an electronic device, cause the device to receive, at the electronic device, message data including a visual information capable of playback over time from a contact; display, on a touch-sensitive display, the message data including the visual information in a text messaging user interface of a messaging application, where the text messaging user interface includes a text message transcript associated with the contact, further where displaying the message data including the visual information comprises displaying a looped playback of the visual information in the text message transcript; in accordance with a determination that a status of the message data including the visual information meets a display criteria, maintain the looped playback of the visual information in the text message transcript; and in accordance with a determination that a status of the message data including the visual information does not meet the display criteria, cease displaying the looped playback of the visual information in the text message transcript.

In accordance with some embodiments, an electronic device comprises one or more processors; memory; and one or more programs, wherein the one or more programs are stored in the memory and configured to be executed by the one or more processors, the one or more programs including instructions for performing any of the methods described above. In accordance with some embodiments, a non-transitory computer readable storage medium stores one or more programs, the one or more programs comprising instructions, which when executed by one or more processors of an electronic device, cause the device to perform any of the methods described above. In accordance with some embodiments, an electronic device comprises means for performing any of the methods described above.

Executable instructions for performing these functions are, optionally, included in a transitory computer-readable storage medium or other computer program product configured for execution by one or more processors. An example transitory computer readable storage medium stores one or more programs. The one or more programs comprise instructions, which when executed by one or more processors of an electronic device, cause the device to display, on a touch-sensitive display, a drawing area, where the drawing area includes a digital viewfinder that presents camera image data received from a camera; while displaying the drawing area, detect a first touch input, at a first location in the drawing area, representing a first stroke; in response to detecting the first touch input, display a visual representation, at the first location in the drawing area, of the first stroke; while displaying the drawing area, detect a user request to capture the camera image data presented in the digital viewfinder; in response to detecting the user request, capture the camera image data presented in the digital viewfinder ; and send data representing the captured camera image data and the first stroke to an external device, where the sent data indicates a portion of the captured camera image data that corresponds to the first location of the first stroke.

An example transitory computer readable storage medium stores one or more programs. The one or more programs comprising instructions, which when executed by one or more processors of an electronic device, cause the device to display, on a touch-sensitive display, an image in a digital viewfinder, where the image is based on camera image data received from a camera; detect a first touch input at a first location in the digital viewfinder; in response to detecting the first touch input and in accordance with a determination that the first touch input is detected while an operational mode of the camera is a recording mode, display, in the digital viewfinder, a visual representation corresponding to the first touch input at the first location; and in response to detecting the first touch input and in accordance with a determination that the first touch input is detected while an operational mode of the camera is a non-recording mode, alter the image displayed in the digital viewfinder by adjusting a characteristic of the camera image data.

An example transitory computer readable storage medium stores one or more programs. The one or more programs comprise instructions, which when executed by one or more processors of an electronic device, cause the device to display, on a touch-sensitive display, a text messaging user interface associated with a contact, where the text messaging user interface includes a message transcript area, and a compact drawing area, where the compact drawing area includes an expand affordance corresponding to an enlarged drawing area; detect a first user input corresponding to the expand affordance; in response to detecting the first user input, replace the displayed text messaging interface with display of the enlarged drawing area, where the enlarged drawing area includes a camera affordance, detect a second user input corresponding to the camera affordance; and in response to detecting the second user input, display a digital viewfinder, in the enlarged drawing area, that presents camera image data received from a camera.

An example transitory computer readable storage medium stores one or more programs. The one or more programs comprising instructions, which when executed by one or more processors of an electronic device, cause the device to receive, at the electronic device, message data including a visual information capable of playback over time from a contact; display, on a touch-sensitive display, the message data including the visual information in a text messaging user interface of a messaging application, where the text messaging user interface includes a text message transcript associated with the contact, further where displaying the message data including the visual information comprises displaying a looped playback of the visual information in the text message transcript; in accordance with a determination that a status of the message data including the visual information meets a display criteria, maintain the looped playback of the visual information in the text message transcript; and in accordance with a determination that a status of the message data including the visual information does not meet the display criteria, cease displaying the looped playback of the visual information in the text message transcript.

Thus, devices are provided with faster, more efficient methods and interfaces for electronic communications, thereby increasing the effectiveness, efficiency, and user satisfaction with such devices. Such methods and interfaces can optionally complement or replace other methods for electronic communications.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIG. 1A is a block diagram illustrating a portable multifunction device with a touch-sensitive display in accordance with some embodiments.
FIG. 1B is a block diagram illustrating exemplary components for event handling in accordance with some embodiments.
FIG. 2 illustrates a portable multifunction device having a touch screen in accordance with some embodiments.
FIG. 3 is a block diagram of an exemplary multifunction device with a display and a touch-sensitive surface in accordance with some embodiments.
FIG. 4A illustrates an exemplary user interface for a menu of applications on a portable multifunction device in accordance with some embodiments.
FIG. 4B illustrates an exemplary user interface for a multifunction device with a touch-sensitive surface that is separate from the display in accordance with some embodiments.
FIG. 5A illustrates a personal electronic device in accordance with some embodiments.
FIG. 5B is a block diagram illustrating a personal electronic device in accordance with some embodiments.
FIGS. 5C-5D illustrate exemplary components of a personal electronic device having a touch-sensitive display and intensity sensors in accordance with some embodiments.
FIGS. 5E-5H illustrate exemplary components and user interfaces of a personal electronic device in accordance with some embodiments.
FIGS. 6A-6G illustrate exemplary user interfaces for creating electronic touch communications with video or image, in accordance with some embodiments.
FIGS. 7A-7E illustrate example user interfaces and touch inputs for creating electronic touch communications, in accordance with some embodiments.
FIGS. 8A-8F illustrate example user interfaces for creating electronic touch communications in combination with a text messaging user interface, in accordance with some embodiments.
FIG. 9 illustrates an example user interface for receiving and viewing electronic touch communications, in accordance with some embodiments.
FIG. 10 is a flow diagram illustrating an example method for creating electronic touch communications with video or image, in accordance with some embodiments.
FIG. 11 is a flow diagram illustrating an example method for creating electronic touch communications on a digital viewfinder, in accordance with some embodiments.
FIG. 12 is a flow diagram illustrating an example method for creating electronic touch communications in combination with a text messaging user interface, in accordance with some embodiments.
FIG. 13 is a flow diagram illustrating an example method for receiving and viewing electronic touch communications, in accordance with some embodiments.
FIGS. 14-17 are functional block diagrams of example electronic devices, in accordance with some embodiments.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for electronic communications. For example, there is need to quickly compose electronic communications that extend beyond text messages. There is a need to connect with other users through electronic communications while still conveying emotion. In some cases, such techniques can reduce the cognitive burden on a user who produces electronic communications, thereby enhancing productivity. Further, such techniques can reduce processor and battery power otherwise wasted on redundant user inputs.

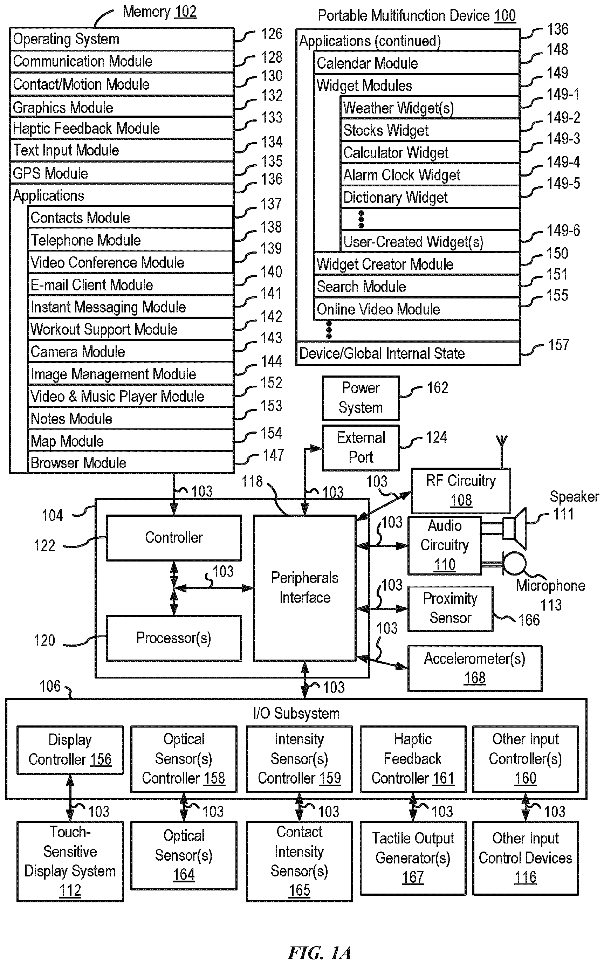

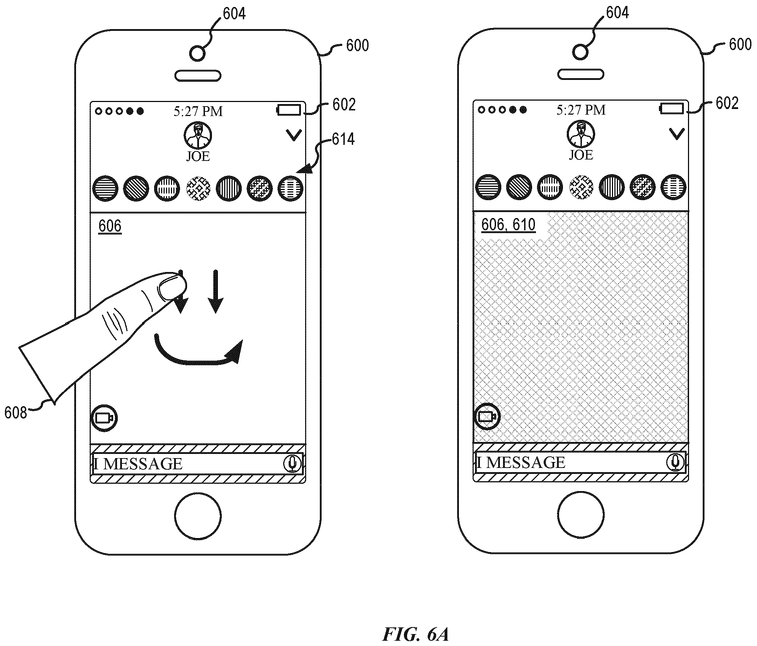

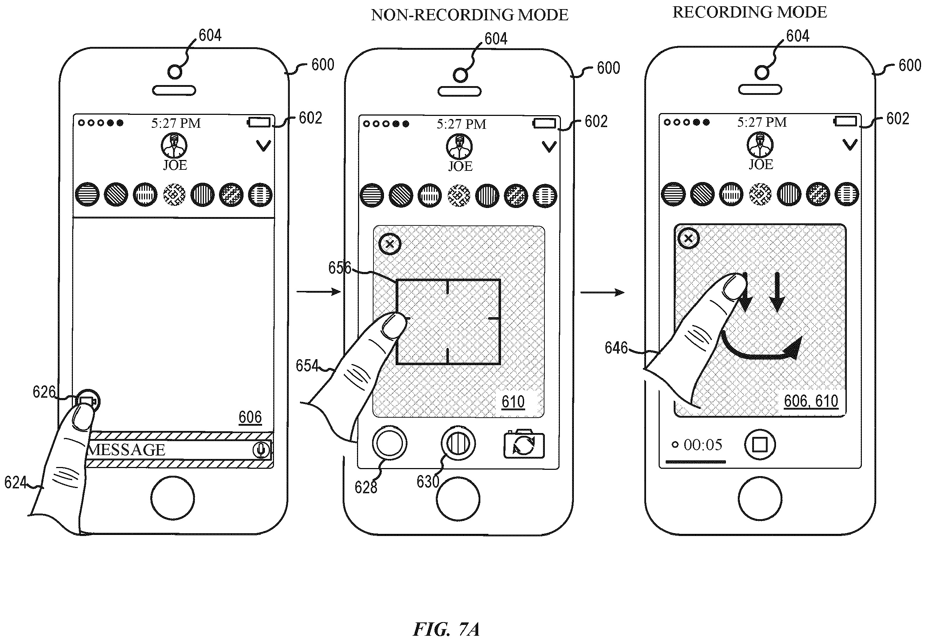

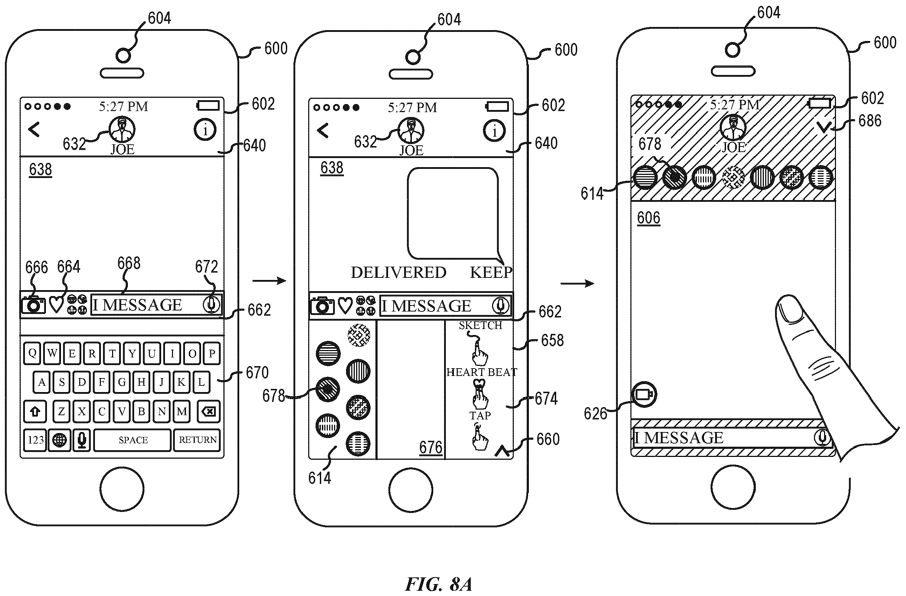

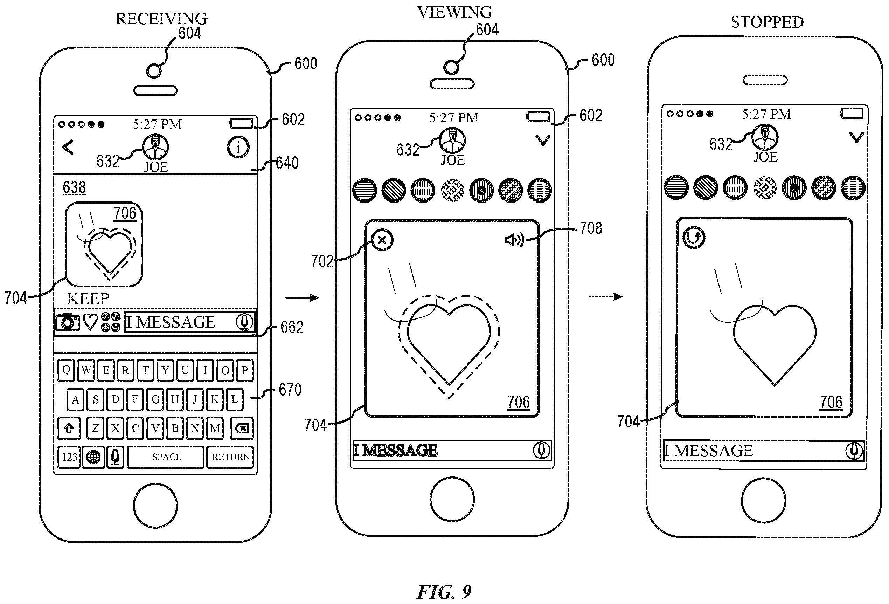

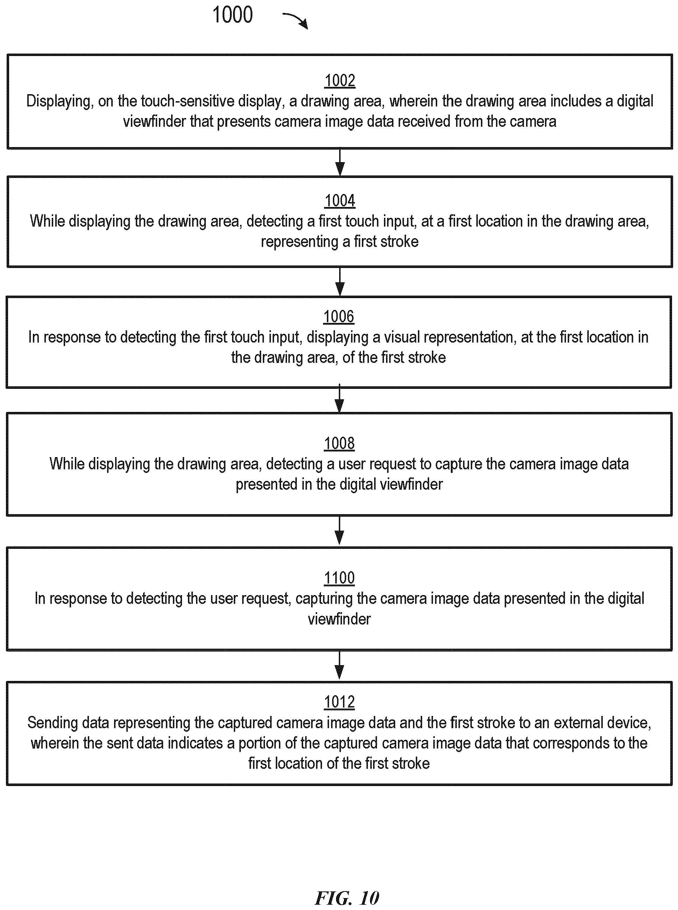

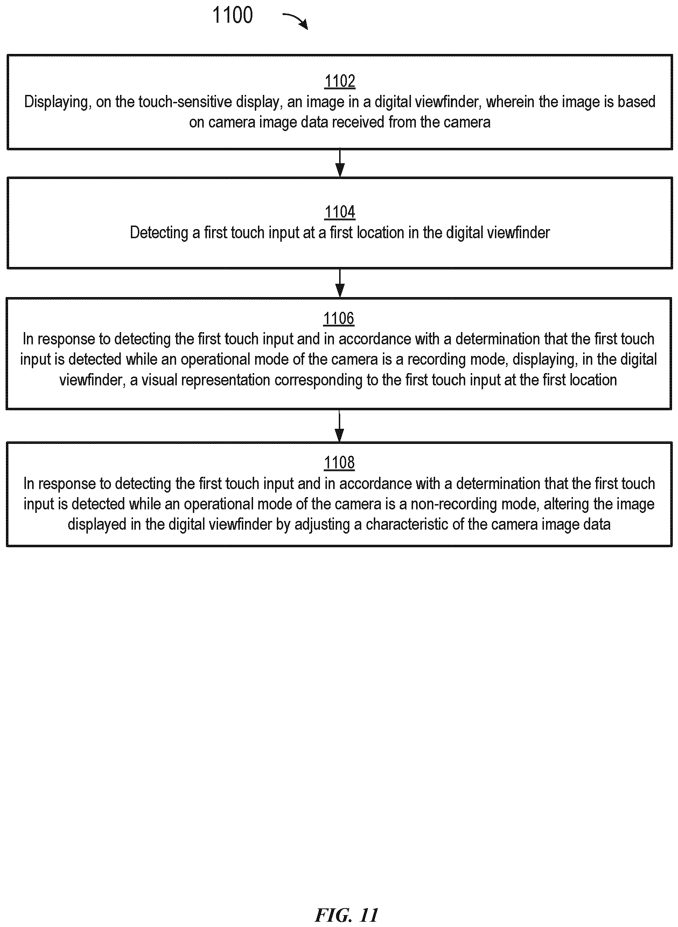

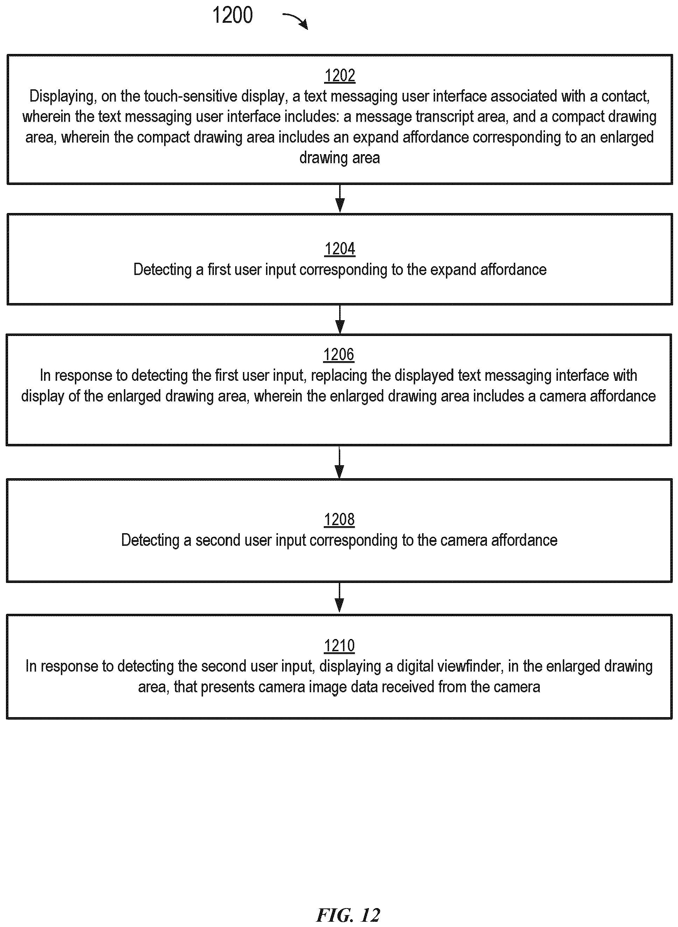

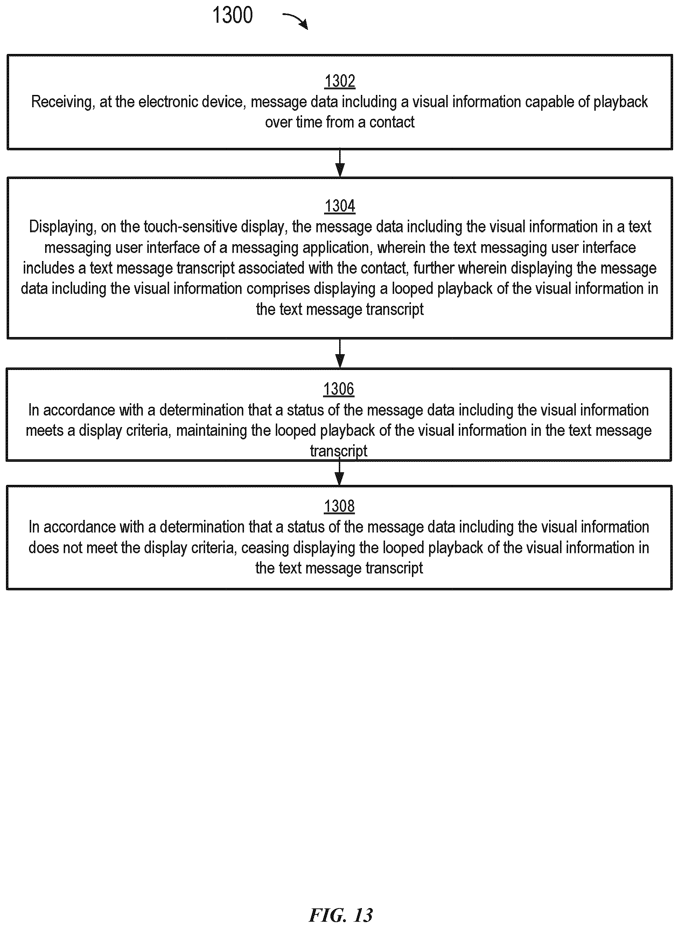

Below, FIGS. 1A-1B, 2, 3, 4A-4B, and 5A-5H provide a description of exemplary devices for performing the techniques for electronic communications. FIGS. 6A-6G illustrate exemplary user interfaces for electronic communications. FIG. 10 is a flow diagram illustrating methods of electronic communications in accordance with some embodiments. FIGS. 7A-7E illustrate exemplary user interfaces for electronic communications. FIG. 11 is a flow diagram illustrating methods of electronic communications in accordance with some embodiments. The user interfaces in FIGS. 8A-8F are used to illustrate the processes described below, including the processes in FIG. 12. The user interfaces of FIG. 9 are used to illustrate the processes described below, including the processes in FIG. 13.

Although the following description uses terms "first," "second," etc. to describe various elements, these elements should not be limited by the terms. These terms are only used to distinguish one element from another. For example, a first touch could be termed a second touch, and, similarly, a second touch could be termed a first touch, without departing from the scope of the various described embodiments. The first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad).

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage mediums), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

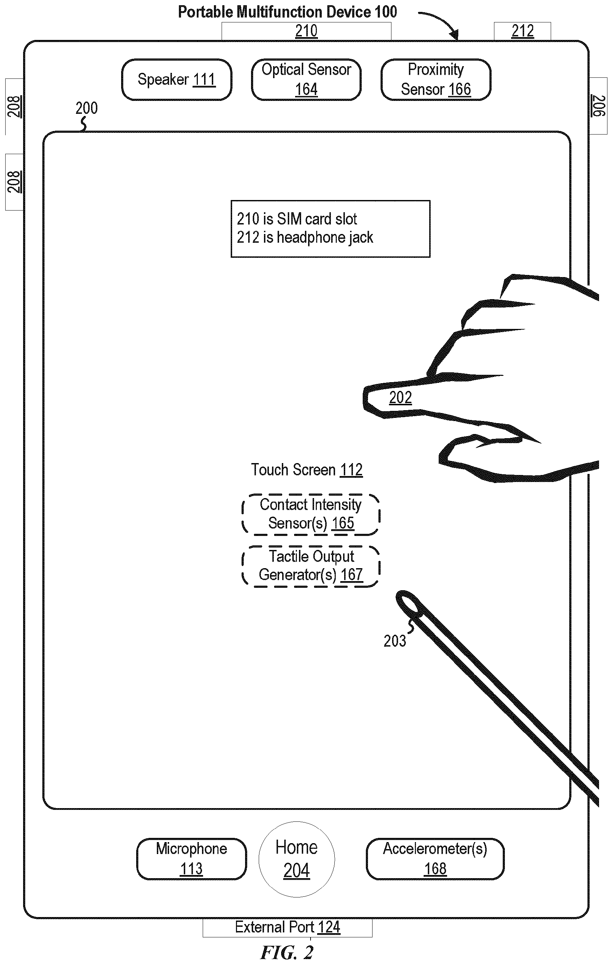

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some alternate embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad (not shown) for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer (not shown) and a GPS (or GLONASS or other global navigation system) receiver (not shown) for obtaining information concerning the location and orientation (e.g., portrait or landscape) of device 100.

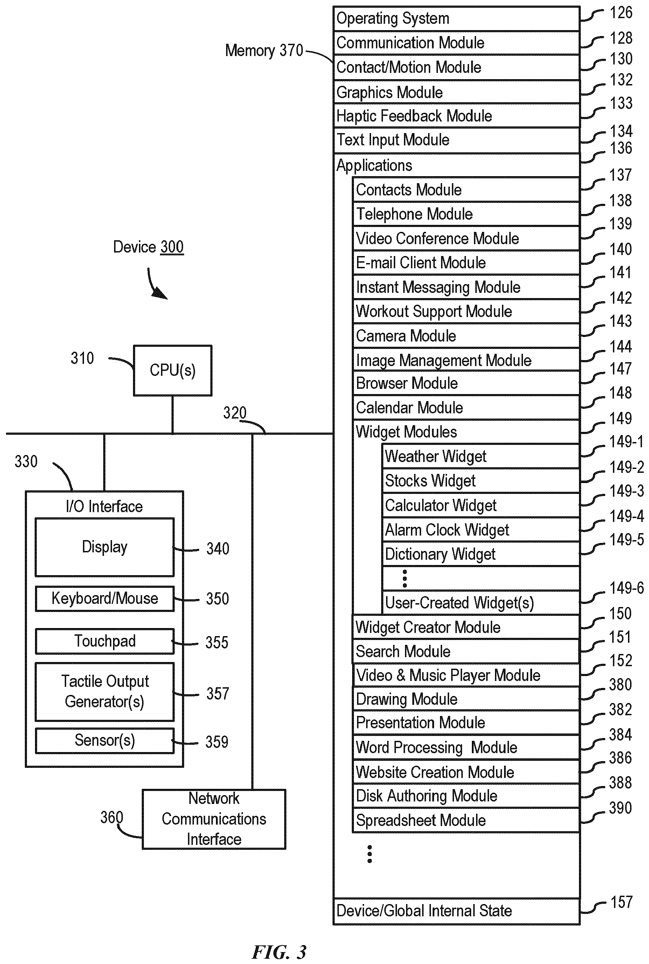

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments, memory 102 (FIG. 1A) or 370 (FIG. 3) stores device/global internal state 157, as shown in FIGS. 1A and 3. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing; to camera 143 as picture/video metadata; and to applications that provide location-based services such as weather widgets, local yellow page widgets, and map/navigation widgets).

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 138, video conference module 139, e-mail 140, or IM 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs, procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

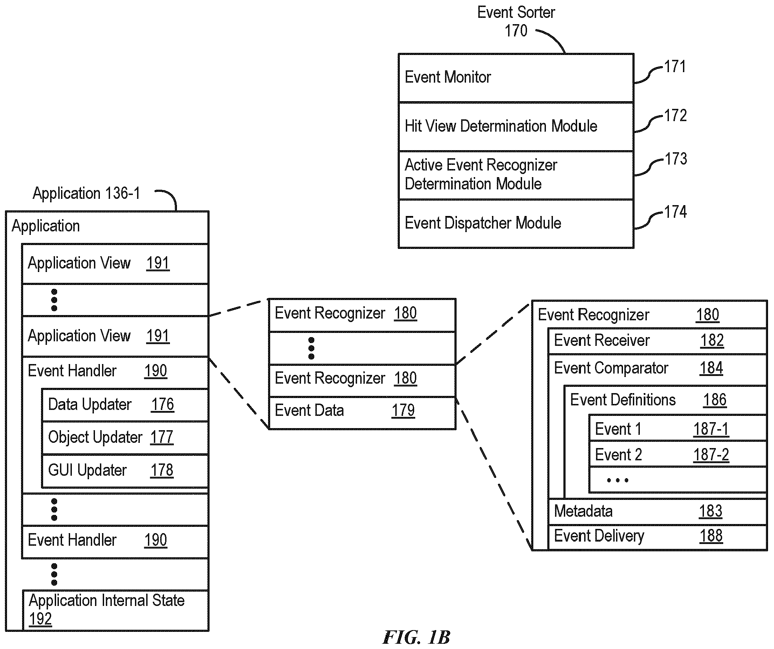

FIG. 1B is a block diagram illustrating exemplary components for event handling in accordance with some embodiments. In some embodiments, memory 102 (FIG. 1A) or 370 (FIG. 3) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit (not shown) or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (187) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definition 187 includes a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3 is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3 is, optionally, stored in one or more of the previously mentioned memory devices. Each of the above-identified modules corresponds to a set of instructions for performing a function described above. The above-identified modules or programs (e.g., sets of instructions) need not be implemented as separate software programs, procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Attention is now directed towards embodiments of user interfaces that are, optionally, implemented on, for example, portable multifunction device 100.

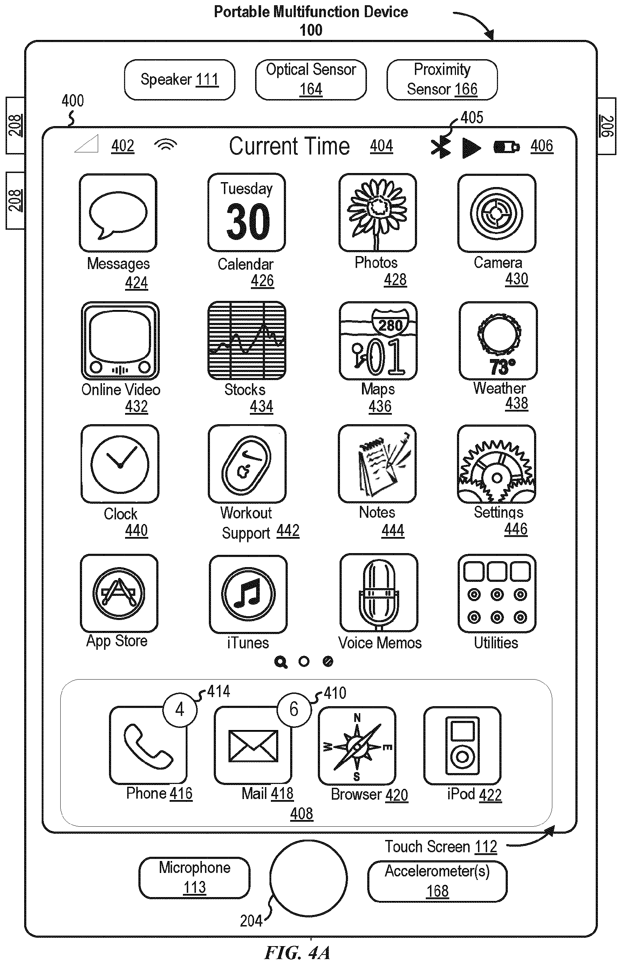

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   ∘ Icon 416 for telephone module 138, labeled "Phone," which optionally includes an indicator 414 of the number of missed calls or voicemail messages;
   ∘ Icon 418 for e-mail client module 140, labeled "Mail," which optionally includes an indicator 410 of the number of unread e-mails;
   ∘ Icon 420 for browser module 147, labeled "Browser;" and
   ∘ Icon 422 for video and music player module 152, also referred to as iPod (trademark of Apple Inc.) module 152, labeled "iPod;" and
- Icons for other applications, such as:
   ∘ Icon 424 for IM module 141, labeled "Messages;"
   ∘ Icon 426 for calendar module 148, labeled "Calendar;"
   ∘ Icon 428 for image management module 144, labeled "Photos;"
   ∘ Icon 430 for camera module 143, labeled "Camera;"
   ∘ Icon 432 for online video module 155, labeled "Online Video;"
   ∘ Icon 434 for stocks widget 149-2, labeled "Stocks;"
   ∘ Icon 436 for map module 154, labeled "Maps;"
   ∘ Icon 438 for weather widget 149-1, labeled "Weather;"
   ∘ Icon 440 for alarm clock widget 149-4, labeled "Clock;"
   ∘ Icon 442 for workout support module 142, labeled "Workout Support;"
   ∘ Icon 444 for notes module 153, labeled "Notes;" and
   ∘ Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

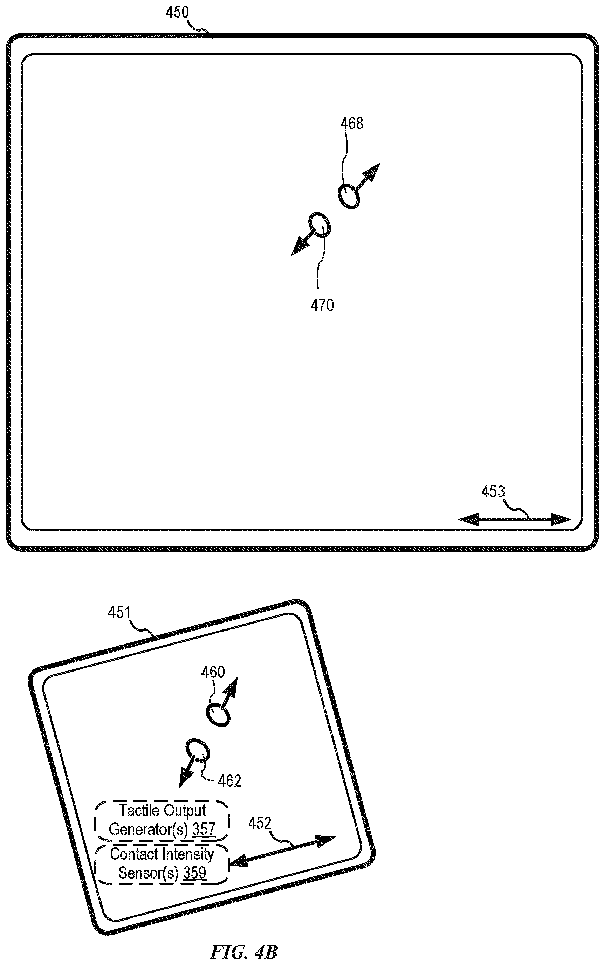

FIG. 4B illustrates an exemplary user interface on a device (e.g., device 300, FIG. 3) with a touch-sensitive surface 451 (e.g., a tablet or touchpad 355, FIG. 3) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., 451 in FIG. 4B) has a primary axis (e.g., 452 in FIG. 4B) that corresponds to a primary axis (e.g., 453 in FIG. 4B) on the display (e.g., 450). In accordance with these embodiments, the device detects contacts (e.g., 460 and 462 in FIG. 4B) with the touch-sensitive surface 451 at locations that correspond to respective locations on the display (e.g., in FIG. 4B, 460 corresponds to 468 and 462 corresponds to 470). In this way, user inputs (e.g., contacts 460 and 462, and movements thereof) detected by the device on the touch-sensitive surface (e.g., 451 in FIG. 4B) are used by the device to manipulate the user interface on the display (e.g., 450 in FIG. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

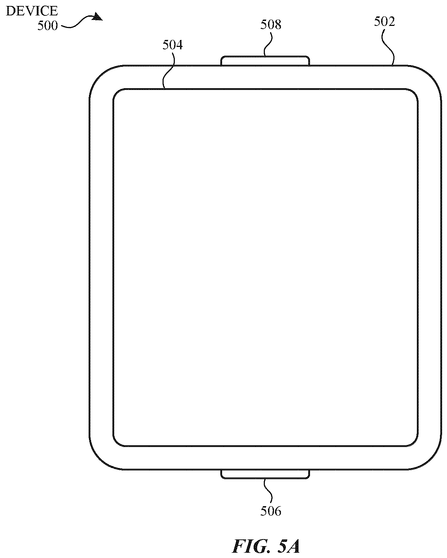

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276, each of which is hereby incorporated by reference in their entirety.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

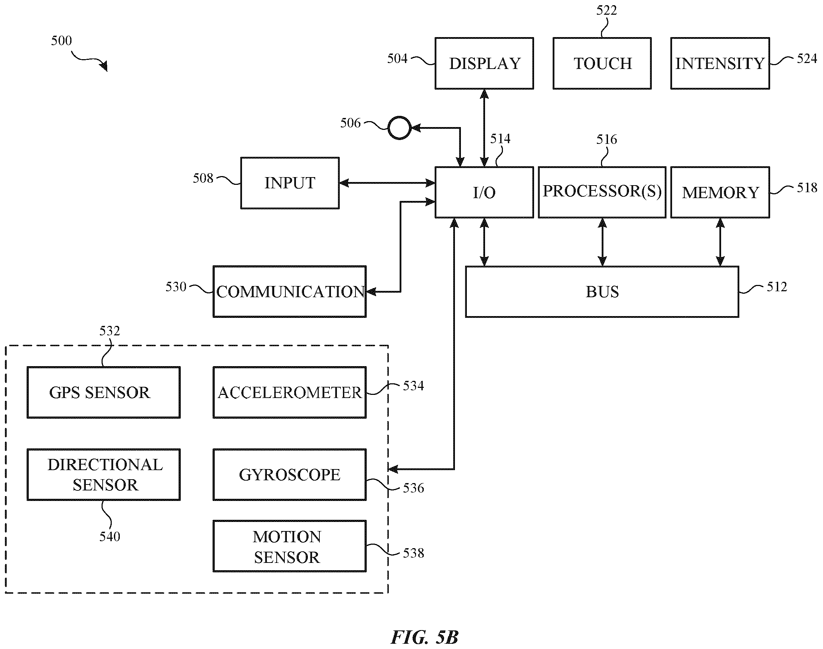

FIG. 5B depicts exemplary personal electronic device 500. In some embodiments, device 500 can include some or all of the components described with respect to FIGS. 1A, 1B, and 3. Device 500 has bus 512 that operatively couples I/O section 514 with one or more computer processors 516 and memory 518. I/O section 514 can be connected to display 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device or a depressible and rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

Memory 518 of personal electronic device 500 can include one or more non-transitory computer-readable storage mediums, for storing computer-executable instructions, which, when executed by one or more computer processors 516, for example, can cause the computer processors to perform the techniques described below, including processes 1000-1300 (FIGS. 10-13). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3 or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

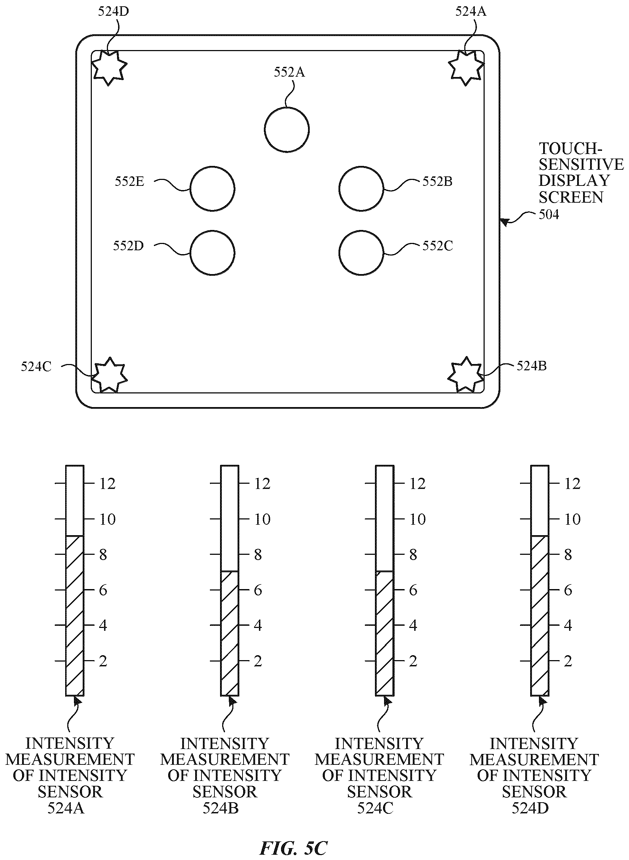

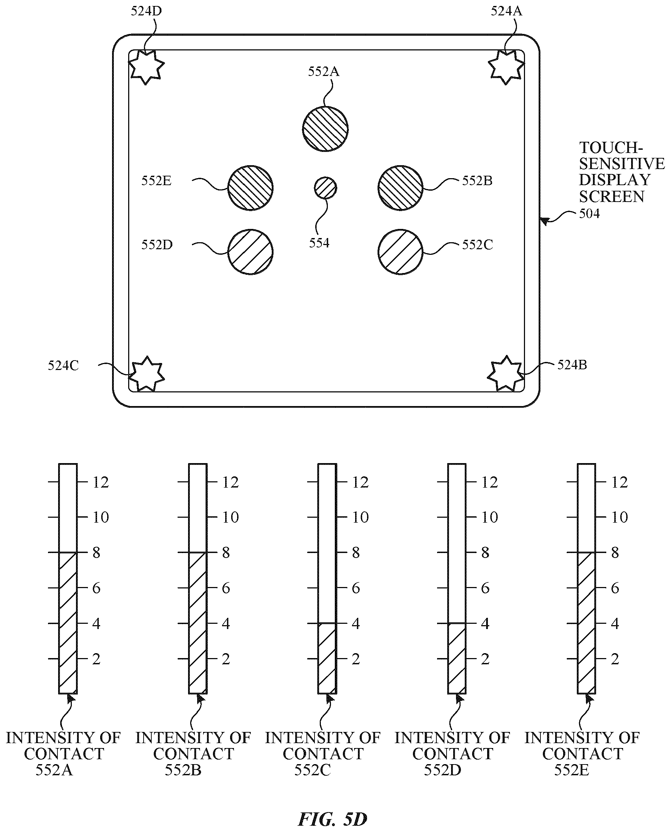

FIG. 5C illustrates detecting a plurality of contacts 552A-552E on touch-sensitive display screen 504 with a plurality of intensity sensors 524A-524D. FIG. 5C additionally includes intensity diagrams that show the current intensity measurements of the intensity sensors 524A-524D relative to units of intensity. In this example, the intensity measurements of intensity sensors 524A and 524D are each 9 units of intensity, and the intensity measurements of intensity sensors 524B and 524C are each 7 units of intensity. In some implementations, an aggregate intensity is the sum of the intensity measurements of the plurality of intensity sensors 524A-524D, which in this example is 32 intensity units. In some embodiments, each contact is assigned a respective intensity that is a portion of the aggregate intensity. FIG. 5D illustrates assigning the aggregate intensity to contacts 552A-552E based on their distance from the center of force 554. In this example, each of contacts 552A, 552B, and 552E are assigned an intensity of contact of 8 intensity units of the aggregate intensity, and each of contacts 552C and 552D are assigned an intensity of contact of 4 intensity units of the aggregate intensity. More generally, in some implementations, each contact j is assigned a respective intensity Ij that is a portion of the aggregate intensity, A, in accordance with a predefined mathematical function, Ij = A·(Dj/• Di), where Dj is the distance of the respective contact j to the center of force, and • Di is the sum of the distances of all the respective contacts (e.g., i=1 to last) to the center of force. The operations described with reference to FIGS. 5C-5D can be performed using an electronic device similar or identical to device 100, 300, or 500. In some embodiments, a characteristic intensity of a contact is based on one or more intensities of the contact. In some embodiments, the intensity sensors are used to determine a single characteristic intensity (e.g., a single characteristic intensity of a single contact). It should be noted that the intensity diagrams are not part of a displayed user interface, but are included in FIGS. 5C-5D to aid the reader.

In some embodiments, a portion of a gesture is identified for purposes of determining a characteristic intensity. For example, a touch-sensitive surface optionally receives a continuous swipe contact transitioning from a start location and reaching an end location, at which point the intensity of the contact increases. In this example, the characteristic intensity of the contact at the end location is, optionally, based on only a portion of the continuous swipe contact, and not the entire swipe contact (e.g., only the portion of the swipe contact at the end location). In some embodiments, a smoothing algorithm is, optionally, applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The intensity of a contact on the touch-sensitive surface is, optionally, characterized relative to one or more intensity thresholds, such as a contact-detection intensity threshold, a light press intensity threshold, a deep press intensity threshold, and/or one or more other intensity thresholds. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

An increase of characteristic intensity of the contact from an intensity below the light press intensity threshold to an intensity between the light press intensity threshold and the deep press intensity threshold is sometimes referred to as a "light press" input. An increase of characteristic intensity of the contact from an intensity below the deep press intensity threshold to an intensity above the deep press intensity threshold is sometimes referred to as a "deep press" input. An increase of characteristic intensity of the contact from an intensity below the contact-detection intensity threshold to an intensity between the contact-detection intensity threshold and the light press intensity threshold is sometimes referred to as detecting the contact on the touch-surface. A decrease of characteristic intensity of the contact from an intensity above the contact-detection intensity threshold to an intensity below the contact-detection intensity threshold is sometimes referred to as detecting liftoff of the contact from the touch-surface. In some embodiments, the contact-detection intensity threshold is zero. In some embodiments, the contact-detection intensity threshold is greater than zero.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

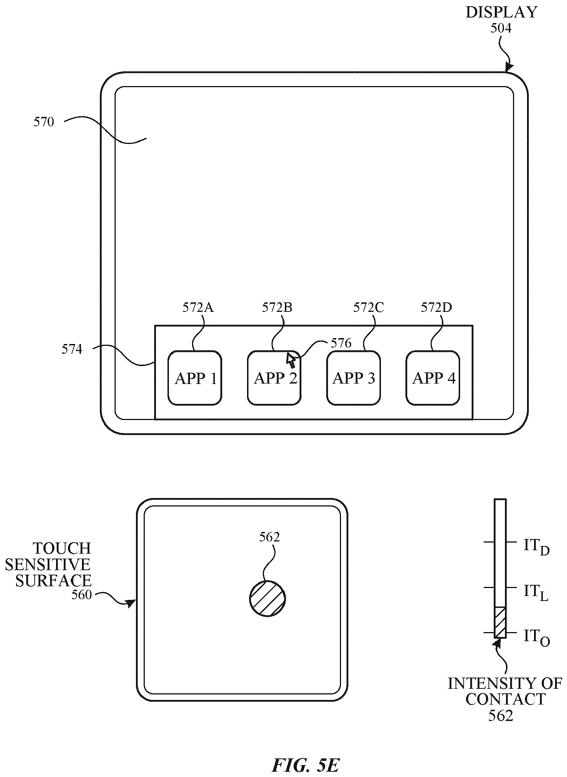

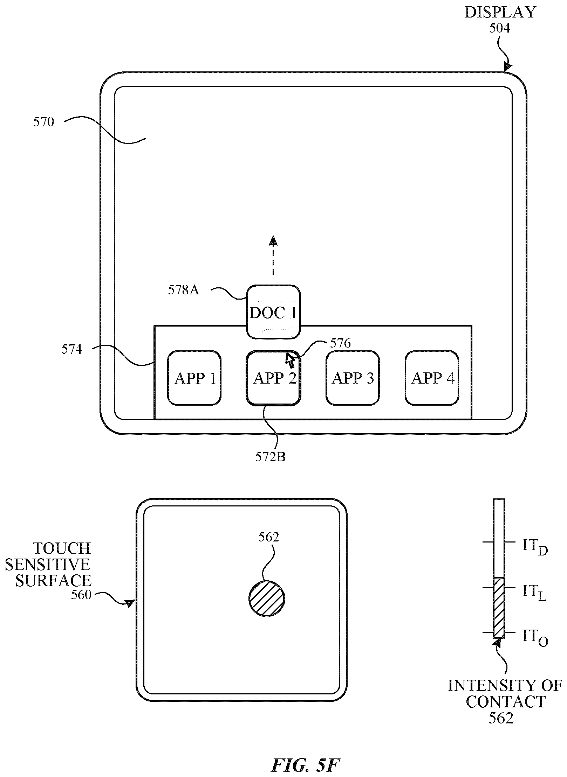

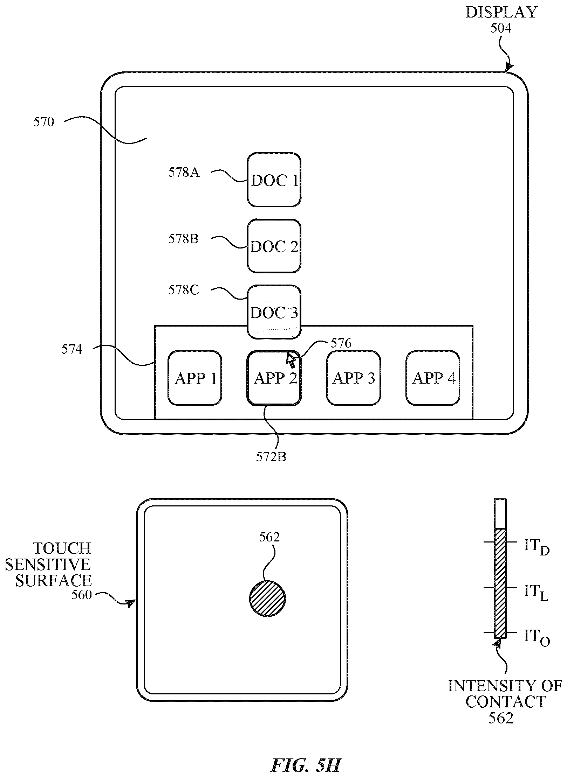

FIGS. 5E-5H illustrate detection of a gesture that includes a press input that corresponds to an increase in intensity of a contact 562 from an intensity below a light press intensity threshold (e.g., "IT_{L}") in FIG. 5E, to an intensity above a deep press intensity threshold (e.g., "IT_{D}") in FIG. 5H. The gesture performed with contact 562 is detected on touch-sensitive surface 560 while cursor 576 is displayed over application icon 572B corresponding to App 2, on a displayed user interface 570 that includes application icons 572A-572D displayed in predefined region 574. In some embodiments, the gesture is detected on touch-sensitive display 504. The intensity sensors detect the intensity of contacts on touch-sensitive surface 560. The device determines that the intensity of contact 562 peaked above the deep press intensity threshold (e.g., "IT_{D}"). Contact 562 is maintained on touch-sensitive surface 560. In response to the detection of the gesture, and in accordance with contact 562 having an intensity that goes above the deep press intensity threshold (e.g., "IT_{D}") during the gesture, reduced-scale representations 578A-578C (e.g., thumbnails) of recently opened documents for App 2 are displayed, as shown in FIGS. 5F-5H. In some embodiments, the intensity, which is compared to the one or more intensity thresholds, is the characteristic intensity of a contact. It should be noted that the intensity diagram for contact 562 is not part of a displayed user interface, but is included in FIGS. 5E-5H to aid the reader.

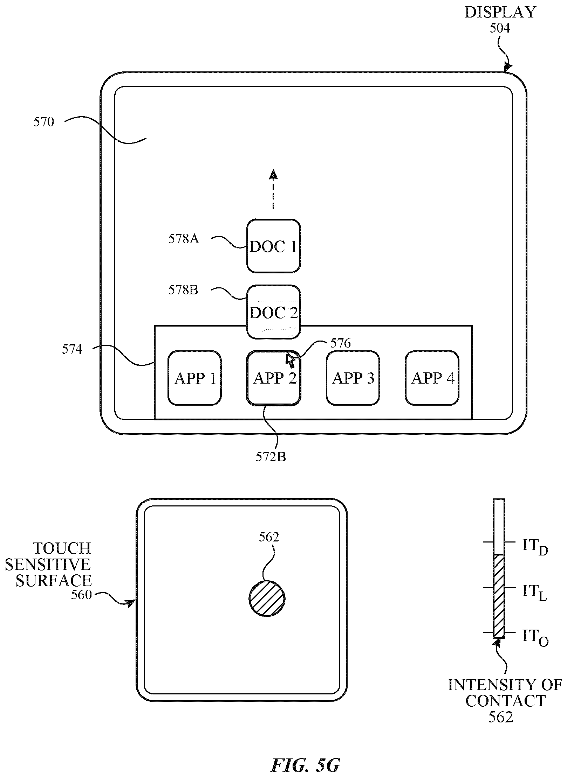

In some embodiments, the display of representations 578A-578C includes an animation. For example, representation 578A is initially displayed in proximity of application icon 572B, as shown in FIG. 5F. As the animation proceeds, representation 578A moves upward and representation 578B is displayed in proximity of application icon 572B, as shown in FIG. 5G. Then, representations 578A moves upward, 578B moves upward toward representation 578A, and representation 578C is displayed in proximity of application icon 572B, as shown in FIG. 5H. Representations 578A-578C form an array above icon 572B. In some embodiments, the animation progresses in accordance with an intensity of contact 562, as shown in FIGS. 5F-5G, where the representations 578A-578C appear and move upwards as the intensity of contact 562 increases toward the deep press intensity threshold (e.g., "IT_{D}"). In some embodiments, the intensity, on which the progress of the animation is based, is the characteristic intensity of the contact. The operations described with reference to FIGS. 5E-5H can be performed using an electronic device similar or identical to device 100, 300, or 500.

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the descriptions of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

As used herein, an "installed application" refers to a software application that has been downloaded onto an electronic device (e.g., devices 100, 300, and/or 500) and is ready to be launched (e.g., become opened) on the device. In some embodiments, a downloaded application becomes an installed application by way of an installation program that extracts program portions from a downloaded package and integrates the extracted portions with the operating system of the computer system.

As used herein, the terms "open application" or "executing application" refer to a software application with retained state information (e.g., as part of device/global internal state 157 and/or application internal state 192). An open or executing application is, optionally, any one of the following types of applications:
- an active application, which is currently displayed on a display screen of the device that the application is being used on;
- a background application (or background processes), which is not currently displayed, but one or more processes for the application are being processed by one or more processors; and
- a suspended or hibernated application, which is not running, but has state information that is stored in memory (volatile and non-volatile, respectively) and that can be used to resume execution of the application.

As used herein, the term "closed application" refers to software applications without retained state information (e.g., state information for closed applications is not stored in a memory of the device). Accordingly, closing an application includes stopping and/or removing application processes for the application and removing state information for the application from the memory of the device. Generally, opening a second application while in a first application does not close the first application. When the second application is displayed and the first application ceases to be displayed, the first application becomes a background application.

Attention is now directed towards embodiments of user interfaces ("UI") and associated processes that are implemented on an electronic device, such as portable multifunction device 100, device 300, or device 500.

FIGS. 6A-6G illustrate exemplary user interfaces for electronic touch communications, in accordance with some embodiments. The user interfaces in these figures are used to illustrate the processes described below, including the processes in FIG. 10.

FIG. 6A illustrates an example electronic device 600, which optionally includes any or all features as discussed in regard to portable multifunction device 100, device 300, and device 500. The device 600 optionally includes a touch-sensitive display screen 602 (hereinafter referred to as "display screen 602"), which can be similar or the same as touch-sensitive display screen 504. The device 600 further includes a camera 604, such as the optical imaging module 143 and forward-facing and/or backward-facing optical sensors 164. In accordance with various embodiments described herein, the device 600 provides various features for creating and sending electronic touch communications with recorded video and/or camera content to an external device.

For example, as shown in FIG. 6A, the device 600 displays a drawing area 606 that is configured to receive touch inputs 608 (e.g., swipes, taps, single-finger touch input, multiple-finger touch input, and so on) and display visual representations corresponding to the detected touch inputs 608. In some embodiments, drawing area 606 is displayed in response to a user input received while displaying a different user interface, such as text message transcript 638 (FIG. 8A), discussed below. Visual representations optionally include pre-generated graphics and/or free-form line drawings, the latter as demonstrated in the drawing area 606 of FIG. 6A. The drawing area 606 optionally provides, or otherwise coincides with, a displayed digital viewfinder 610 that presents camera image data received from the camera 604. Merely by way of example, as shown in FIG. 6A, the digital viewfinder 610 presenting the camera image data (e.g., hatched shadowing of FIG. 6A) is layered over or under the drawing area 606, or in other aspects, is incorporated as a background or "live" background in the drawing area 606. It is noted that, in some embodiments, camera 604 is a forward-facing and/or a backward-facing camera lens such that the camera image data presented in the digital viewfinder 610 is not limited to a single viewing direction. As described further below, the digital viewfinder 610 is configured to capture still pictures and/or video, and/or simply present the camera image data in the drawing area in a non-recording mode. When in a recording mode, audio data is also captured with a microphone, such as the microphone 113 described above for device 100.

As demonstrated, for example in FIG. 6A, a first touch input 608 results in display of a visual representation of the input at a first location in the drawing area 606, where the first touch input represents a first stroke. Merely by way of example, the first location where the first touch input 608 is received corresponds to an input location that is based on the drawing area 606, such as pair of coordinates defining the location in the drawing area 606. In other cases, the first location is based on or further associated with a tracked point related to the camera image data presented in the digital viewfinder 610, such as a tracked object and/or a mesh-marked point. In yet another example, the first location is based on and/or associated with a compass direction of the electronic device, such as a compass direction corresponding to a direction of view captured in the digital viewfinder. In another aspect, the first stroke optionally includes a received contact of one or more points having a beginning and an end, such as a tap, a movement with a finger across the touch-sensitive display screen 602, or any touch contact having a beginning defined by a contact landing on the touch-sensitive display screen 602 and an end defined by the contact being lifted off of the display screen 602. Various touch inputs corresponding to various strokes optionally include, for example, taps, force taps (i.e., taps having a characteristic intensity), multiple-finger swipes, single-finger swipes, and so on, in the drawing area 606.

As shown in FIG. 6A, a preview or visual representation of the first stroke is provided in the drawing area 606 along with its characteristic kinematics. For example, the touch input 608 corresponds to a swipe input having kinematics that are reflected in its visual representation. The kinematics are based on the movement of the touch input 608, such that if initial swipe movements of the touch input 608 were quick swipes and later movements were slower swipes, then the device 600 renders the visual representations corresponding to the swipes by displaying visual representations of the strokes in an order and speed that they were drawn, which includes any pauses or delays detected there between. Such characteristics of the movement of the touch input 608 are captured and registered as characteristic kinematics associated with, and reflected in the playback, of the visual representation. It is noted that characteristic kinematics need not be registered for every touch input 608 that is detected in the drawing area 606. It is further noted that not all visual representations include characteristic kinematics, and/or reflect the characteristic kinematics that are associated therewith. For instance, as described further below, a visual representation based on a freeform line drawing in the drawing area 606 includes characteristic kinematics that are ignored or not displayed given certain conditions, for example, if their corresponding touch input(s) were received before recording of a video. In that case, the visual representations are optionally simply presented or flashed on-screen for display. Other examples, as described below, are possible.

Additionally and/or alternatively, the touch inputs 608 detected in the drawing area 606 include a detected characteristic intensity, such as an intensity profile of various values over time and/or a single detected value. Merely by way of example, a preview or visual representation of the first stroke reflect a corresponding characteristic intensity of the first touch input and translate the detected characteristic intensity into a graphic rendering (e.g., an intensity of an animated fire varies with a fluctuating characteristic intensity of the touch input 608). In another example, an animated graphic is associated with the characteristic intensity of the touch input 608 exceeding an intensity threshold (e.g., the graphic is displayed only when the characteristic intensity exceeds the threshold). In a further example, a stroke thickness and/or color varies dynamically in accordance with the characteristic intensity of its touch input 608. In other examples, a color of the visual representation of the first stroke is static and/or displayed in accordance with a color corresponding to a selected color affordance, such as an affordance from the plurality of color affordances 614 provided above the drawing area 606.

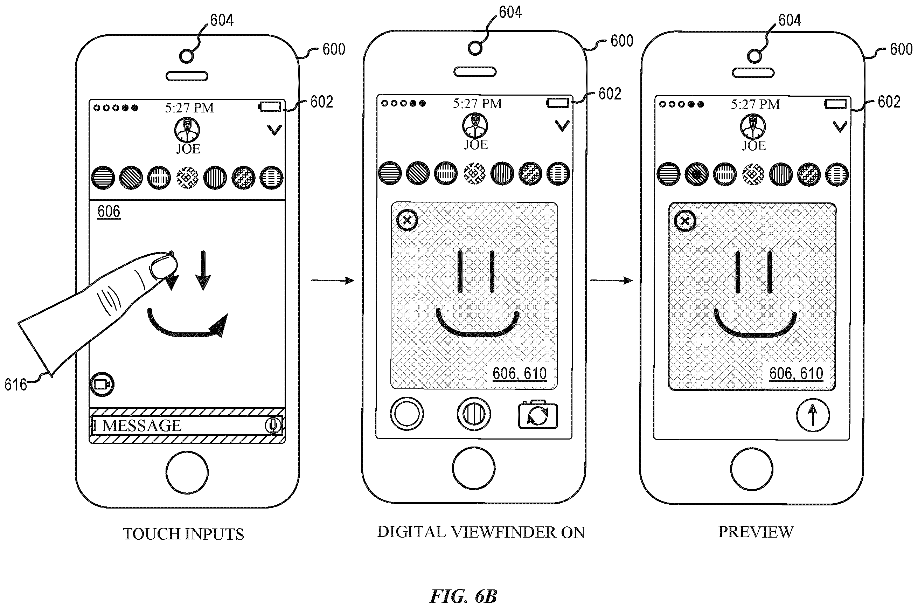

Turning now to FIG. 6B, in some embodiments, touch inputs 608 received prior to capturing the camera image data (e.g., prior to recording video or taking still image) correspond to visual representations that are static in the drawing area 606. In that case, as demonstrated in FIG. 6B, the device 600 maintains display of the visual representation of the first stroke at the first location of first touch input 616 in the drawing area 606 while capturing the camera image data presented in the digital viewfinder so that the visual representation is displayed during the entire recording session and does not fade out or disappear from the viewfinder or while a preview of the captured camera image data is provided. In another example, the visual representation is maintained for display at the first location while the digital viewfinder indicates the camera is being panned.

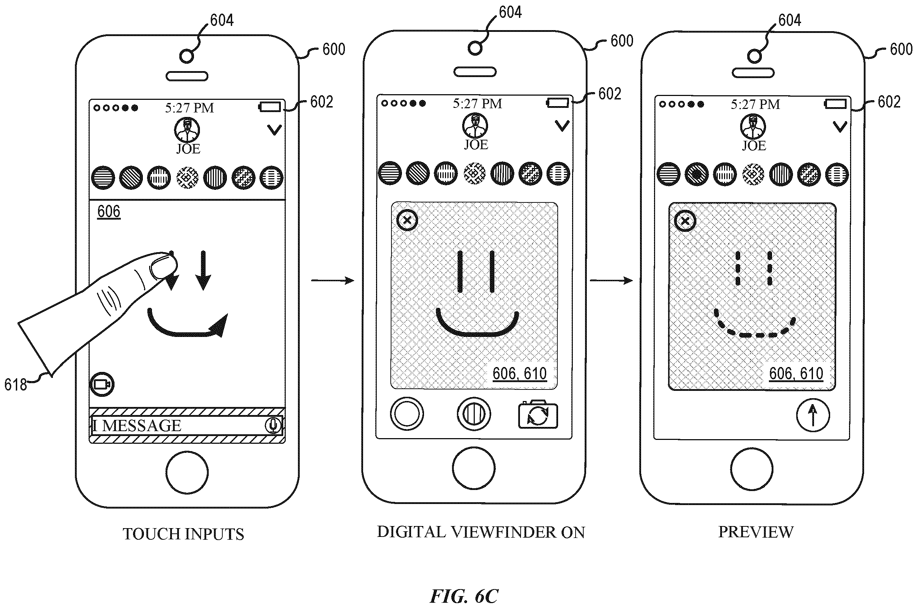

Turning to FIG. 6C, in yet another example, touch inputs 618 received prior to capturing the camera image data correspond to visual representations that dynamically fade out of display, for instance a fade-out animation that corresponds to their corresponding characteristic kinematics. In that case, the first touch input 618 is detected prior to capturing the camera image data presented in the digital viewfinder 610. In that case, the device 600 maintains display of the visual representation of the first stroke at the first location in the drawing area for a partial duration of time while capturing the camera image data presented in the digital viewfinder. Merely by way of example, the visual representation of the first stroke is displayed for a period of time at or near a beginning portion of recording the video and fades out before the video ends. The display period of time optionally corresponds to a predetermined period of time before fade-out and/or correspond to a duration of the first touch input 618 in the drawing area 606.

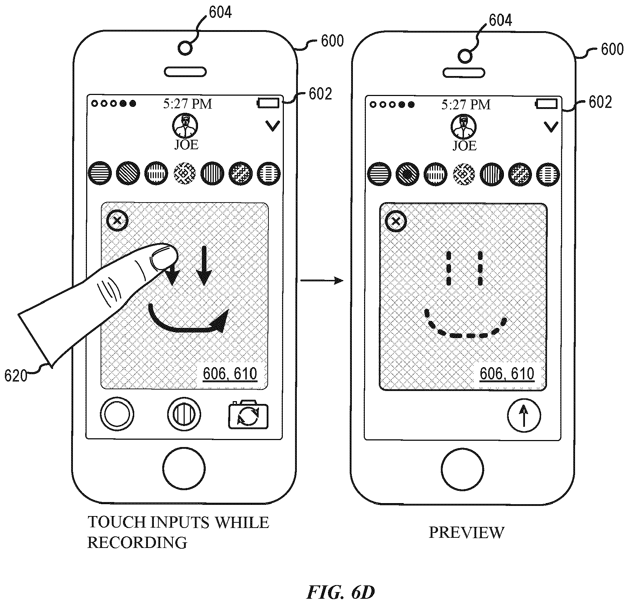

In yet another example as shown in FIG. 6D, touch inputs 620 are received while capturing the camera image data (e.g., while recording video) presented in the digital viewfinder 610. For example, the first touch input 620 is detected after detecting the user request to initiate capturing the camera image data. In that case, the device 600 displays the visual representation of the first stroke at the first location in the drawing area 606 for at least a period of time while capturing the camera image data presented in the digital viewfinder 610. In another example, the visual representation of the first stroke is displayed for a remaining duration of time of the recorded video and without fade-out. In that case, the visual representation is removed from display when the recording ceases. In other examples, the visual representation fades out after a predetermined period of time or in accordance with a duration of the first touch input. The visual representation is optionally removed from display when the recording ends.

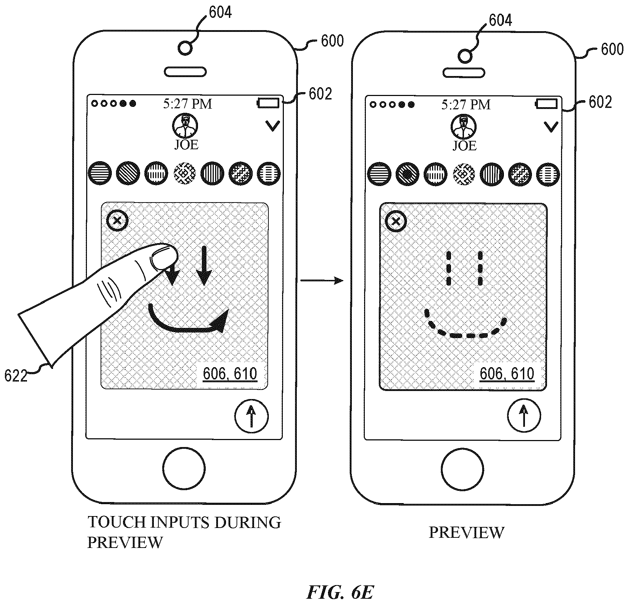

In another example as demonstrated in FIG. 6E, touch inputs 622 are received during preview of captured camera image data. For example, first touch input 622 is detected while displaying the captured camera image data in a preview in the drawing area. In that case, the touch input 622 is received after ceasing to capture camera image data and in some cases, after closing the digital viewfinder. The displayed captured camera image data optionally includes a still image captured by the camera or a playback of a video recorded by the camera. As further shown in FIG. 6E, the touch input 622 fades out from display according to various embodiments described herein and/or is static and remains displayed throughout the remainder of the preview.

It is further noted that additional, subsequent inputs, or multiple touch inputs, are optionally detected. For example, a second touch input can optionally be detected after an intervening amount of time after detecting the first touch input. The second touch input can optionally be detected at a second location in the drawing area 606 and represent a second stroke, such as a line sketch or graphic. Visual representations corresponding to the first stroke and the second stroke optionally are separated by an intervening amount of time, and the second stroke can optionally be detected before, during, and/or after recording of the video. It is contemplated that in response to detecting the second touch input, the visual representation corresponding to the second touch input is displayed at the second location in the drawing area. The visual representation corresponding to the second stroke can optionally fade-out or remain displayed independent of the visual representation corresponding to the first stroke. Additionally, the second stroke can optionally include characteristic kinematics and/or characteristic intensity in similar fashion as the first stroke.

As described previously, the device 600 displays a visual representation in response to the touch inputs in the drawing area 606. Such visual representations can optionally include a line described by movement of the finger across the touch-sensitive display 602 that is within the drawing area 606. In another example, the visual representation includes an animated graphic that are pre-generated or predetermined, and/or a still graphic displayed at the first location in the drawing area 602. Animated graphics can optionally be displayed in accordance with one or more characteristics such as characteristic intensity, a characteristic kinematic, and/or duration of the corresponding first touch input or second touch input. Various animated graphics contemplated herein and described further below include, for example, a beating heart, a breaking heart, and/or a fireball. It is contemplated that by displaying such visual representations with their corresponding one or more characteristics, users communicating electronically through electronic touch communication functionalities described herein can optionally convey emotions to further enhance their messages among one another.

Further, as described herein, visual representations can optionally include still graphics. For example, the visual representation of the first stroke can include a still graphic that is displayed in accordance with an orientation or angle of their corresponding touch input (e.g., an angle defined between a multiple-finger touch input). Various still graphics contemplated herein can optionally include, merely by way of example, a heart, a kiss, a tear drop, and/or any other still graphic. Such still graphics can optionally be selected to facilitate users to convey emotions in electronic communications, such as enhancing emotions created in textual messages, video messages and/or picture messages. In other examples as shown above, visual representations can optionally correspond to lines whereby a first stroke includes a first endpoint corresponding to an initiation of the first touch input, a second endpoint corresponding to liftoff termination of the first touch input, and a line corresponding to movement of the first touch input across the touch-sensitive display. Display of the visual representation of the line includes displaying characteristic kinematics of the movement of the first touch input from the first endpoint to the second endpoint in response to detecting the first touch input.

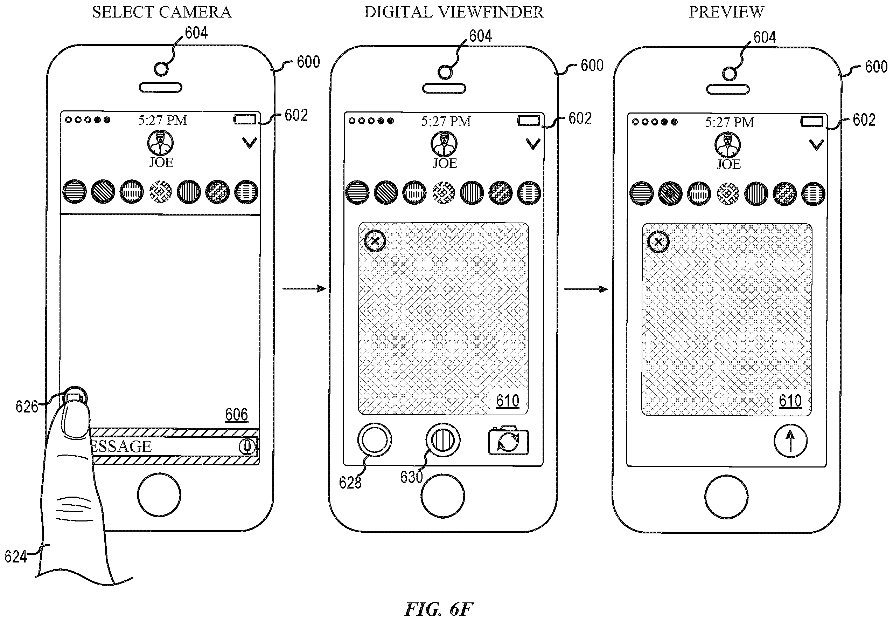

Turning now to FIG. 6F, while displaying the drawing area 606, the device 600 can optionally detect a user request to capture camera image data presented in the digital viewfinder 610. For example, the device 600 can optionally detect a user selection 624 of a camera affordance 626 to initially activate the digital viewfinder 610 in the drawing area 606. With the digital viewfinder 610 displayed, affordances 628,630 corresponding to taking a picture or recording a video, respectively, can optionally be provided. As described previously, the user request to record video or take picture can optionally occur before, during, and/or after detecting the first touch input in the drawing area 606. As further shown in FIG. 6F, in response to detecting the user request, the device 600 can optionally capture or otherwise record the camera image data presented in the digital viewfinder. After ceasing to capture the camera image data, the digital viewfinder 610 can optionally be replaced with a preview of the recorded video or picture in the drawing area 606.

Further, the device 600 can optionally associate the captured camera image data with the first location of the first stroke. For example, the device 600 can optionally overlay or superimpose the first stroke at the first location with the picture or recorded video. In another example, the device 600 can optionally associate an object in the digital viewfinder 610 with the visual representation of the first stroke. For instance, the device 600 can optionally associate the visual representation of the first stroke with a tracked point, such as a visually-tracked point, a mesh-marked point, and/or any of such points that can optionally correspond to an object in the camera image data presented in the digital viewfinder. Merely by way of example, such the device 600 can optionally track objects while capturing the camera image data. For instance, a first stroke can optionally be detected after detection of the user request to capture the camera image data and/or while the user is recording video. In other examples, the first stroke can optionally be detected prior to capturing the camera image data during a "set-up" period prior to recording so that a user can associate one or more visual representations with tracked points prior to the recording, such that the visual representations are displayed automatically during recording. In accordance with a determination that the tracked point associated with the first stroke is displayed in the digital viewfinder (e.g., the camera is panned and tracked point is within the digital viewfinder), the device 600 can optionally display the visual representation of the first stroke in the drawing area 606 at the tracked point. For instance, displaying the visual representation of first stroke in the drawing area 606 can optionally include displaying the visual representation of first stroke over the digital viewfinder 610 presented in the drawing area 606. During recording, the device 600 can optionally continue to update display of the visual representation of first stroke to coincide with the tracked point as the tracked point traverses within the digital viewfinder 610 (e.g., due to camera panning). The visual representation can optionally fade-out while the tracked-point is still within the viewfinder, in which case the visual representation can optionally be redisplayed after the tracked point has been detected to exit and then reenter the digital viewfinder 610. In other cases, the visual representation can optionally include an animated graphic that loops playback at the tracked-point and/or otherwise is maintained for display at the tracked point.

In accordance with a determination that the tracked point associated with the first stroke is not displayed in the digital viewfinder 606 (e.g., the tracked point has moved out of view of the digital viewfinder), the device 600 can optionally cease to display the visual representation of the first stroke. For instance, in one example, if a visual representation corresponding to the stroke is applied to an object and the camera pans away from the object such that the object is no longer presented in the digital viewfinder 610, then the representation of the first stroke is removed from display (e.g., remove before it fades out on its own). When the camera pans back to the same object that is now re-presented in the digital viewfinder 610, the visual representation of the first stroke reappears on the object. It is contemplated that the recorded video reflects the appearance and removal of the visual representation as it was displayed during the video capture.

In another example, the visual representation of the first stroke can optionally be associated with a direction. For instance, while capturing the camera image data, the device 600 can optionally associate the visual representation of the first stroke with a compass point associated with a viewing direction of the camera image data captured in the digital viewfinder. The compass point can optionally be based on a compass direction corresponding to the electronic device that is detected and registered as corresponding to the first stroke when the first touch input is detected at the first location of the drawing area. In accordance with a determination that the viewfinder is pointed in the direction of the compass point, the device 600 can optionally display the visual representation of the first stroke in the drawing area 606. Further, in accordance with a determination that the compass point associated with the first stroke is not displayed in the digital viewfinder, the device 600 can optionally cease to display the visual representation of the first stroke.

In another example, in accordance with various embodiments described herein, the preview can optionally be looped. For instance, a preview of a recorded video can optionally include a looped playback of the video. In some examples, the first touch input is detected in the drawing area 606 while displaying the preview that loops the playback of the video. The device 600 can optionally display a playback of the visual representation of the first stroke at the first location in the drawing area 606. The preview of the visual representation could be displayed before, during, and/or after capturing the camera image data. The preview of the visual representation can optionally correspond to a sketch, animated graphic, or a still graphic of the first touch input, and playback of the visual representation can optionally include a looped playback. In some examples, the looped playback is maintained until the data is sent to the external device or upon user request to cancel the preview. Further, the looped playback can optionally reflect characteristic kinematics and/or characteristic intensity in the visual representation.

As described above, the preview can optionally further include captured camera image data. For instance, the device 606 can optionally cease capturing the camera image data when recording is finished or a picture is taken. In some cases, described further below, the recording ends automatically in accordance with a recording timer, such as a 10-second timer, and/or ends manually from user input. In such cases, after ceasing capturing the camera image data, the displayed digital viewfinder 610 in the drawing area 606 can optionally be automatically replaced with the preview in the drawing area 606, as shown in at least FIG. 6F. In some cases, displaying the preview can optionally be based on overlaying the playback of the visual representation on the displayed captured camera image data. For example, a preview of the video or still image can optionally be presented in the drawing area 6-6. The preview can optionally include a looped playback of the recorded video along with a looped playback of the first touch input, or can optionally include the still image along with a looped playback of the first touch input. The preview can optionally be shown with the looped playback until the preview mode is canceled or by the user or the user sends data to the external device. In some cases, the preview includes multiple visual representations according to multiple touch inputs received in the drawing area. In other cases, the first touch input is received while the preview of the video or image is displayed.

Further, the preview can optionally include maintaining display of the visual representation at the first location for a duration of a single loop of the captured camera image data. For instance, the first stroke can optionally be detected prior to recording video or taking still image, and/or the visual representation of the first stroke can optionally include an animation characteristic that causes the visual representation to be stamped-on to the recorded video until the video ends or the still image is removed from display. In another example, the visual representation of the first stroke can optionally be displayed in the preview with an animated effect rather than with the characteristic kinematics. The animated effect can optionally include initially flashing (e.g., flash, burn effect) the visual representation onto the display at the first location and maintaining display of the visual representation at the first location for the duration of the captured camera image data. In that case, looping display of the visual representation of the first stroke in the preview mode includes replaying the flash-on effect and maintaining the visual representation for the remaining duration of the captured camera image data. In that case, the visual representation of the first stroke appears stamped-on as a still graphic after the animated flash-on effect. In practice, any visual representation can optionally be permanently displayed by simply entering their corresponding touch inputs prior to initiating digital viewfinder 610.

In other examples, the device 600 can optionally display the visual representation of the first stroke for a portion of the preview. For instance, displaying the preview can optionally include displaying the visual representation at the first location for at least a partial duration of a single loop of the captured camera image data. First strokes that are detected prior to recording video and/or taking a still image can optionally have their visual representations be displayed for a predetermined period of time before fade-out and/or according to a duration of the first touch input. In other cases, the first stroke was detected while recording the video and the visual representation can optionally be displayed for a remaining duration of the recorded video until the video ends, fades out after a predetermined period of time, or is displayed for a duration corresponding to the first touch input. Still, in other cases, the first stroke can optionally be detected during the preview mode.

It is further noted that the visual representation of second stroke can optionally be displayed in preview. In one example, the device 600 can optionally display a preview including the captured camera image data, the visual representation of the first stroke at the first location, and the visual representation of the second stroke at the second location, where the visual representation of the first stroke and the visual representation of the second stroke are displayed in the preview in an order that their corresponding first touch input and second touch input were detected in the drawing area. For example, when the captured camera image data corresponds to a still image, the visual representation of second stroke can optionally be displayed immediately after the visual representation of first stroke without a pause corresponding to the intervening amount of time between detection of the first stroke and detection of the second stroke. The visual representation of second stroke can optionally fade-out after a predetermined period of time or remain displayed after its input. In another example, where the captured camera image data includes a video and displaying the preview includes looping playback of the visual representation of the first stroke and the visual representation of the second stroke with the intervening amount of time over a looped playback of the video. For instance, when the captured camera image data corresponds to a recorded video, the visual representations are displayed so as to be timed with the video recording such that they appear on certain frames where they were received.

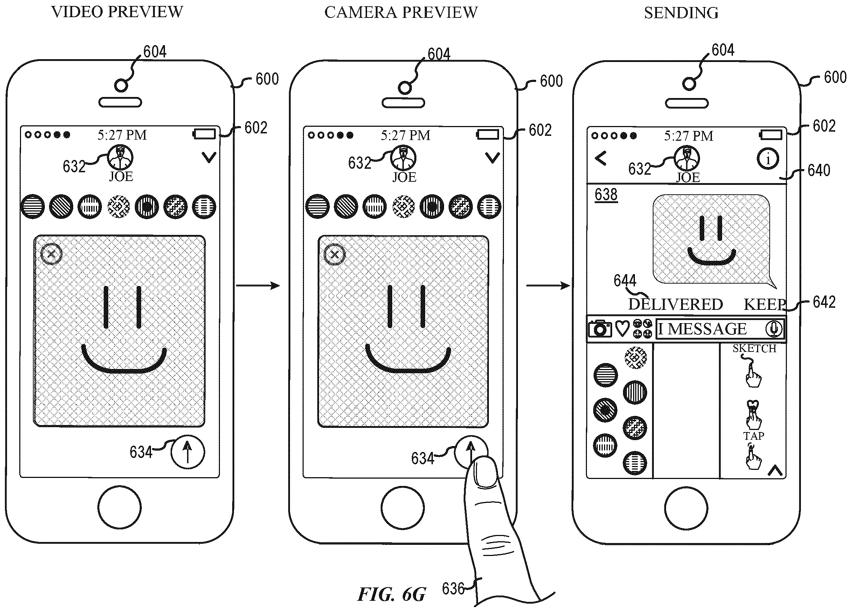

Turning now to FIG. 6G, the device 600 can optionally send data representing the captured camera image data and the first stroke to an external device, such as an external device associated with a contact such as a contact 632 within an address book at the electronic device, and/or a particular contact within a text messaging transcript, as described further below. The data can optionally include a packaged data comprising a first packet corresponding to the captured camera image data (e.g., video or still image) and a second packet corresponding to the first stroke (e.g., any touch inputs received in the drawing area). The data can optionally be configured to be presented such that a playback of the second packet for the touch occurs simultaneously as a layer over playback of the first packet for the video/picture. The external device can optionally be a similar device as the electronic device or a cross-platform device. Such devices can optionally include, merely by way of example, wearables, mobile phones, laptops, tablets, and so on. Further, the sent data indicates a portion of the captured camera image data that corresponds to (e.g., overlaps with, is overlapped by, and/or otherwise corresponds to the first stroke) the first location of the first stroke. The data can optionally represent that the first stroke is displayed at the first location and corresponds to a particular frame and location within the frame of the video where its corresponding first touch input was detected at the electronic device. In this way, during playback, the visual representation of first stroke appears to be timed with the video. In another example, the captured camera image data is a still image taken by the camera, in which case during playback the visual representation of first stroke appears at the location and/or in the order relative to other subsequent strokes, as they were received at the electronic device.

In some examples, the data is manually sent. For example, the device 600 can optionally display a send affordance 634 in the drawing area 606 or preview and detect a third touch input 636 corresponding to selection of the send affordance 634. Sending the data representing the captured camera image data and the first stroke to the external device occurs in response to detecting the third touch input 636. For example, the device 600 sends both visual representations along with the intervening amount of time. In another example, the device 600 sends the preview based on the touch inputs and captured camera image data.

In another example, the data is includes flattened data. For instance, prior to sending data representing the captured camera image data and the first stroke to the external device and in accordance to a determination of a status of the external device, such as a status indicative of the external device being unable to receive a non-encoded data, the device 600 can optionally encode the captured camera image data with the visual representation of the first stroke. In some cases, flattening of the video and visual representations is achieved with a custom video compositor. Alternatively, the device 600 requests a server to flatten data. In another aspect, sending data representing the captured camera image data and the first stroke to the external device includes sending the encoded captured camera image data. For instance, in some cases, the data representing the captured camera image data and the first stroke comprises a separate data package for each of the captured camera image data and the first stroke. The electronic device can optionally determine that the external device is unable to receive the separate data packages. For example, in some cases the external device can optionally be outside of a network connection that permits sending and/or receiving of such separate data packages. In that case, the electronic device can optionally flatten the still image and/or recorded video with the first stroke in order to provide an encoded video to the electronic device. The encoded video can optionally be generated at the electronic device and/or at a server in connection with the electronic device. For example, the electronic device can optionally instruct the server to generate the encoded video.

In another example as shown at FIG. 6G, the device 600 can optionally display sent data in a text message transcript 638. For example, the device 600 displays or causes display of a text messaging user interface 640 associated with the contact 632 of the external device, wherein the text messaging user interface 640 includes the message transcript area 638 associated with the contact 632. The device 600 displays at least a portion (e.g., a thumbnail, down sampled data, etc.) of the sent data, in the message transcript area. In another example, along with displaying the sent data, an affordance (e.g., "Keep" affordance 642) for maintaining display of the sent data in the message transcript area is displayed. Upon user selection of the keep affordance 642, the sent data is maintained for display in the message transcript area 638. In another case, where no user selection of the affordance 642 is detected, the sent data expires and is removed from the message transcript area 638 at the electronic device 600 after a predetermined period of time. In another example, a save affordance is displayed in the message transcript area along with display of the sent data. Selection of the save affordance stores the sent data to a camera roll at the electronic device. In still another example, a delivery indication 644 is displayed adjacent to the sent data in the message transcript area 638. For instance, the delivery indication can optionally comprise "Delivered" status to indicate successful delivery of the sent data to the external device.

In a further example at FIG. 6G, the sent data is looped in the message transcript area 638. For example, the device 600 loops playback, in the message transcript area, of the at least a portion of the sent data while the at least a portion of the sent data is a most recent data communication in the message transcript area that includes a visual representation of a touch input. In some cases, the sent data comprises visual representation of the first touch input. In other cases, the sent data comprises visual representation of the first touch input and captured camera image data. In response to a determination that the at least a portion of the sent data is no longer the most recent data communication comprising the visual representation of the touch input, the device 600 ceases looping playback of at least a portion of the sent data and replaces the looped playback with a still frame based on the at least a portion of the sent data. For example, the device 600 replaces the looped playback of the sent data with a still image based on the sent data.

In another example, the device 600 removes sent data after expiry. In response to a determination that the at least a portion of the sent data has been provided in the message transcript area 638 for a predetermined period of time, the device 600 removes display of the at least a portion of the sent data, such as the still image or the looped playback of the sent data, from the message transcript area. Other examples are possible.

Turning now to FIG. 10, a flow diagram shows an example method for electronic touch communications using an electronic device in accordance with some embodiments. Method 1000 is performed at a device (e.g., 100, 300, 500, 600) with a touch-sensitive display and a camera. Some operations in method 1000 are, optionally, combined, the order of some operations is, optionally, changed, and some operations are, optionally, omitted.

As described below, method 1000 provides an intuitive way for electronic communications with video and/or still image. The method reduces the cognitive burden on a user for electronic communications, thereby creating a more efficient human-machine interface. For battery-operated computing devices, enabling a user to communicate electronically in a faster and more efficient manner conserves power and increases the time between battery charges.

As shown in the method 1000, the device (1002) can optionally display, on the touch-sensitive display screen (e.g., display screen 602), a drawing area, wherein the drawing area includes a digital viewfinder (e.g., digital viewfinder 610) that presents camera image data received from the camera (e.g., camera 604). The device (1004) can optionally, while displaying the drawing area, detect a first touch input, at a first location in the drawing area, representing a first stroke. The device (1006) can optionally, in response to detecting the first touch input, display a visual representation, at the first location in the drawing area, of the first stroke. The device can optionally (1008), while displaying the drawing area, detect a user request to capture the camera image data presented in the digital viewfinder (e.g., digital viewfinder 610). The device (1010) can optionally, in response to detecting the user request, capture the camera image data presented in the digital viewfinder (e.g., digital viewfinder 610). The device (1012) can optionally send data representing the captured camera image data and the first stroke to an external device, wherein the sent data indicates a portion of the captured camera image data that corresponds to the first location of the first stroke.

In some embodiments, the device associates the captured camera image data with the first location of the first stroke.

In some embodiments, the device associates the first stroke with a tracked point in the digital viewfinder (e.g., digital viewfinder 610) that corresponds to the first location of the first stroke.

In some embodiments, while capturing the camera image data: in accordance with a determination that the tracked point associated with the first stroke is displayed in the digital viewfinder (e.g., digital viewfinder 610), the device displays the visual representation of the first stroke in the drawing area at the tracked point; and in accordance with a determination that the tracked point associated with the first stroke is not displayed in the digital viewfinder (e.g., digital viewfinder 610), the device ceases to display the visual representation of the first stroke.

In some embodiments, while capturing the camera image data: the device associates the first stroke with a compass point indicative of a first viewing direction of the digital viewfinder (e.g., digital viewfinder 610), wherein the compass point is based on a compass direction detected at the electronic device (e.g., device 600); in accordance with a determination that the first viewing direction is displayed in the digital viewfinder (e.g., digital viewfinder 610), the device displays the visual representation of the first stroke in the drawing area at a position corresponding to the compass point; and in accordance with a determination that the first viewing direction is not displayed in the digital viewfinder (e.g., digital viewfinder 610), the device ceases to display the visual representation of the first stroke in the drawing area.

In some embodiments, the first stroke includes characteristic kinematics based on the detected first touch input, and the visual representation of the first stroke includes the characteristic kinematics (e.g., FIG. 6A-6E).

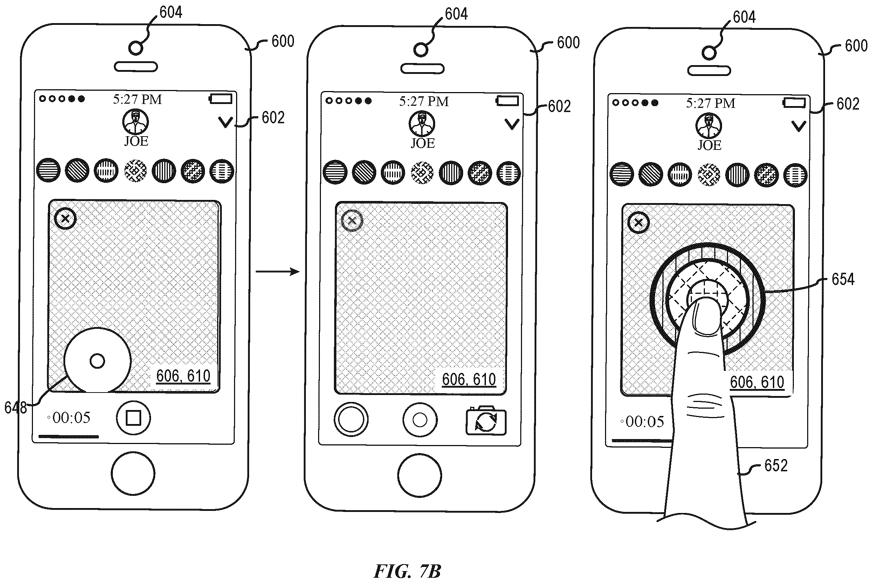

In some embodiments, the first stroke includes a characteristic intensity based on the detected first touch input, and the visual representation of the first stroke is based on the characteristic intensity (e.g., FIG. 7B).

In some embodiments, wherein the first touch input is detected prior to capturing the camera image data presented in the digital viewfinder (e.g., digital viewfinder 610), the device maintains display of the visual representation of the first stroke at the first location in the drawing area while capturing the camera image data presented in the digital viewfinder (e.g., digital viewfinder 610) (e.g., FIG. 6A-6E).

In some embodiments, wherein the first touch input is detected prior to capturing the camera image data presented in the digital viewfinder (e.g., digital viewfinder 610), the device maintains display of the visual representation of the first stroke at the first location in the drawing area for a partial duration of time while capturing the camera image data presented in the digital viewfinder (e.g., digital viewfinder 610) (e.g., FIG. 6A-6E).

In some embodiments, wherein the first touch input is detected while capturing the camera image data presented in the digital viewfinder (e.g., digital viewfinder 610), and wherein capturing the camera image data comprises recording a video of the camera image data presented in the digital viewfinder (e.g., digital viewfinder 610), the device displays the visual representation of the first stroke at the first location in the drawing area for at least a period of time while capturing the camera image data presented in the digital viewfinder (e.g., digital viewfinder 610) (e.g., FIG. 6A-6E, 7A).

In some embodiments, the first touch input is detected while displaying the captured camera image data in the drawing area, and the displayed captured camera image data includes at least one of a still image captured by the camera (e.g., camera 604) and a playback of a video recorded by the camera (e.g., camera 604).

In some embodiments, the playback of the video is a looped playback of the video.

In some embodiments, the device displays, on the touch-sensitive display screen (e.g., display screen 602), a playback of the visual representation of the first stroke at the first location in the drawing area.

In some embodiments, the playback of the visual representation is a looped playback of the visual representation.

In some embodiments, the device ceases capturing the camera image data; and after ceasing capturing the camera image data: replaces the displayed digital viewfinder (e.g., digital viewfinder 610) in the drawing area, and displays a preview based on overlaying the playback of the visual representation on the displayed captured camera image data.

In some embodiments, displaying the preview includes maintaining display of the visual representation at the first location for a duration of a single loop of the captured camera image data (e.g., FIG. 6G).

In some embodiments, displaying the preview includes displaying the visual representation at the first location for at least a partial duration of a single loop of the captured camera image data.

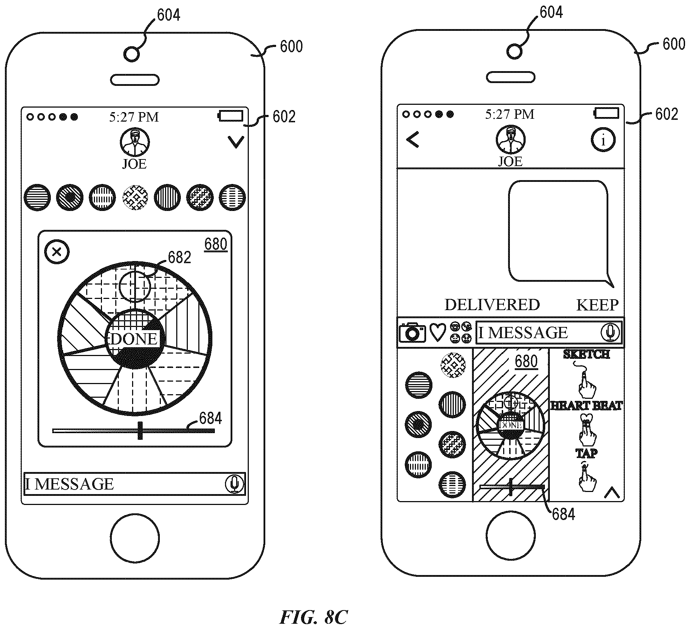

In some embodiments, the visual representation of the first stroke is displayed with a color corresponding to a selected color affordance (e.g., FIG. 8C).

In some embodiments, after detecting the first touch input, the device detects a second touch input, at a second location in the drawing area, representing a second stroke, wherein the first touch input and the second touch input are separated by an intervening amount of time; and in response to detecting the second touch input, displays the visual representation, at the second location in the drawing area, of the second stroke.

In some embodiments, the device displays a preview comprising the captured camera image data, the visual representation of the first stroke at the first location, and the visual representation of the second stroke at the second location, wherein the visual representation of the first stroke and the visual representation of the second stroke are displayed in the preview in an order that their corresponding first touch input and second touch input were detected in the drawing area.

In some embodiments, the captured camera image data comprises a video, and displaying the preview comprises looping playback of the visual representation of the first stroke and the visual representation of the second stroke with the intervening amount of time over a looped playback of the video.

In some embodiments, the visual representation of the first stroke comprises an animated graphic that is displayed in accordance with one or more a characteristics selected from the group consisting of a characteristic intensity, a characteristic kinematic, and a duration of the corresponding first touch input or second touch input.

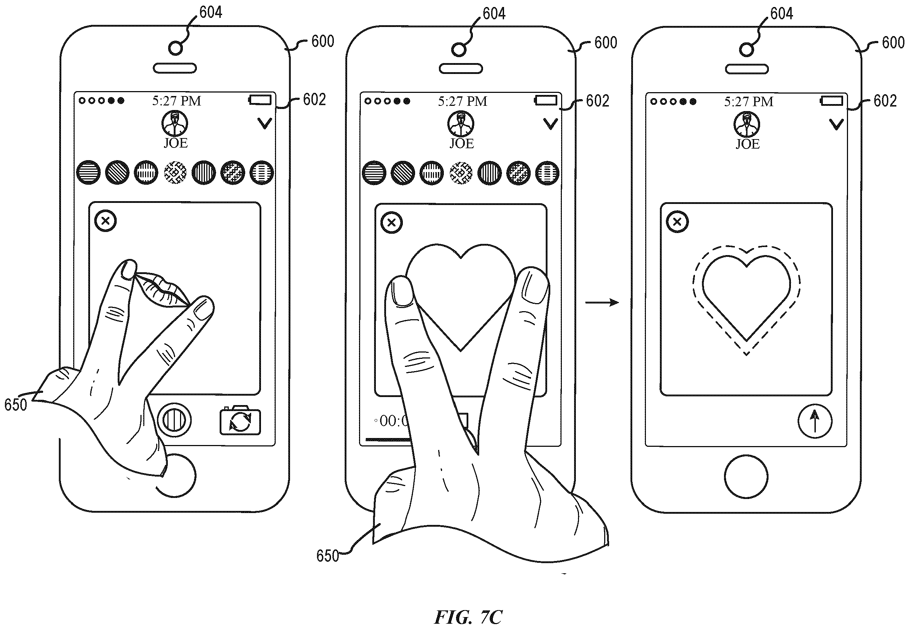

In some embodiments, the animated graphic is a beating heart (e.g., FIG. 7C).

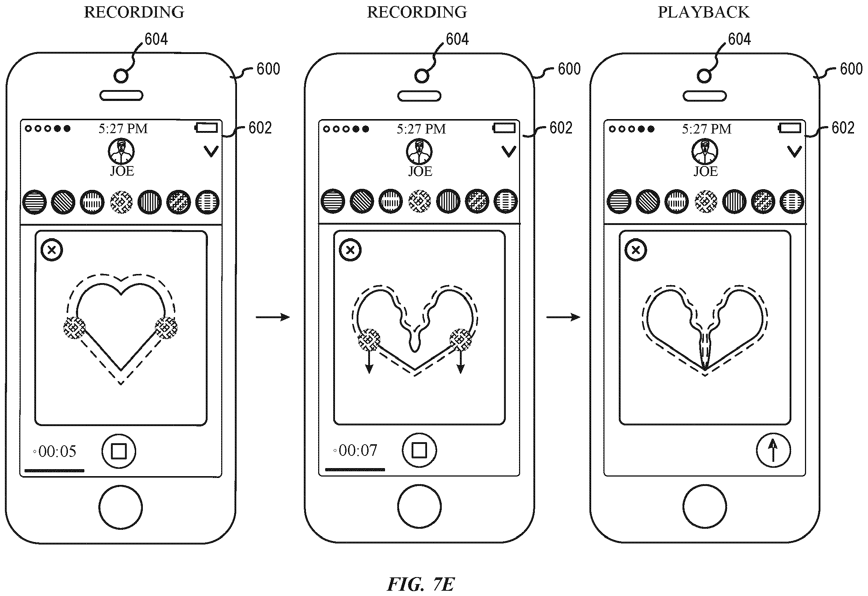

In some embodiments, the animated graphic is a breaking heart (e.g., FIG. 7E).

In some embodiments, the animated graphic is a fireball (e.g., FIG. 7B).

In some embodiments, the visual representation of the first stroke comprises a still graphic that is displayed in accordance with an orientation of the corresponding first touch input or the corresponding second touch input.

In some embodiments, the still graphic is a heart (e.g., FIG. 7C).

In some embodiments, the still graphic is a kiss (e.g., FIG. 7C-7D).

In some embodiments, the still graphic is a tear drop.

In some embodiments, the visual representation of the first stroke includes a first endpoint corresponding to an initiation of the first touch input, a second endpoint corresponding to liftoff termination of the first touch input, and a line corresponding to movement of the first touch input across the touch-sensitive display screen (e.g., display screen 602), wherein display of the visual representation of the line includes displaying characteristic kinematics of the movement of the first touch input from the first endpoint to the second endpoint (e.g., FIG. 6A).

In some embodiments, the device displays a send affordance in the drawing area; detects a third touch input corresponding to selection of the send affordance; and sends data representing the captured camera image data and the first stroke to the external device (e.g., device 600) occurs in in response to detecting the third touch input (e.g., FIG. 6G).

In some embodiments, prior to sending data representing the captured camera image data and the first stroke to the external device (e.g., device 600) and in accordance to a determination of a status of at the external device (e.g., device 600), the device encodes the captured camera image data with the visual representation of the first stroke, wherein sending data representing the captured camera image data and the first stroke to the external device (e.g., device 600) includes sending the encoded captured camera image data.

In some embodiments, the device displays, on the touch-sensitive display screen (e.g., display screen 602) screen at the electronic device (e.g., device 600), a text messaging user interface associated with a contact of the external device (e.g., device 600), wherein the text messaging user interface includes a message transcript area associated with the contact; and displays at least a portion of the sent data, in the message transcript area (e.g., FIG. 6G, 9).

In some embodiments, the device loops playback, in the message transcript area, of the at least a portion of the sent data while the at least a portion of the sent data is a most recent data communication in the message transcript area that includes a visual representation of a touch input; and in response to a determination that the at least a portion of the sent data is no longer the most recent data communication comprising the visual representation of the touch input, ceases looping playback of the at least a portion of the sent data and replacing the looped playback with a still frame based on the at least a portion of the sent data (e.g., FIG. 6G, 9).

In some embodiments, in response to a determination that the at least a portion of the sent data has been provided in the message transcript area for a predetermined period of time, the device removes display of the at least a portion of the sent data from the message transcript area (e.g., FIG. 6G, 9).

Note that details of the processes described above with respect to method 1000 (e.g., FIG. 10) are also applicable in an analogous manner to the methods described below. For example, methods 1100-1300 optionally include one or more of the characteristics of the various methods described above with reference to method 1000. For brevity, these details are not repeated below.

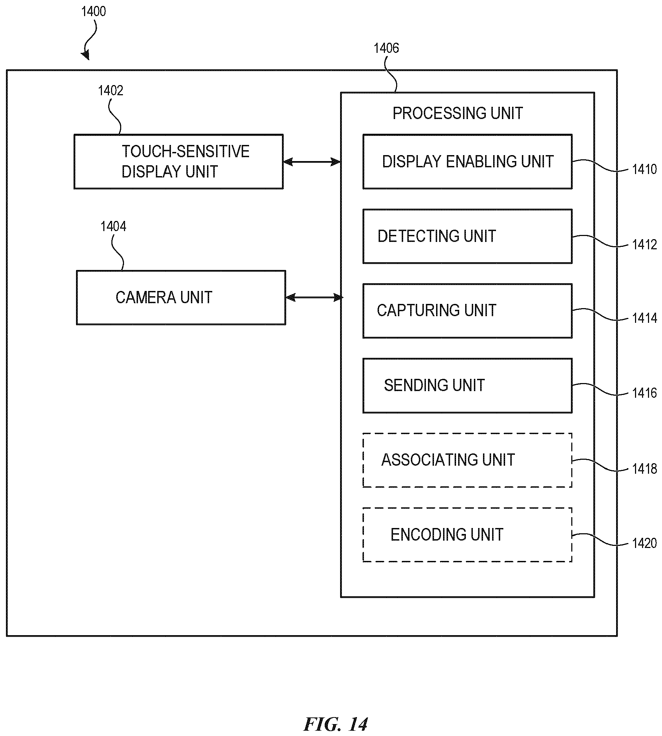

Turning now to FIG. 14, in accordance with some embodiments, FIG. 14 shows an exemplary functional block diagram of an electronic device 1400 configured in accordance with the principles of the various described embodiments. In accordance with some embodiments, the functional blocks of electronic device 1400 are configured to perform the techniques described above. The functional blocks of the device 1400 are, optionally, implemented by hardware, software, or a combination of hardware and software to carry out the principles of the various described examples. It is understood by persons of skill in the art that the functional blocks described in FIG. 14 are, optionally, combined or separated into sub-blocks to implement the principles of the various described examples. Therefore, the description herein optionally supports any possible combination or separation or further definition of the functional blocks described herein.

As shown in FIG. 14, an electronic device 1400 includes a touch-sensitive display unit 1402 configured to display a graphic user interface, optionally, a camera unit 1404 configured to present and capture camera image data, and a processing unit 1406 coupled to the display unit 1402 and, optionally, to the camera unit 1404. In some embodiments, the processing unit 1406 includes a display enabling unit 1410, detecting unit 1412, capturing unit 1414, sending unit 1416, and optionally, an associating unit 1416, and optionally and encoding unit 1420.

The processing unit 1406 is configured to: enable display of, on the touch-sensitive display unit, a drawing area, wherein the drawing area includes a digital viewfinder that presents camera image data received from the camera unit (e.g., camera unit 1404). The processing unit 1406 is further configured to: while displaying the drawing area, detect a first touch input, at a first location in the drawing area, representing a first stroke. The processing unit 1406 is further configured to: in response to detecting the first touch input, enable display of a visual representation, at the first location in the drawing area, of the first stroke. The processing unit 1406 is further configured to: while displaying the drawing area, detect a user request to capture the camera image data presented in the digital viewfinder. The processing unit 1406 is further configured to: in response to detecting the user request, capture the camera image data presented in the digital viewfinder. The processing unit 1406 is further configured to: send data representing the captured camera image data and the first stroke to an external device, wherein the sent data indicates a portion of the captured camera image data that corresponds to the first location of the first stroke.

In some embodiments, the processing unit 1406 is further configured to: associate the captured camera image data with the first location of the first stroke.

In some embodiments, the processing unit 1406 is further configured to: associate the first stroke with a tracked point in the digital viewfinder that corresponds to the first location of the first stroke.

In some embodiments, the processing unit 1406 is further configured to: while capturing the camera image data: in accordance with a determination that the tracked point associated with the first stroke is displayed in the digital viewfinder, enable display of the visual representation of the first stroke in the drawing area at the tracked point; and in accordance with a determination that the tracked point associated with the first stroke is not displayed in the digital viewfinder, cease to enable display of the visual representation of the first stroke.

In some embodiments, the processing unit 1406 is further configured to: while capturing the camera image data: associate the first stroke with a compass point indicative of a first viewing direction of the digital viewfinder, wherein the compass point is based on a compass direction detected at the electronic device; in accordance with a determination that the first viewing direction is displayed in the digital viewfinder, enable display of the visual representation of the first stroke in the drawing area at a position corresponding to the compass point; and in accordance with a determination that the first viewing direction is not displayed in the digital viewfinder, cease to enable display of the visual representation of the first stroke in the drawing area.

In some embodiments, the first stroke includes characteristic kinematics based on the detected first touch input, and the visual representation of the first stroke includes the characteristic kinematics.

In some embodiments, the first stroke includes a characteristic intensity based on the detected first touch input, and the visual representation of the first stroke is based on the characteristic intensity.

In some embodiments, the first touch input is detected prior to capturing the camera image data presented in the digital viewfinder, wherein the processing unit 1406 is further configured to: maintain display of the visual representation of the first stroke at the first location in the drawing area while capturing the camera image data presented in the digital viewfinder.

In some embodiments, the first touch input is detected prior to capturing the camera image data presented in the digital viewfinder, wherein the processing unit is further configured to:

In some embodiments, the processing unit 1406 is further configured to: maintain display of the visual representation of the first stroke at the first location in the drawing area for a partial duration of time while capturing the camera image data presented in the digital viewfinder.

In some embodiments, the first touch input is detected while capturing the camera image data presented in the digital viewfinder, and wherein capturing the camera image data comprises recording a video of the camera image data presented in the digital viewfinder, wherein the processing unit is further configured to:

In some embodiments, the processing unit 1406 is further configured to: enable display of the visual representation of the first stroke at the first location in the drawing area for at least a period of time while capturing the camera image data presented in the digital viewfinder.

In some embodiments, the first touch input is detected while displaying the captured camera image data in the drawing area, wherein the displayed captured camera image data includes at least one of a still image captured by the camera and a playback of a video recorded by the camera.

In some embodiments, the playback of the video is a looped playback of the video.

In some embodiments, the processing unit 1406 is further configured to: enable display of, on touch-sensitive display unit, a playback of the visual representation of the first stroke at the first location in the drawing area.

In some embodiments, the playback of the visual representation is a looped playback of the visual representation.

In some embodiments, the processing unit 1406 is further configured to: cease capturing the camera image data; and after ceasing capturing the camera image data: replace the displayed digital viewfinder in the drawing area, and enable display of a preview based on overlaying the playback of the visual representation on the displayed captured camera image data.

In some embodiments, displaying the preview includes maintaining display of the visual representation at the first location for a duration of a single loop of the captured camera image data.

In some embodiments, displaying the preview includes displaying the visual representation at the first location for at least a partial duration of a single loop of the captured camera image data.

In some embodiments, the visual representation of the first stroke is displayed with a color corresponding to a selected color affordance.

In some embodiments, the processing unit 1406 is further configured to: after detecting the first touch input, detect a second touch input, at a second location in the drawing area, representing a second stroke, wherein the first touch input and the second touch input are separated by an intervening amount of time; and in response to detecting the second touch input, enable display of the visual representation, at the second location in the drawing area, of the second stroke.

In some embodiments, the processing unit 1406 is further configured to: enable display of a preview comprising the captured camera image data, the visual representation of the first stroke at the first location, and the visual representation of the second stroke at the second location, wherein the visual representation of the first stroke and the visual representation of the second stroke are displayed in the preview in an order that their corresponding first touch input and second touch input were detected in the drawing area.

In some embodiments, the captured camera image data comprises a video, further wherein displaying the preview comprises looping playback of the visual representation of the first stroke and the visual representation of the second stroke with the intervening amount of time over a looped playback of the video.

In some embodiments, the visual representation of the first stroke comprises an animated graphic that is displayed in accordance with one or more a characteristics selected from the group consisting of a characteristic intensity, a characteristic kinematic, and a duration of the corresponding first touch input or second touch input.

In some embodiments, the animated graphic is a beating heart.

In some embodiments, the animated graphic is a breaking heart.

In some embodiments, the animated graphic is a fireball.

In some embodiments, the visual representation of the first stroke comprises a still graphic that is displayed in accordance with an orientation of the corresponding first touch input or the corresponding second touch input.

In some embodiments, the still graphic is a heart.

In some embodiments, the still graphic is a kiss.

In some embodiments, the still graphic is a tear drop.

In some embodiments, the visual representation of the first stroke includes a first endpoint corresponding to an initiation of the first touch input, a second endpoint corresponding to liftoff termination of the first touch input, and a line corresponding to movement of the first touch input across the touch-sensitive display unit, wherein display of the visual representation of the line includes displaying characteristic kinematics of the movement of the first touch input from the first endpoint to the second endpoint.

In some embodiments, the processing unit 1406 is further configured to: enable display of a send affordance in the drawing area; detect a third touch input corresponding to selection of the send affordance; wherein sending data representing the captured camera image data and the first stroke to the external device occurs in in response to detecting the third touch input.

In some embodiments, the processing unit 1406 is further configured to: prior to sending data representing the captured camera image data and the first stroke to the external device and in accordance to a determination of a status of at the external device, encode the captured camera image data with the visual representation of the first stroke; wherein sending data representing the captured camera image data and the first stroke to the external device includes sending the encoded captured camera image data.

In some embodiments, the processing unit 1406 is further configured to: enable display of, on the touch-sensitive display screen at the electronic device, a text messaging user interface associated with a contact of the external device, wherein the text messaging user interface includes a message transcript area associated with the contact; and enable display of at least a portion of the sent data, in the message transcript area.

In some embodiments, the processing unit 1406 is further configured to: loop playback, in the message transcript area, of the at least a portion of the sent data while the at least a portion of the sent data is a most recent data communication in the message transcript area that includes a visual representation of a touch input; and in response to a determination that the at least a portion of the sent data is no longer the most recent data communication comprising the visual representation of the touch input, cease looping playback of the at least a portion of the sent data and replacing the looped playback with a still frame based on the at least a portion of the sent data.

In some embodiments, the processing unit 1406 is further configured to: in response to a determination that the at least a portion of the sent data has been provided in the message transcript area for a predetermined period of time, remove display of the at least a portion of the sent data from the message transcript area.

The operations described above with reference to FIG. 10 are, optionally, implemented by components depicted in FIGS. 1A-1B or FIG. 14. For example, displaying operations 1002, 1006, detecting operations 1004, 1008, camera operations 1100, and sending operation 1012 are, optionally, implemented by event sorter 170, event recognizer 180, and event handler 190. Event monitor 171 in event sorter 170 detects a contact on touch-sensitive display 112, and event dispatcher module 174 delivers the event information to application 136-1. A respective event recognizer 180 of application 136-1 compares the event information to respective event definitions 186, and determines whether a first contact at a first location on the touch-sensitive surface corresponds to a predefined event or sub event, such as activation of an affordance on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in FIGS. 1A-1B.

Turning now to FIG. 7A, the electronic device 600 can optionally differentiate user input gestures based on an operational mode of a camera, such as the camera 604. For example, it is contemplated that the device 600 can optionally process touch inputs in a combined digital viewfinder 610 and drawing area 606 based on determining whether the inputs are received before (e.g., process as camera adjustment) or after (e.g., process as drawings) video capture begins.

For example, as shown in FIG. 7A, the device 600 can optionally display, on the touch-sensitive display 602, an image in the digital viewfinder 610, wherein the image is based on camera image data received from the camera 604. The device 600 can optionally detect a first touch input at a first location in the digital viewfinder 610. Further, the device 600 can optionally determine whether the first touch input is detected while the operational mode of the camera is the recording mode or the non-recording mode. For example, the device can optionally determine whether the first touch input is detected while recording a video or only displaying the camera image data through the digital viewfinder 610.

For example, in response to detecting the first touch input 646 and in accordance with a determination that the first touch input is detected while an operational mode of the camera is a recording mode (e.g., recording a video), the device 600 displays, in the digital viewfinder 610, a visual representation of an animated/still graphic or a line. The visual representation communicates at least some information regarding the touch input 646, and not simply a generic image that is displayed in response to detecting touch input 646, without more, even if it displays in response to the touch input. The visual representation corresponding to the first touch input 646 is displayed at the first location by overlaying the visual representation on the camera image data shown in the digital viewfinder 610.

In some examples, the visual representation is displayed in the digital viewfinder 610 for a duration of the first touch input 646 and fades upon detection of lift-off of the first touch input 646. In that case, the visual representation is displayed in the digital viewfinder 610 for a predetermined period of time before fading. For example, the visual representation is displayed for a predetermined period of time after detection of lift-off of the first touch input 646 and then fades. In a different example, the visual representation is maintained in the digital viewfinder 610 while the digital viewfinder is displayed. The visual representation can optionally include an animation based on characteristic kinematics of the first touch input 646, and/or an animation based on characteristic intensity of the first touch input 646. Further, display of the visual representation can optionally include looping playback of the visual representation. The visual representation can optionally include or otherwise correspond to certain sound or tactile sensations output by, for example, tactile generator 167 of FIG 1A. In that case, displaying the visual representation includes outputting at least one of an audio output and a haptic output associated with the visual representation. Merely by way of example, the visual representation can optionally correspond to displaying a beating heart with heart beating sound or tactile sensations (also referred to as "haptics" herein).

As demonstrated in FIG. 7B, in the recording mode, in some examples, the first touch input 646 is a single-finger tap at the first location in the digital viewfinder and the visual representation 648 is at least one of a circle, an ellipses, and an oval at the first location. For example, as shown in FIG. 7B, the visual representation 648 is an image that can optionally fade-out after a predetermined period of time. The visual representation can optionally be sized according to the size of the touch contact. In another example, the first touch input is a single-finger hold that exceeds a predetermined duration and the visual representation is a teardrop at the first location of the first touch input. For example, the device determines the single-finger hold is not a tap and that the first touch input is a single-finger hold contact corresponding to the teardrop graphic. In some cases, the teardrop fades from display upon detection of a liftoff of the single-finger hold contact. In other cases, the teardrop remains displayed in the digital viewfinder 610 and/or drawing area 606. In another example, as demonstrated as a smiley-face in the corresponding figures, the first touch input is a single-finger contact having characteristic kinematics describing a movement of the single-finger contact beginning at the first location in the digital viewfinder 610 and the visual representation is a line, such as a stroke, a brush stroke, from a swipe input. The line can optionally begin at the first location with the characteristic kinematics. The visual representation for the line can optionally be removed by an on-screen animation that fades-out the line by fading from a first end of the line corresponding to the first location to a second end of the line that was generated based on liftoff of the single-finger contact, as demonstrated for example at FIG. 6D.

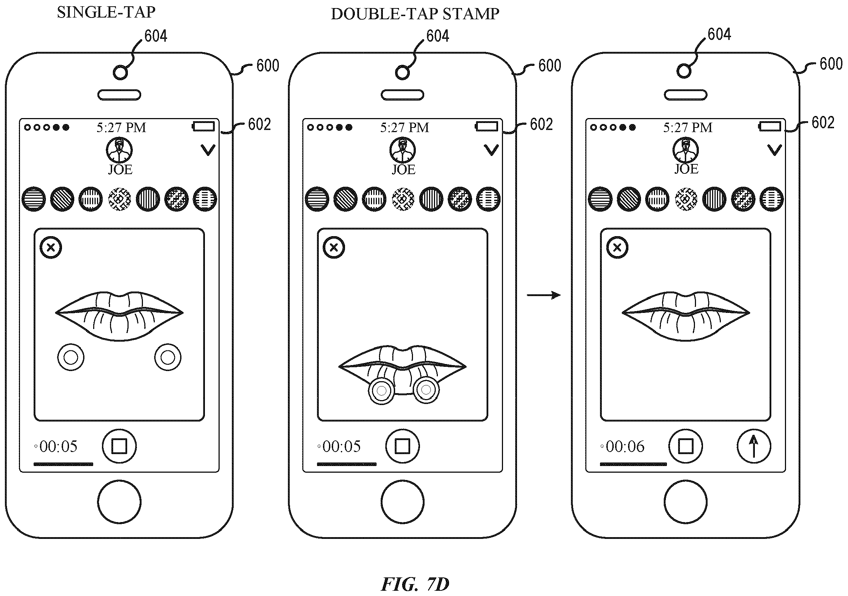

As shown in FIGS. 7C and 7D, in another example, the first touch input during the recording mode corresponds to a multiple-finger touch input 650. For example, the first touch input is a multiple-finger contact in the digital viewfinder 610 and the visual representation is centered at the first location between touch contacts of the multiple-finger contact. The animated and still graphics of the visual representation(s) can optionally remain on the display screen 602, fade-out after a period of time, and/or fade-out upon detection of liftoff of the contact. In some examples, the visual representation is angled between the multiple-finger contact. For example, the visual representation can optionally be oriented along an angle defined by the touch contacts on the touch-sensitive display. The multiple-finger contact can optionally include a two-finger contact on the touch-sensitive display and the visual representation is a kiss that is displayed at the first location for a duration of the two-finger contact and fades upon lift-off of the two-finger contact. For example, upon detection of liftoff of the two-finger contact, the device 600 can optionally initiate fade-out of the kiss animation from display. In another example, the multiple-finger contact is a two-finger double-tap contact on the touch-sensitive display and the visual representation is a stamped kiss, or other stamped graphic (e.g., animated or still), at the first location that is angled according to the angle defined by the two-finger contact. Such stamped graphics do not fade from display of the image in the digital viewfinder as they are stamped onto the remainder of recording. Merely by way of example, such graphics can optionally correspond to emotions that a user can optionally convey to the contact to further enhance electronic communications.

Turning back to FIG. 7B, the operational mode is the recording mode, further wherein the first touch input includes a varying characteristic intensity that fluctuates based on a varying intensity of the first touch input on the touch-sensitive display. For example, the force/pressure of the first touch input can optionally vary throughout the duration of the first touch input. In one example, the characteristic intensity is detected continuously for a duration of the first touch input. In another aspect, detecting the characteristic intensity is unique to drawing capabilities and therefore is not detected when interpreting camera functions in the non-recording mode. The device 600 can optionally display the visual representation at the first location, where the visual representation is the animated graphic that is rendered (e.g., changing color, changing size, etc.) according to the varying characteristic intensity of the first touch input at the first location. For example, the first touch input 652 corresponds to a press-and-hold input with the varying characteristic intensity (e.g., single-finger press-and-hold gesture) at the first location (e.g., the press-and-hold gesture does not traverse across the touch-sensitive display) and the visual representation is an animated fireball 654 having a variable color scheme and size that are scaled in accordance with the varying characteristic intensity (e.g., detected force imparted on the touch-sensitive display) of the press-and-hold input. The animated fireball 654 can optionally appear darker and/or bigger in response to detection of greater force or pressure from the contact, and can optionally appear lighter and/or smaller in response to detection of a lighter force or pressure from the contact. The appearance of the animated fireball varies and is scaled with the pressure detected at the touch input. In another example, the animated fireball or any other graphic can optionally be scaled with size of the touch contact. Merely by way of example, varying the color scheme and/or size in accordance with the characteristic intensity (or in other examples, characteristic kinematics) of the touch input can optionally aid in enhanced communication of emotions through electronic messages. In one example, a visual intensity of the animated fireball can optionally impart an angry emotion and various levels thereof.

Turning back to FIG. 7C, the visual representation is a beating heart that loops for a duration of the first touch input. For example, the device determines that the first touch input 650 is a two-finger hold followed by a liftoff. In accordance with the determination, the device displays a looped playback of an animation and loops the animation for a duration corresponding to the first touch input 650 until lift off of the first touch input is detected. Upon detecting liftoff, remove or fade-out the visual representation of the beating heart. In some cases, if liftoff is detected while a looped playback of the animation is currently in process, complete the playback of the animation and then remove from display.

Turning now to FIG. 7E, in another example, the visual representation is a multiple-part animation having at least a first part and a second part, wherein the first part is based on a first detected aspect (e.g., gesture type, duration of contact, size of contact, intensity of contact, movement of contact, etc.) of the first touch input and the second part is distinct from the first part and is based on a subsequently detected aspect of the first touch input. For example, the multiple-part animation can optionally include a breaking heart animation where displaying the first part includes looping a beating heart animation at the first location for a duration of time corresponding to the first touch input (e.g., multiple-finger contacts 650) on the touch-sensitive display at the first location. Merely by way of example, a beating heart can optionally pulse between colors, such as between red and magenta. Displaying the second part of the breaking heart animation includes ceasing looping of the beating heart animation and replacing the beating heart animation with display of a breaking heart animation based on the subsequently detected aspect, wherein the subsequently detected aspect is a movement of the first touch input (e.g., is a drag-down gesture of the first touch input) that meets a predefined distance threshold. For example, the beating heart breaks into two pieces that fall down across the display screen toward the direction of gravity, while the breaking heart deepens in color to a deep red and appears to fade out or die off. Other examples are possible.

Turning back to FIG. 7A, in a different aspect, where the operational mode of the camera 604 and/or the digital viewfinder 610 is a non-recording mode, in response to detecting a first touch input 654 and in accordance with a determination that the first touch input 654 is detected while an operational mode of the camera is a non-recording mode, the device 600 alters the image (e.g., represented by the hatched shading) displayed in the digital viewfinder 610 by adjusting a characteristic of the camera image data. For example, the device 600 can optionally process the touch input 654 as a camera function such as zoom, focus square, white balance, and other camera functionalities. The adjustment can optionally be made in accordance with the input 654, such as according to the location of input, movement of input, and so on. In some cases, the first touch input 654 is a single-finger input and the characteristic is a focus of the camera image data. For example, the first touch input 654 is a single-finger contact corresponding to a camera focus box 656. In another example, the first touch input 654 is a multiple-finger input and the characteristic is an optical magnification of the camera image data. For example, the first touch input is a two-finger contact with movement corresponding to zooming in or out of the digital viewfinder 610.

Turning now to FIG. 11, a flow diagram illustrates a method for electronic touch communications using an electronic device in accordance with some embodiments. Method 1100 is performed at a device (e.g., 100, 300, 500, 600) with a display and a camera. Some operations in method 1100 are, optionally, combined, the order of some operations is, optionally, changed, and some operations are, optionally, omitted.

As described below, method 1100 provides an intuitive way for electronic communications with video and/or still image. The method reduces the cognitive burden on a user for electronic communications, thereby creating a more efficient human-machine interface. For battery-operated computing devices, enabling a user to communicate electronically in a faster and more efficient manner conserves power and increases the time between battery charges.

As shown in the method 1100, the device (1102) can optionally display, on the touch-sensitive display screen (e.g., display screen 602), an image in a digital viewfinder (e.g., digital viewfinder 610), wherein the image is based on camera image data received from the camera (e.g., camera 604). The device (1104) can optionally detect a first touch input at a first location in the digital viewfinder (e.g., digital viewfinder 610). The device (1106) can optionally, in response to detecting the first touch input and in accordance with a determination that the first touch input is detected while an operational mode of the camera (e.g., camera 604) is a recording mode, display, in the digital viewfinder (e.g., digital viewfinder 610), a visual representation corresponding to the first touch input at the first location. The device (1108) can optionally, in response to detecting the first touch input and in accordance with a determination that the first touch input is detected while an operational mode of the camera (e.g., camera 604) is a non-recording mode, altering the image displayed in the digital viewfinder (e.g., digital viewfinder 610) by adjusting a characteristic of the camera image data.

In some embodiments, the device determines whether the first touch input is detected while the operational mode of the camera (e.g., camera 604) is the recording mode or the non-recording mode (e.g., FIG. 7A).

In some embodiments, the first touch input is a single-finger input and the characteristic is a focus of the camera image data (e.g., FIG. 7A).

In some embodiments, the first touch input is a multiple-finger input and the characteristic is an optical magnification of the camera image data.

In some embodiments, the visual representation is displayed in the digital viewfinder (e.g., digital viewfinder 610) for a duration of the first touch input and fades upon detection of lift-off of the first touch input.

In some embodiments, the visual representation is displayed in the digital viewfinder (e.g., digital viewfinder 610) for a predetermined period of time before fading.

In some embodiments, the visual representation is maintained in the digital viewfinder (e.g., digital viewfinder 610) while the digital viewfinder (e.g., digital viewfinder 610) is displayed.

In some embodiments, the visual representation includes an animation based on characteristic kinematics of the first touch input.

In some embodiments, the visual representation includes an animation based on characteristic intensity of the first touch input (e.g., FIG. 7B).

In some embodiments, displaying the visual representation includes looping playback of the visual representation.

In some embodiments, displaying the visual representation includes outputting at least one of an audio output and a haptic output associated with the visual representation.

In some embodiments, the first touch input is a single-finger tap at the first location in the digital viewfinder (e.g., digital viewfinder 610) and the visual representation is at least one of a circle, an ellipses, and an oval at the first location (e.g., FIG. 7A).

In some embodiments, the first touch input is a single-finger hold that exceeds a predetermined duration and the visual representation is a teardrop at the first location of the first touch input.

In some embodiments, the first touch input is a single-finger contact having characteristic kinematics describing a movement of the single-finger contact beginning at the first location in the digital viewfinder (e.g., digital viewfinder 610) and the visual representation is a line beginning at the first location with the characteristic kinematics.

In some embodiments, the first touch input is a multiple-finger contact in the digital viewfinder (e.g., digital viewfinder 610) and the visual representation is centered at the first location between touch contacts of the multiple-finger contact (e.g., FIG. 7C).

In some embodiments, the visual representation is oriented along an angle defined by the touch contacts on the touch-sensitive display screen (e.g., display screen 602) (e.g., FIG. 7C).

In some embodiments, the multiple-finger contact is a two-finger contact on the touch-sensitive display screen (e.g., display screen 602) and the visual representation is a kiss that is displayed at the first location for a duration of the two-finger contact and fades upon lift-off of the two-finger contact (e.g., FIG. 7C, 7D).

In some embodiments, the multiple-finger contact is a two-finger double-tap contact on the touch-sensitive display screen (e.g., display screen 602) and the visual representation is a stamped image at the first location that is angled according to the angle defined by the two-finger contact, further wherein the stamped image does not fade from display of the image in the digital viewfinder (e.g., digital viewfinder 610) (e.g., FIG. 7D).

In some embodiments, the stamped image is a stamped kiss. (e.g., FIG. 7C, 7D).

In some embodiments, wherein the operational mode is the recording mode, further wherein the first touch input includes a varying characteristic intensity that fluctuates based on a varying intensity of the first touch input on the touch-sensitive display screen (e.g., display screen 602), the device displays the visual representation at the first location, wherein the visual representation is the animated graphic that is rendered according to the varying characteristic intensity of the first touch input at the first location (e.g., FIG. 7B).

In some embodiments, the first touch input corresponds to a press-and-hold input with the varying characteristic intensity at the first location and the visual representation is an animated fireball having a variable color scheme and size that are scaled in accordance with the varying characteristic intensity of the press-and-hold input (e.g., FIG. 7B).

In some embodiments, the visual representation is a beating heart that loops for a duration of the first touch input (e.g., FIG. 7D).

In some embodiments, the visual representation is a multiple-part animation having at least a first part and a second part, wherein the first part is based on a first detected aspect of the first touch input and the second part is distinct from the first part and is based on a subsequently detected aspect of the first touch input (e.g., FIG. 7E).

In some embodiments, the multiple-part animation is a breaking heart animation, wherein: displaying the first part includes looping a beating heart animation at the first location for a duration of time corresponding to the first touch input on the touch-sensitive display screen (e.g., display screen 602) at the first location, and displaying the second part includes ceasing looping of the beating heart animation and replacing the beating heart animation with display of a breaking heart animation based on the subsequently detected aspect, wherein the subsequently detected aspect is a movement of the first touch input that meets a predefined distance threshold(e.g., FIG. 7E).

Note that details of the processes described above with respect to method 1100 (e.g., FIG. 11) are also applicable in an analogous manner to the methods described above and below. For example, methods 1000, 1200, and 1300 optionally include one or more of the characteristics of the various methods described above with reference to method 1100. For brevity, these details are not repeated below.

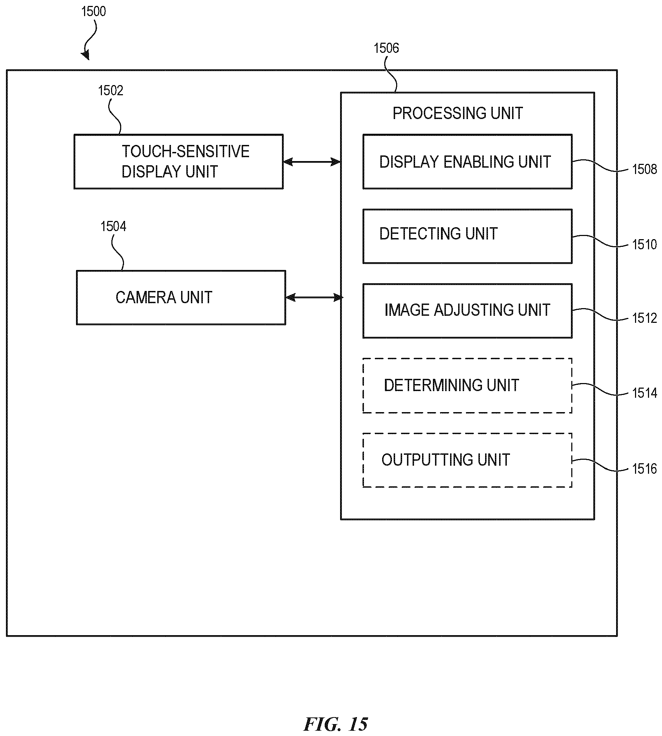

Turning now to FIG. 15, in accordance with some embodiments, FIG. 15 shows an exemplary functional block diagram of an electronic device 1500 configured in accordance with the principles of the various described embodiments. In accordance with some embodiments, the functional blocks of electronic device 1500 are configured to perform the techniques described above. The functional blocks of the device 1500 are, optionally, implemented by hardware, software, or a combination of hardware and software to carry out the principles of the various described examples. It is understood by persons of skill in the art that the functional blocks described in FIG. 15 are, optionally, combined or separated into sub-blocks to implement the principles of the various described examples. Therefore, the description herein optionally supports any possible combination or separation or further definition of the functional blocks described herein.

As shown in FIG. 15, an electronic device 1500 includes a touch-sensitive display unit 1502, a camera unit 1504, and a processing unit 1506 coupled to the touch-sensitive display unit 1502 and the camera unit 1504. In some embodiments, the processing unit 1506 includes a display enabling unit 1508, a detecting unit 1510, an image adjusting unit 1512, and optionally: a determining unit 1514, and an outputting unit 1516.

The processing unit 1506 is configured to: enable display (e.g., with display enabling unit 1508) of, on the touch-sensitive display unit, an image in a digital viewfinder, wherein the image is based on camera image data received from the camera. The processing unit 1506 is further configured to: detect (e.g., with detecting unit 1510) a first touch input at a first location in the digital viewfinder. The processing unit 1506 is further configured to: in response to detecting the first touch input and in accordance with a determination that the first touch input is detected while an operational mode of the camera is a recording mode, enable display (e.g., with display enabling unit 1508) of, in the digital viewfinder, a visual representation corresponding to the first touch input at the first location. The processing unit 1506 is further configured to: in response to detecting (e.g., with detecting unit 1510) the first touch input and in accordance with a determination that the first touch input is detected while an operational mode of the camera is a non-recording mode, alter (e.g., with image adjusting unit 1512) the image displayed in the digital viewfinder by adjusting a characteristic of the camera image data.

In some embodiments, the processing unit 1506 is further configured to: determine (e.g., with determining unit 1514) whether the first touch input is detected while the operational mode of the camera is the recording mode or the non-recording mode.

In some embodiments, the first touch input is a single-finger input and the characteristic is a focus of the camera image data.

In some embodiments, the first touch input is a multiple-finger input and the characteristic is an optical magnification of the camera image data.

In some embodiments, the visual representation is displayed (e.g., with display enabling unit 1508) in the digital viewfinder for a duration of the first touch input and fades upon detection of lift-off of the first touch input.

In some embodiments, the visual representation is displayed (e.g., with display enabling unit 1508) in the digital viewfinder for a predetermined period of time before fading.

In some embodiments, the visual representation is maintained in the digital viewfinder while the digital viewfinder is displayed (e.g., with display enabling unit 1508).

In some embodiments, the visual representation includes an animation based on characteristic kinematics of the first touch input.

In some embodiments, the visual representation includes an animation based on characteristic intensity of the first touch input.

In some embodiments, displaying the visual representation includes looping playback of the visual representation.

In some embodiments, displaying the visual representation includes outputting (e.g., with outputting unit 1516) at least one of an audio output and a haptic output associated with the visual representation.

In some embodiments, the first touch input is a single-finger tap at the first location in the digital viewfinder and the visual representation is at least one of a circle, an ellipses, and an oval at the first location.

In some embodiments, the first touch input is a single-finger hold that exceeds a predetermined duration and the visual representation is a teardrop at the first location of the first touch input.

In some embodiments, the first touch input is a single-finger contact having characteristic kinematics describing a movement of the single-finger contact beginning at the first location in the digital viewfinder and the visual representation is a line beginning at the first location with the characteristic kinematics.

In some embodiments, the first touch input is a multiple-finger contact in the digital viewfinder and the visual representation is centered at the first location between touch contacts of the multiple-finger contact.

In some embodiments, the visual representation is oriented along an angle defined by the touch contacts on the touch-sensitive display unit.

In some embodiments, the multiple-finger contact is a two-finger contact on the touch-sensitive display unit and the visual representation is a kiss that is displayed at the first location for a duration of the two-finger contact and fades upon lift-off of the two-finger contact.

In some embodiments, the multiple-finger contact is a two-finger double-tap contact on the touch-sensitive display unit and the visual representation is a stamped image at the first location that is angled according to the angle defined by the two-finger contact, further wherein the stamped image does not fade from display of the image in the digital viewfinder.

In some embodiments, the stamped image is a stamped kiss.

In some embodiments, the operational mode is the recording mode, further wherein the first touch input includes a varying characteristic intensity that fluctuates based on a varying intensity of the first touch input on the touch-sensitive display unit, wherein the processing unit 1506 is further configured to: enable display of the visual representation at the first location, wherein the visual representation is the animated graphic that is rendered according to the varying characteristic intensity of the first touch input at the first location.

In some embodiments, the first touch input corresponds to a press-and-hold input with the varying characteristic intensity at the first location and the visual representation is an animated fireball having a variable color scheme and size that are scaled in accordance with the varying characteristic intensity of the press-and-hold input.

In some embodiments, the visual representation is a beating heart that loops for a duration of the first touch input.

In some embodiments, the visual representation is a multiple-part animation having at least a first part and a second part, wherein the first part is based on a first detected aspect of the first touch input and the second part is distinct from the first part and is based on a subsequently detected aspect of the first touch input.

In some embodiments, the multiple-part animation is a breaking heart animation, wherein: displaying the first part includes looping a beating heart animation at the first location for a duration of time corresponding to the first touch input on the touch-sensitive display unit at the first location, and displaying the second part includes ceasing looping of the beating heart animation and replacing the beating heart animation with display of a breaking heart animation based on the subsequently detected aspect, wherein the subsequently detected aspect is a movement of the first touch input that meets a predefined distance threshold.

The operations described above with reference to FIG. 11 are, optionally, implemented by components depicted in FIGS. 1A-1B or FIG. 15. For example, displaying operations 1102, 1106, detecting operation 1104, and image altering operation 1108 are, optionally, implemented by event sorter 170, event recognizer 180, and event handler 190. Event monitor 171 in event sorter 170 detects a contact on touch-sensitive display 112, and event dispatcher module 174 delivers the event information to application 136-1. A respective event recognizer 180 of application 136-1 compares the event information to respective event definitions 186, and determines whether a first contact at a first location on the touch-sensitive surface corresponds to a predefined event or sub event, such as activation of an affordance on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in FIGS. 1A-1B.

Turning now to FIG. 8A, the electronic device 600 can optionally display a compact drawing area and a text message, then expand to full-screen drawing area having camera affordance for image/video capture capability. For example, the device 600 can optionally display, on the touch-sensitive display 602, a text messaging user interface 640 associated with the contact 632, wherein the text messaging user interface 640 includes a message transcript area 638 and a compact drawing area 658, wherein the compact drawing area 658 includes an expand affordance 660 (e.g., up-arrow pointing up from a bottom of the screen in the compact drawing area) corresponding to the drawing area 606, which is also referred to herein as the enlarged drawing area 606 (e.g., full-screen drawing area). As shown in FIG. 8A, the text messaging user interface 640 can optionally include at least a first portion and a second portion. For example, the text messaging user interface 640 includes at least a first portion and a second portion displayed below the first portion. The message transcript area 638 is displayed in the first portion and the compact drawing area 658 is displayed in the second portion, so that the display screen 602 can optionally be split into at least two portions. As shown in FIG. 8A, the two portions can optionally be separated by the menu bar 662 having a compact drawing area affordance 664, such as a heart-shaped affordance that can optionally indicate communication tools or functionalities that portray emotions, such as the electronic touch communication functionalities described herein. The device 600 can optionally detect user input on the affordance 664 representing the compact drawing area 658 and in response to detecting the user input on the affordance 664, display the compact drawing area 658 in the text messaging user interface 640. The menu bar 662 can optionally further include a camera affordance 666 corresponding to a camera roll, a text entry field 668 corresponding to a soft keyboard 670 for composing a textual message to the contact 632, and a record audio affordance 672 that initiates recording of an audio message to the contact 632.

As shown at FIG. 8A, the compact drawing area can optionally be displayed interchangeably with other messaging features. For example, upon receiving an input corresponding to a request to display the soft keyboard 670 (e.g., a user input is detected on the text entry field 668), the device 600 can optionally cease displaying the compact drawing area 658 and display the soft keyboard 670. In this way, the user can optionally easily and quickly switch between electronic touch communications and textual communications with the contact 632, which can optionally aid and enhance the communication of emotions. In some examples, the compact drawing area 658 is displayed interchangeably with a display associated with a camera roll corresponding to selection of the camera affordance 666, the soft keyboard 670, and recording interface corresponding to selection of the recording affordance 672 in the bottom or second portion of the display screen 602. It is further contemplated that in some examples, no indication to the contact 632 is provided when the user is composing touch inputs in the drawing area. Further, it is noted that various touch inputs received in the compact drawing area 658 include the touch inputs discussed with respect to at least FIGS. 6A-6G.

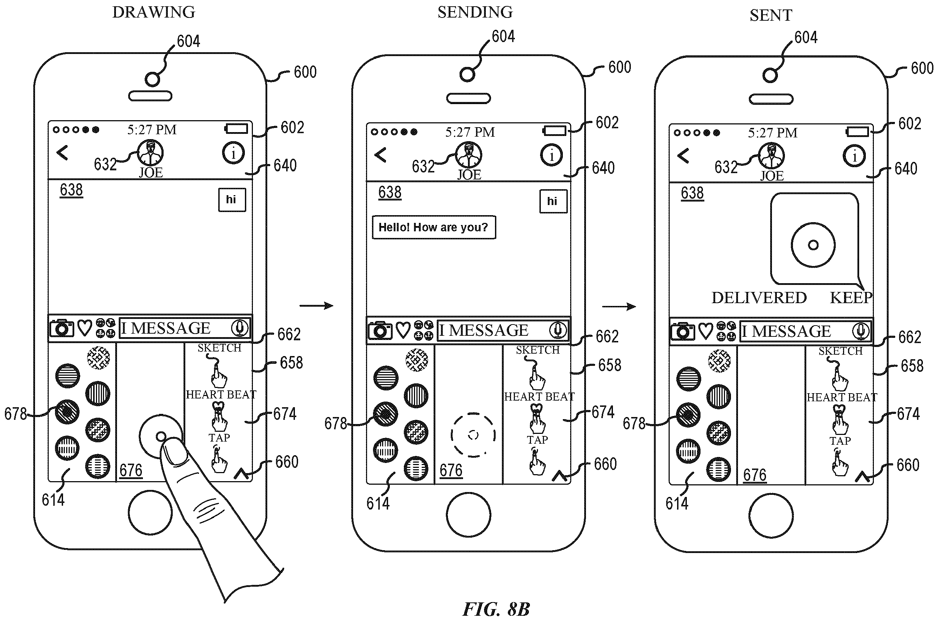

Further, turning now to FIG. 8B, the device 600 can optionally automatically send electronic touch communications entered in the compact drawing area 658. For example, the device 600 can optionally detect a first touch input, at a first location in the compact drawing area 658, representing a first stroke (e.g., a tap). In response to detecting the first touch input, the device 600 can optionally display a visual representation, at the first location in the compact drawing area, of the first stroke and automatically send the data corresponding to the visual representation of the first stroke to an external device associated with the contact 632. For example, the device 600 can optionally display a fade-out of the visual representation indicating data corresponding to the visual representation is being sent. In some cases, the data is automatically sent after a delay. In another embodiment, when no images and/or videos are captured and/or otherwise included in the electronic touch communications herein, visual representations corresponding to the touch inputs in the drawing area (e.g., compact drawing canvas) can optionally not stick or be stamped, and can optionally always fade-out. In yet another example, a user can optionally load a previously saved photo or video from a camera roll and create touch inputs in the drawing area with previous footage.

As further shown in FIGS. 8A and 8B, the second portion of the text messaging user interface 640 can optionally include a legend 674 of one or more indicators in the compact drawing area 658. Each indicator can optionally represent a type of touch input and its corresponding visual representation. The legend 674 can optionally be provided adjacent to a compact drawing canvas 676 where the touch inputs are entered. The legend 674 of indicators can optionally include a single-finger indicator representing free-form sketch or stroke, a double-finger indicator representing heartbeat, and/or a single-finger tap indicator representing discrete contact-point animations (i.e., circles/ellipses/ovals). In some embodiments, use selection of an indicator can optionally cause a corresponding visual representation to display on its own in the compact drawing canvas 676 and sent to the contact 632.

As further shown in both FIGS. 8A and 8B, the plurality of color affordances 614 (e.g., eight color affordances) and an indicator 678 representing a currently-selected color affordance can optionally be displayed in the compact drawing area 658 and the enlarged drawing area 606. The indicator 678 can optionally include a black dot overlapping a portion of the currently-selected color affordance which indicates a color for visual representations being entered in the drawing area. Further, as shown in FIG. 8C, in response to detecting a user input on any one of the plurality of color affordances 614, wherein the user input corresponds to changing a color represented by the color affordance (e.g., a touch input on the color affordance that meets a duration threshold), the device 600 can optionally display a color selection interface 680, wherein the color selection interface 680 includes a plurality of selectable colors. In some embodiments, the color selection interface 680 is a color wheel overlaid over a portion of the drawing area, such as an enlarged drawing canvas 606 and/or a compact drawing canvas 676. In some embodiments, the color selection interface 680 replaces the drawing area. In some embodiments, the color selection interface 680 is a color wheel overlapping a portion of the drawing area and including a spectrum of colors. In response to detecting user input 682 corresponding to selecting of a color of the plurality of colors, the device 600 can optionally update the color affordance with the selected color. In some examples, the plurality of color affordances 614 correspond to previously-selected colors so that previous user-selected colors are displayed each time the compact drawing area 658 and/or the enlarged drawing area 606 is displayed. A "done" affordance can optionally be displayed at a central region of the color wheel and upon user input on the done affordance, the color wheel can optionally be removed from the drawing area.

In another aspect, the color adjustment interface 680includes a brightness adjustment affordance 684. For example, the brightness adjustment affordance 684 can optionally include a brightness slider bar that indicates a brightness level of visual representations, such as strokes, in the drawing area. A default brightness level can optionally be set at 50 percent brightness. Dragging the slider bar rightward dims the color of the visual representations toward no brightness or black, while dragging leftward brightens the color of visual representations toward fully bright or white. In another aspect, brightness level is adjusted while saturation level is fixed. In a further aspect, it is contemplated that a background color of the enlarged drawing canvas and/or compact drawing canvas is black. In another embodiment, the background color can optionally be user-selected.

Referring back to FIG. 8A, the device 600 can optionally detect a first user input corresponding to the expand affordance 660 and in response to detecting the first user input, the device 600 can optionally replace the displayed text messaging interface 640 with display of the enlarged drawing area 606, wherein the enlarged drawing area 606 includes a camera affordance 626. In a particular aspect, the enlarged drawing area 606 defines an enlarged drawing canvas 606 that has a same aspect ratio as that of the compact drawing canvas 676 of the compact drawing area 658. It is noted that the enlarged drawing canvas 606 and the compact drawing canvas 676 shown in the figures can optionally not share a common aspect ratio, however, in some embodiments, the canvases 606,676 share the same aspect ratio. The canvas areas are configured to receive touch inputs corresponding to visual representations. The enlarged drawing canvas and the compact drawing canvas have a common aspect ratio, such as 1:1.25, so that the drawing canvas is scalable up and/or down based on the aspect ratio to achieve the full-screen and/or compact display mode, and/or to display to scale based on a screen size (e.g., cross-platform for Watch, iPhone, iPad, Macbook). As further shown in FIG. 8A, the enlarged drawing area includes a minimize affordance 686 (e.g., downward arrow). In response to detecting user input on the minimize affordance 686, the device 600 can optionally replace display of the enlarged drawing area 606 with display of the text messaging user interface 640, which can optionally include display of the compact drawing area 658 without requiring another user selection of the compact drawing affordance 664.

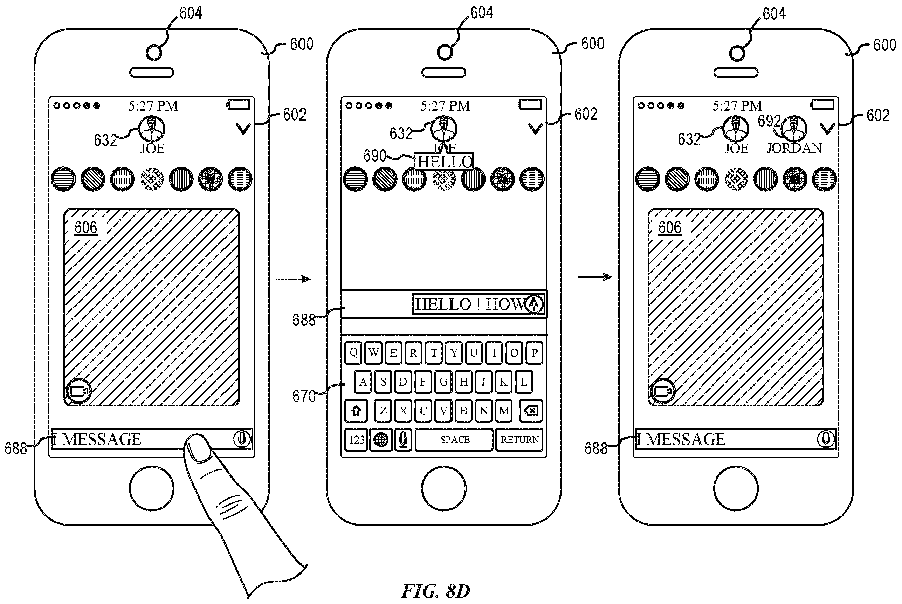

Turning now to FIG. 8D, text messaging is enabled from the enlarged drawing area view 606. For example, the device 600 can optionally display a text entry field 688 in the enlarged drawing area 606, and/or more specifically, below the enlarged drawing canvas of the full-screen drawing mode. In response to detection of user input on the text entry field 688, the device 600 can optionally display the soft keyboard 670 in the enlarged drawing area. For example, the soft keyboard 670 can optionally be displayed with an on-screen animation of sliding up from a bottom portion of the display screen 602. In response to detecting a set of user inputs on the soft keyboard 670 that correspond to composition of a textual message, and further in response to detecting user request to send the textual message, the device 600 can optionally send the textual message to the contact 632 while maintaining display of the enlarged drawing area 606. In practice, without displaying the text messaging user interface 640, the user can stay a text message communication with the contact 632 while still in the full screen drawing mode. In another aspect, incoming text messages from the contact 632 can optionally be received while displaying the enlarged drawing area. Merely by way of example, such incoming text messages can optionally be displayed as a notification 690, such as a pop-up bubble containing all or a portion of the incoming message. In another example, additional contacts 692 can optionally be added to the text messaging user interface and receive the electronic touch communications.

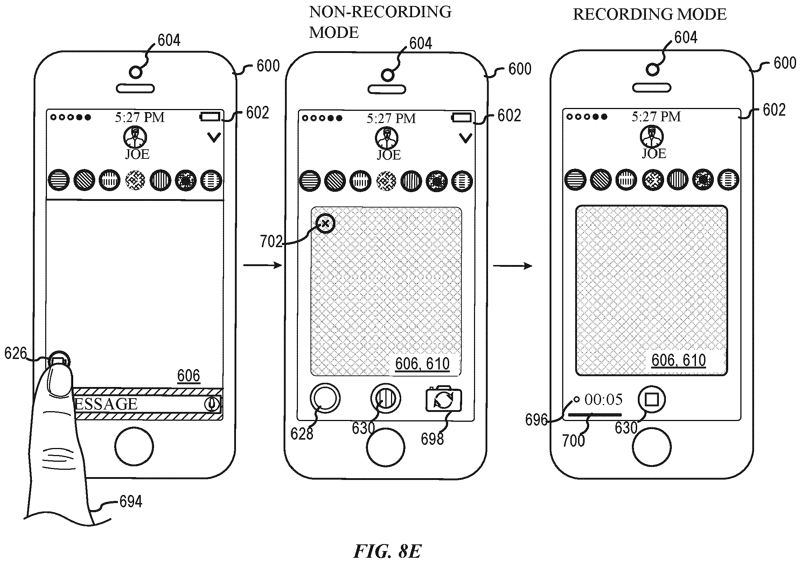

Turning now to FIG. 8E, the device 600 can optionally detect a second user input 694 corresponding to the camera affordance 626. In response to detecting the second user input 694, the device can optionally display the digital viewfinder 610, in the enlarged drawing area 606, that presents camera image data received from the camera 604. For example, the digital viewfinder 610 can optionally be overlaid on the drawing canvas of the drawing area 606). The camera affordance 626 can optionally be displayed at a first brightness level, where while displaying the enlarged drawing area, in response to detecting a third user input in the enlarged drawing area corresponding to visual representations, the device 600 can optionally dim or remove the camera affordance 626 from display. The camera affordance 626 can optionally be dimmed to a second brightness level less than the first brightness level. After a predetermined period of time has elapsed since cessation of the third user input for touch inputs in the drawing area 606, the camera affordance can optionally be restored to the first brightness level, or otherwise reappear for display. In some examples, dimming the camera affordance 626 corresponds to the camera feature being off. In other examples, dimming the camera affordance 626 indicates a decreased tap target size of the affordance. For example, the tap target size of the camera affordance 626 can optionally decrease when touch inputs in the drawing area 606 are detected, so that the digital viewfinder 610 is not accidentally invoked. In another example, the brightening of the camera affordance 626 can optionally be associated with increasing the tap target size when no drawing inputs are detected to facilitate the user in selecting the camera affordance 626 without accidentally inputting a stroke in the drawing area 606. Other examples are possible.

In a further example, as shown in FIG. 8E, while displaying the digital viewfinder 610 in the enlarged drawing area, displaying, the record video affordance 630 can optionally be used to toggle on and off recording of a video based on the camera image data presented in the digital viewfinder 628. For example, upon selection of the record video affordance 628, the device 600 can optionally replace the displayed still image capture affordance 628 with a countdown timer 696, remove a camera lens flip affordance 698 from display, and further display a progress bar 700. The still image capture affordance 628 takes a picture based on the camera image data presented in the digital viewfinder 610, and the camera flip affordance that toggles activation of a front or back camera. Merely by way of example, initial activation of the front or back camera is based on previous user selection. In another aspect, in response to user selection of the record video affordance 630 that toggles on and/or off recording of the video, the device 600 displays the countdown timer 696 representing a remaining time until recording automatically ceases. In one example, the countdown timer 696 is a 10-second countdown timer. In other examples, a count-up timer is displayed. Further, in response to user selection of the record video affordance that toggles on recording of the video, the device 600 can optionally display the animated progress bar 696 that fills horizontally (e.g., fills from left to right) to indicate a remaining duration until recording automatically ceases. Still further, upon detection of user input on a displayed exit affordance 702 corresponding to the digital viewfinder 610, the device 600 can optionally cease displaying of the digital viewfinder 610 in the enlarged drawing area and replace the digital viewfinder 610 with an enlarged drawing canvas 606 or otherwise return to the enlarged drawing area 606 (e.g., a blank drawing canvas). The exit affordance 702 can optionally can optionally include an x-box in an upper right or left corner of the digital viewfinder 610, as shown in FIG. 8E. Other examples are possible.

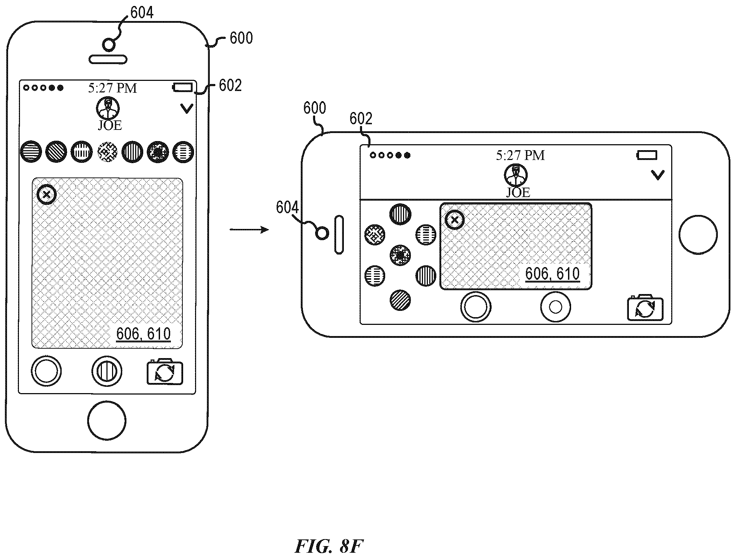

Turning now to FIG. 8F, example vertical and horizontal orientations of the full-screen drawing area are shown. Electronic touch functionalities described herein can optionally be utilized in various orientations and/or through a variety of screen sizes. It is contemplated that the combined drawing canvas of drawing area 606 and digital viewfinder 610 can optionally define a constant aspect ratio that is used in scaling up and/or down, as described previously, in accordance with variations in orientations, devices, screen sizes, and so on. In this way, cross-platform communication of the messages can optionally be improved.

Turning now to FIG. 12, a flow diagram illustrates a method for electronic touch communications using an electronic device in accordance with some embodiments. Method 1200 is performed at a device (e.g., 100, 300, 500, 600) with a touch-sensitive display and a camera. Some operations in method 1200 are, optionally, combined, the order of some operations is, optionally, changed, and some operations are, optionally, omitted.

As described below, method 1200 provides an intuitive way for electronic communications with video and/or still image. The method reduces the cognitive burden on a user for electronic communications, thereby creating a more efficient human-machine interface. For battery-operated computing devices, enabling a user to communicate electronically in a faster and more efficient manner conserves power and increases the time between battery charges.

As shown in the method 1200, the device (1202) displays, on the touch-sensitive display screen (e.g., display screen 602), a text messaging user interface associated with a contact, wherein the text messaging user interface includes a message transcript area, and a compact drawing area, wherein the compact drawing area includes an expand affordance corresponding to an enlarged drawing area. The device (1204) detects a first user input corresponding to the expand affordance. The device (1206), in response to detecting the first user input, replaces the displayed text messaging interface with display of the enlarged drawing area, wherein the enlarged drawing area includes a camera affordance. The device (1208) detects a second user input corresponding to the camera affordance. The device (1210), in response to detecting the second user input, displays a digital viewfinder (e.g., digital viewfinder 610), in the enlarged drawing area, that presents camera image data received from the camera (e.g., camera 604).

In some embodiments, the device detects user input on an affordance representing the compact drawing area in the text messaging user interface; and in response to detecting the user input on the affordance, displays the compact drawing area in the text messaging user interface.

In some embodiments, the affordance representing the compact drawing area is displayed in a menu bar of the text messaging user interface, further wherein the menu bar includes a camera affordance corresponding to a camera (e.g., camera 604) roll, a text entry field corresponding to a soft keyboard for composing a textual message to the contact, and a record audio affordance that initiates recording of an audio message to the contact.

In some embodiments, the device receives an input corresponding to a request to display the soft keyboard; in response to the user request to display the soft keyboard, ceases to display the compact drawing area; and displays the soft keyboard.

In some embodiments, the text messaging user interface includes at least a first portion and a second portion displayed below the first portion, wherein the message transcript area is displayed in the first portion and the compact drawing area is displayed in the second portion.

In some embodiments, wherein the enlarged drawing area includes a minimize affordance, the device, in response to detecting user input on the minimize affordance, replaces display of the enlarged drawing area with display of the text messaging user interface.

In some embodiments, in response to detecting user input on the minimize affordance, the devices displays the compact drawing area.

In some embodiments, the enlarged drawing area includes an enlarged drawing canvas and the compact drawing canvas includes a compact drawing area, wherein the enlarged drawing canvas and the compact drawing canvas have a common aspect ratio.

In some embodiments, the device displays a text entry field in the enlarged drawing area; in response to detection of user input on the text entry field, displays a soft keyboard in the enlarged drawing area; and in response to detecting a set of user inputs on the soft keyboard corresponding to composition of a textual message and a request to send the textual message, composes a textual message and sending the textual message to the contact while maintaining display of the enlarged drawing area.

In some embodiments, the device displays a legend of one or more indicators in the compact drawing area, wherein each indicator represents a type of touch input and a visual representation corresponding to the type of touch input.

In some embodiments, the enlarged drawing area and the compact drawing area include display of a plurality of color affordances and an indicator representing a currently-selected color affordance.

In some embodiments, in response to detecting a user input on any one of the plurality of color affordances, wherein the user input corresponds to changing a color represented by the color affordance, the device displays a color selection interface, wherein the color selection interface includes a plurality of selectable colors; and in response to detecting user input corresponding to selecting of a color of the plurality of colors, updates the color affordance with the selected color.

In some embodiments, the color adjustment interface includes a brightness adjustment affordance.

In some embodiments, the device detects a first touch input, at a first location in the compact drawing area, representing a first stroke; in response to detecting the first touch input, displays a visual representation, at the first location in the compact drawing area, of the first stroke; and automatically sends data corresponding to the visual representation of the first stroke to an external device (e.g., device 600) associated with the contact.

In some embodiments, wherein the camera affordance is displayed at a first brightness level, the device, while displaying the enlarged drawing area, in response to detecting a third user input in the enlarged drawing area, dims the camera affordance to a second brightness level less than the first brightness level; and after a predetermined period of time has elapsed since cessation of the third user input, restores the camera affordance to the first brightness level.

In some embodiments, while displaying the digital viewfinder (e.g., digital viewfinder 610) in the enlarged drawing area, the device displays a record video affordance that toggles on and off recording a video based on the camera image data presented in the digital viewfinder (e.g., digital viewfinder 610), a still image capture affordance that takes a picture based on the camera image data presented in the digital viewfinder (e.g., digital viewfinder 610), and a camera (e.g., camera 604) flip affordance that toggles activation of a front or back camera (e.g., camera 604).

In some embodiments, in response to user selection of the record video affordance that toggles on recording of the video, the device displays a countdown timer representing a remaining time until recording automatically ceases.

In some embodiments, in response to user selection of the record video affordance that toggles on recording of the video, the device displays an animated progress bar that fills horizontally indicating remaining duration until recording automatically ceases.

In some embodiments, upon detection of user input on a displayed exit affordance corresponding to the digital viewfinder (e.g., digital viewfinder 610), the device ceases displaying of the digital viewfinder (e.g., digital viewfinder 610) in the enlarged drawing area and replaces the digital viewfinder (e.g., digital viewfinder 610) with an enlarged drawing canvas.

Note that details of the processes described above with respect to method 1200 (e.g., FIG. 12) are also applicable in an analogous manner to the methods described above and below. For example, methods 1000, 1100, and 1300 optionally include one or more of the characteristics of the various methods described above with reference to method 1200. For brevity, these details are not repeated below.

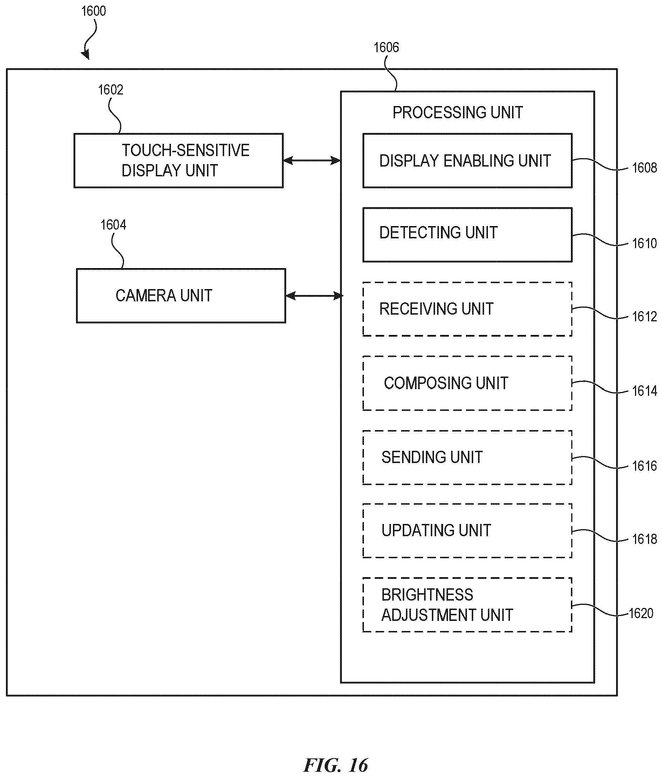

Turning now to FIG. 16, in accordance with some embodiments, FIG. 16 shows an exemplary functional block diagram of an electronic device 1600 configured in accordance with the principles of the various described embodiments. In accordance with some embodiments, the functional blocks of electronic device 1600 are configured to perform the techniques described above. The functional blocks of the device 1600 are, optionally, implemented by hardware, software, or a combination of hardware and software to carry out the principles of the various described examples. It is understood by persons of skill in the art that the functional blocks described in FIG. 16 are, optionally, combined or separated into sub-blocks to implement the principles of the various described examples. Therefore, the description herein optionally supports any possible combination or separation or further definition of the functional blocks described herein.

As shown in FIG. 16, an electronic device 1600 includes a touch-sensitive display unit 1602 configured to display a graphic user interface, a camera unit 1604 configured to present and capture camera image data, and a processing unit 1606 coupled to the display unit 1602 camera unit 1604. In some embodiments, the processing unit 806 includes a display enabling unit 1608, a detecting unit 1610, and optionally: a receiving unit 1612, a composing unit 1614, a sending unit 1616, an updating unit 1618, and a brightness adjustment unit 1620.

The processing unit 1606 is configured to: enable display (e.g., with display enabling unit 1608) of, on the touch-sensitive display unit, a text messaging user interface associated with a contact, wherein the text messaging user interface includes: a message transcript area, and a compact drawing area, wherein the compact drawing area includes an expand affordance corresponding to an enlarged drawing area. The processing unit 1606 is further configured to: detect (e.g., with detecting unit 1610) a first user input corresponding to the expand affordance. The processing unit 1606 is further configured to: in response to detecting the first user input, replace (e.g., with display enabling unit 1608) the displayed text messaging interface with display of the enlarged drawing area, wherein the enlarged drawing area includes a camera affordance. The processing unit 1606 is further configured to: detect (e.g., with detecting unit 1610) a second user input corresponding to the camera affordance. The processing unit 1606 is further configured to: in response to detecting the second user input, enable display (e.g., with display enabling unit 1608) of a digital viewfinder, in the enlarged drawing area, that presents camera image data received from the camera.

In some embodiments, the processing unit 1606 is further configured to: detect (e.g., with detecting unit 1610) user input on an affordance representing the compact drawing area in the text messaging user interface; and in response to detecting the user input on the affordance, enable display (e.g., with display enabling unit 1608) of the compact drawing area in the text messaging user interface.

In some embodiments, the affordance representing the compact drawing area is displayed in a menu bar of the text messaging user interface, further wherein the menu bar includes a camera affordance corresponding to a camera roll, a text entry field corresponding to a soft keyboard for composing a textual message to the contact, and a record audio affordance that initiates recording of an audio message to the contact.

In some embodiments, the processing unit 1606 is further configured to: receive (e.g., with receiving unit 1612) an input corresponding to a request to display the soft keyboard; in response to the user request to display the soft keyboard, cease to display (e.g., with display enabling unit 1608) the compact drawing area; and enable display (e.g., with display enabling unit 1608) of the soft keyboard.

In some embodiments, the text messaging user interface includes at least a first portion and a second portion displayed below the first portion, wherein the message transcript area is displayed in the first portion and the compact drawing area is displayed in the second portion.

In some embodiments, the enlarged drawing area includes a minimize affordance, wherein the processing unit 1606 is further configured to, in response to detecting user input on the minimize affordance, replace display (e.g., with display enabling unit 1608) of the enlarged drawing area with display of the text messaging user interface.

In some embodiments, the processing unit 1606 is further configured to: in response to detecting user input on the minimize affordance, enable display (e.g., with display enabling unit 1608) of the compact drawing area.

In some embodiments, the enlarged drawing area includes an enlarged drawing canvas and the compact drawing canvas includes a compact drawing area, wherein the enlarged drawing canvas and the compact drawing canvas have a common aspect ratio.

In some embodiments, the processing unit 1606 is further configured to: enable display (e.g., with display enabling unit 1608) of a text entry field in the enlarged drawing area; in response to detection of (e.g., with detecting unit 1610) user input on the text entry field, enable display (e.g., with display enabling unit 1608) of a soft keyboard in the enlarged drawing area; and in response to detecting (e.g., with detecting unit 1610) a set of user inputs on the soft keyboard corresponding to composition of a textual message and a request to send the textual message, compose (e.g., with composing unit 1614) a textual message and sending (e.g., with sending unit 1616) the textual message to the contact while maintaining display of the enlarged drawing area.

In some embodiments, the processing unit 1606 is further configured to: enable display of a legend of one or more indicators in the compact drawing area, wherein each indicator represents a type of touch input and a visual representation corresponding to the type of touch input.

In some embodiments, the enlarged drawing area and the compact drawing area include display of a plurality of color affordances and an indicator representing a currently-selected color affordance.

In some embodiments, the processing unit 1606 is further configured to: in response to detecting a user input on any one of the plurality of color affordances, wherein the user input corresponds to changing a color represented by the color affordance, enable display (e.g., with display enabling unit 1608) of a color selection interface, wherein the color selection interface includes a plurality of selectable colors; and in response to detecting (e.g., with detecting unit 1610) user input corresponding to selecting of a color of the plurality of colors, update (e.g., with updating unit 1618) the color affordance with the selected color.

In some embodiments, the color adjustment interface includes a brightness adjustment affordance.

In some embodiments, the processing unit 1606 is further configured to: detect (e.g., with detecting unit 1610) a first touch input, at a first location in the compact drawing area, representing a first stroke; in response to detecting the first touch input, enable display (e.g., with display enabling unit 1608) of a visual representation, at the first location in the compact drawing area, of the first stroke; and automatically send (e.g., with sending unit 1616) data corresponding to the visual representation of the first stroke to an external device associated with the contact.

In some embodiments, the camera affordance is displayed at a first brightness level, wherein the processing unit 1606 is further configured to: while displaying the enlarged drawing area, in response to detecting (e.g., with detecting unit 1610) a third user input in the enlarged drawing area, dim (e.g., with brightness adjustment unit 1620) the camera affordance to a second brightness level less than the first brightness level; and after a predetermined period of time has elapsed since cessation of the third user input, restore (e.g., with brightness adjusting unit 1620) the camera affordance to the first brightness level.

In some embodiments, the processing unit 1606 is further configured to: while displaying (e.g., with display enabling unit 1608) the digital viewfinder in the enlarged drawing area, enable display (e.g., with display enabling unit 1608) of, a record video affordance that toggles on and off recording a video based on the camera image data presented in the digital viewfinder, a still image capture affordance that takes a picture based on the camera image data presented in the digital viewfinder, and a camera flip affordance that toggles activation of a front or back camera.

In some embodiments, the processing unit 1606 is further configured to: in response to user selection of the record video affordance that toggles on recording of the video, enable display (e.g. with display enabling unit 1608) of a countdown timer representing a remaining time until recording automatically ceases.

In some embodiments, the processing unit 1606 is further configured to: in response to user selection of the record video affordance that toggles on recording of the video, enable display (e.g., with display enabling unit 1608) of an animated progress bar that fills horizontally indicating remaining duration until recording automatically ceases.

In some embodiments, the processing unit 1606 is further configured to: upon detection of user input on a displayed exit affordance corresponding to the digital viewfinder, cease displaying (e.g., with display enabling unit 1608) of the digital viewfinder in the enlarged drawing area and replacing the digital viewfinder with an enlarged drawing canvas.

The operations described above with reference to FIG. 12 are, optionally, implemented by components depicted in FIGS. 1A-1B or FIG. 16. For example, displaying operations 1202, 1210, detecting operations 1204, 1208, and replacing display operation 1206, are, optionally, implemented by event sorter 170, event recognizer 180, and event handler 190. Event monitor 171 in event sorter 170 detects a contact on touch-sensitive display 112, and event dispatcher module 174 delivers the event information to application 136-1. A respective event recognizer 180 of application 136-1 compares the event information to respective event definitions 186, and determines whether a first contact at a first location on the touch-sensitive surface corresponds to a predefined event or sub event, such as activation of an affordance on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in FIGS. 1A-1B.

Turning now to FIG. 9, a recipient device or external device can optionally display data received from the device 600 in a text messaging user interface. The received data can optionally be looped when certain conditions exist. In other conditions where looped playback criteria, or merely playback criteria, are not met, then the recipient device can optionally stop looping the received data and replace the looped playback with a still frame of the data and/or, if the data is no longer the most recently communicated data of that type, then the recipient device can optionally remove the data from the text messaging transcript. In some cases, such received data is removed only after being viewed by the recipient. It is contemplated that device 600 can optionally be capable of both sending and receiving the data discussed herein. Therefore, for ease of discussion, the following embodiments will be described for the device 600 when data is received from the contact 632. Still, it is noted that both devices 600 and 900 can optionally provide the same, similar, and/or shared features and capabilities, or can optionally differ in capabilities. For instance, both sending and receiving devices can optionally include camera functionalities. However in some cases, camera functionalities can optionally not be included and only electronic touch messages are available for creation.

Turning now to FIG. 9, the device 600 can optionally receive message data 704 including visual information 706, such as visual representation corresponding to a touch input received at an external device, with or without captured camera image data such as a video recording or picture. The visual information can optionally be capable of playback over time and received from the contact 632, such as an address book contact. In some embodiments, the visual information includes a recorded video and a visual representation corresponding to a touch input received at an external device associated with the contact, where displaying the looped playback of the visual information includes overlaying a looped playback of the video recording with a looped playback of the visual representation. In some embodiments, playback of the visual representation and playback of the recorded video is performed simultaneously. In another aspect, playback of the visual representation is based on its characteristic kinematics and/or characteristic intensity and includes pauses so that the visual representation is displayed at certain frames of video.

In some embodiments, the visual information includes a still image and a visual representation corresponding to a touch input received at an external device associated with the contact 632. In that case, displaying the looped playback of the visual information includes overlaying the still image with a looped playback of the visual representation. In other examples, the visual information includes an encoded video, wherein the encoded video includes a visual representation of a touch input detected at an external device associated with the contact and at least one of a still image and a recorded video captured at the external device. For example, the visual representation is flattened on the still image and/or the recorded video during an encoding process.

In another example, the message data 704 includes audio information. In that case, the device 600 displays a sound affordance 708 in the enlarged drawing area or overlaid on the visual information displayed in the text message transcript. The device 600 can optionally detect a user input on the sound affordance 708 and in response to detecting the user input, cause output of the audio information through a speaker. For example, the sound information can optionally be output through a speaker at the electronic device 600, or in communication with the electronic device 600. Output of the audio information can optionally begin at a portion of the audio information that corresponds to a currently displayed frame if the message data is looped. In another example, audio information can optionally be output in response to detecting a user gesture (e.g., press-and-hold) on the displayed visual information in the message transcript. In another example, the audio information can optionally be played back automatically during playback of the visual information 706.

As shown at FIG. 9, the device 600 can optionally display the message data 704 including the visual information 704 in the text messaging user interface 640 of a messaging application. The text messaging user interface includes the text message transcript 638 associated with the contact 632. Displaying the message data 704 including the visual information 706 includes displaying a looped playback of the visual information 706 in the text message transcript 638, for example by automatically looping the visual information 706 in the text message transcript area 638 when the user views the text message transcript 638. In some embodiments, in response to detecting a user request on the keep affordance 642 to retain display of the visual information 706 of the message data 704 in the text message transcript 638, the device 600 can optionally maintain display of the visual information 706 in the text message transcript 638. In some embodiments, in accordance with the determination that the status of the message data including the visual information 706 does not meet the display criteria, the device 600 removes the visual information 706 from the text message transcript 638. For example, the device 600 can optionally completely remove the visual information 704 from display in the text message transcript 638 when the message data expires. In some examples, no user interaction with the visual information 706 has been detected for a predetermined period of time after the user initially accessed or viewed the visual information.

As demonstrated in FIG. 9, detecting user selection of the looped playback of the visual information 706 in the text message transcript638 causes the device 600 to replace display of the text messaging user interface 640 with display of the enlarged, full-screen drawing area 606, where looped playback of the visual representation 706 is displayed in the enlarged drawing area. For example, a recipient can optionally continue playback or looped playback in the enlarged drawing area, which can optionally permit the user to view a larger version of the received data. In another example, while displaying the enlarged drawing area, the device 600 detects a user request to reply to the contact 638. In response to detecting the user request, the device 600 replaces display of the visual information 706 in the enlarged drawing area with a blank drawing canvas in the enlarged drawing area. Other examples are possible.

In some embodiments, in accordance with a determination that a status of the message data 704 including the visual information 706 meets a display criteria, the device 600 maintains the looped playback of the visual information in the text message transcript. For example, such criteria can optionally include the message data is a most recent sent or received visual information communication with the contact 638 and/or the message data has not yet expired. In some examples, the device 600 determines whether the status of the message data 704 meets the display criteria. The display criteria includes a criterion that is met when the message data 704 is a most-recently-communicated message data in the text message transcript 638 with the contact 632. For example, the message data was the latest that was sent or received. For example, while looping playback of the visual information, if subsequent visual information is received at or sent by the electronic device, then the device 600 can optionally cease looped playback of the visual information 706 and display the received subsequent data by looping playback of the subsequent visual information.

In another embodiment, the display criteria include a criterion that is met when the message data has not yet expired. For example, the device 600 determines whether an expiration period has elapsed, where the expiration period initiates when the user initially views the message data 704 in the text message transcript 638. In some examples, the expiration period is two minutes.

In a further example, in accordance with a determination that a status of the message data including the visual information does not meet the display criteria, the device 600 ceases displaying the looped playback of the visual information in the text message transcript 638. For example, the message data 704 can optionally no longer be a most recently-received data and/or the expiration period elapsed. In that case, looping is ceased in order to conserve power and/or memory at the device 600. In that case, the device 600 can optionally remove the message data 704 from the text message transcript 638 and/or replace the looped playback with a still image representing the message data. For example, in accordance with the determination that the status of the message data including the visual information does not meet the display criteria, the device 600 can optionally replace the looped playback of the visual information 706 with a still image of the visual information 706. For example, a still frame of the looped playback is displayed when the status no longer meets the criterion for most-recently-communicated message data but the status meets the criterion for not-yet-expired. In another example, upon detecting user selection of the still image of the visual information in the text message transcript; and in response to detection of the user selection, the device 600 can optionally replace display of the text messaging user interface 640 with display of the enlarged drawing area, where looped playback of the visual representation is displayed in the enlarged drawing area. In that case, in response to user selection of the still frame, the device 600 can optionally resume display of a playback or looped playback in the enlarged drawing area. Playback of the visual information 706 can optionally be paused while in the enlarged drawing area. Further, an exit affordance 702 on the visual information can optionally allow the user to return to a blank canvas to respond to the contact 632. Other examples can optionally be contemplated.

In some examples, the message data 704 including the visual information 706 is received by the device 600 and presented in the text message transcript as a static image or as a graphical affordance that is selectable. The static image can optionally include a single frame that is based on the visual information, where the single frame can optionally include the first touch input and/or a video or image based on camera image data. Upon user selection of the static image (e.g., tap on the still image, press-and-hold gesture on the still image), the device can initiate playback of the visual information with or without audio information being output. In some examples, a looped playback is initiated where the visual information loops in the text message transcript. In some examples, a single playback is initiated in the text message transcript and subsequent playbacks require subsequent user inputs (e.g., subsequent user taps) on the static image. In some examples, the looped playback is maintained if a subsequent user input on the looped playback is not detected. For example, the subsequent user input can optionally include a subsequent tap on the looped playback that stops the playback and replaces the playback with a still image, which can correspond to a frame in the playback that was stopped. In some examples the tap on the still image initiates playback of the visual information in the text message interface, while a distinct user input (e.g., a tap-and-hold gesture) opens the playback of the visual information in the full-screen drawing area view. In some cases, the still image fades or disappears from the text message transcript after expiration time period elapses (e.g., after the message data expires). In practice, providing the static, still image representative of playback of the visual information can conserve power at the mobile device.

Turning now to FIG. 13, a flow diagram illustrates a method for electronic touch communications using an electronic device in accordance with some embodiments. Method 1300 is performed at a device (e.g., 100, 300, 500, 600) with a touch-sensitive display screen and a camera. Some operations in method 1300 are, optionally, combined, the order of some operations is, optionally, changed, and some operations are, optionally, omitted.

As described below, method 1300 provides an intuitive way for electronic communications with video and/or still image. The method reduces the cognitive burden on a user for electronic communications, thereby creating a more efficient human-machine interface. For battery-operated computing devices, enabling a user to communicate electronically in a faster and more efficient manner conserves power and increases the time between battery charges.

As shown in the method 1300, the device (1302) receives, at the electronic device (e.g., device 600), message data including a visual information capable of playback over time from a contact. The device (1304) displays, on the touch-sensitive display screen (e.g., display screen 602), the message data including the visual information in a text messaging user interface of a messaging application, wherein the text messaging user interface includes a text message transcript associated with the contact, further wherein displaying the message data including the visual information comprises displaying a looped playback of the visual information in the text message transcript. The device (1306), in accordance with a determination that a status of the message data including the visual information meets a display criteria, maintains the looped playback of the visual information in the text message transcript. The device (1308), in accordance with a determination that a status of the message data including the visual information does not meet the display criteria, ceases displaying the looped playback of the visual information in the text message transcript.

In some embodiments, the display criteria include a criterion that is met when the message data is a most-recently-communicated message data in the text message transcript with the contact.

In some embodiments, the display criteria include a criterion that is met when the message data has not yet expired.

In some embodiments, the device determines whether the status of the message data meets the display criteria.

In some embodiments, the device, in accordance with the determination that the status of the message data including the visual information does not meet the display criteria, replaces the looped playback of the visual information with a still image of the visual information.

In some embodiments, the device detects user selection of the still image of the visual information in the text message transcript; and in response to detection of the user selection, replaces display of the text messaging user interface with display of an enlarged drawing area, wherein looped playback of the visual representation is displayed in the enlarged drawing area.

In some embodiments, the device, in response to detecting a user request to retain display of the visual information of the message data in the text message transcript, maintains display of the visual information in the text message transcript.

In some embodiments, the device, in accordance with the determination that the status of the message data including the visual information does not meet the display criteria, removes the visual information from the text message transcript.

In some embodiments, the device detects user selection of the looped playback of the visual information in the text message transcript; and in response to detection of the user selection, replaces display of the text messaging user interface with display of an enlarged drawing area, wherein looped playback of the visual representation is displayed in the enlarged drawing area.

In some embodiments, the device, while displaying the enlarged drawing area, detects a user request to reply to the contact; and in response to detecting the user request, replaces display of the visual information in the enlarged drawing area with a blank drawing canvas in the enlarged drawing area.

In some embodiments, wherein the message data further comprises audio information, the device displays a sound affordance; detects a user input on the sound affordance; and in response to detecting the user input, causes output of the audio information through a speaker.

In some embodiments, the visual information comprises a recorded video and a visual representation corresponding to a touch input received at an external device (e.g., device 600) associated with the contact, further wherein displaying the looped playback of the visual information includes overlaying a looped playback of the video recording with a looped playback of the visual representation.

In some embodiments, the visual information includes a still image and a visual representation corresponding to a touch input received at an external device (e.g., device 600) associated with the contact, further wherein displaying the looped playback of the visual information includes overlaying the still image with a looped playback of the visual representation.

In some embodiments, the visual information includes an encoded video, wherein the encoded video includes a visual representation of a touch input detected at an external device (e.g., device 600) associated with the contact and at least one of a still image and a recorded video captured at the external device (e.g., device 600).

Note that details of the processes described above with respect to method 1300 (e.g., FIG. 13) are also applicable in an analogous manner to the methods described above. For example, methods 1000-1200 optionally include one or more of the characteristics of the various methods described above with reference to method 1300. For brevity, these details are not repeated below.

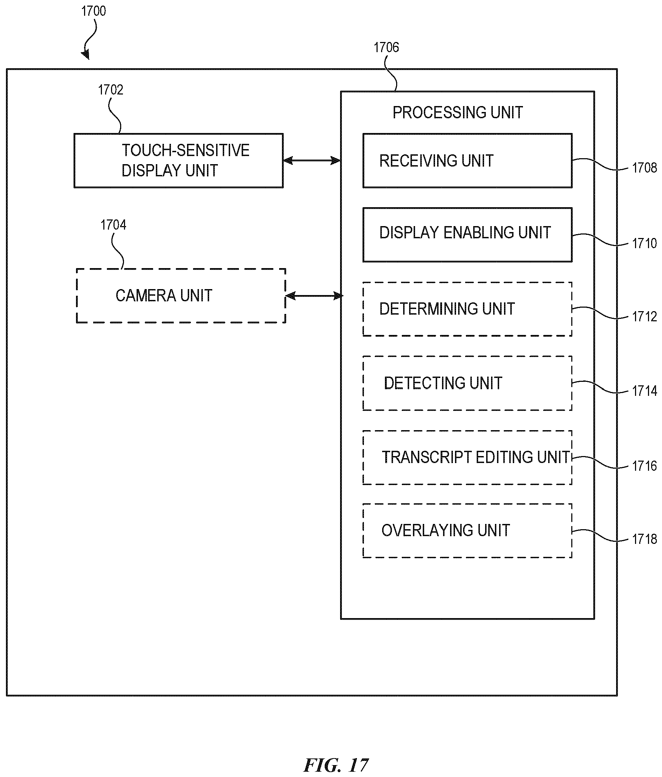

Turning now to FIG. 17, in accordance with some embodiments, FIG. 17 shows an exemplary functional block diagram of an electronic device 1700 configured in accordance with the principles of the various described embodiments. In accordance with some embodiments, the functional blocks of electronic device 1700 are configured to perform the techniques described above. The functional blocks of the device 1700 are, optionally, implemented by hardware, software, or a combination of hardware and software to carry out the principles of the various described examples. It is understood by persons of skill in the art that the functional blocks described in FIG. 17 are, optionally, combined or separated into sub-blocks to implement the principles of the various described examples. Therefore, the description herein optionally supports any possible combination or separation or further definition of the functional blocks described herein.

As shown in FIG. 17, an electronic device 800 includes a touch-sensitive display unit 1702 configured to display a graphic user interface, optionally, a camera unit 1704, and a processing unit 1706 coupled to the display unit 1702 and, optionally, the camera unit 1704. In some embodiments, the processing unit 1706 includes a receiving unit 1708, a display enabling unit 1710, and optionally: a determining unit 1712, a detecting unit 1714, a transcript editing unit 1716, and an overlaying unit 1718.

The processing unit 1706 is configured to: receive (e.g., with receiving unit 1706), at the electronic device, message data including visual information capable of playback over time from a contact. The processing unit 1706 is further configured to: enable display (e.g., with display enabling unit 1710) of, on the touch-sensitive display unit, the message data including the visual information in a text messaging user interface of a messaging application, wherein the text messaging user interface includes a text message transcript associated with the contact, further wherein displaying the message data including the visual information comprises displaying a looped playback of the visual information in the text message transcript. The processing unit 1706 is further configured to: in accordance with a determination that a status of the message data including the visual information meets a display criteria, maintain (e.g., with display enabling unit 1710) the looped playback of the visual information in the text message transcript. The processing unit 1706 is further configured to: in accordance with a determination that a status of the message data including the visual information does not meet the display criteria, cease displaying (e.g., with display enabling unit 1710) the looped playback of the visual information in the text message transcript.

In some embodiments, the display criteria include a criterion that is met when the message data is a most-recently-communicated message data in the text message transcript with the contact.

In some embodiments, the display criteria include a criterion that is met when the message data has not yet expired.

In some embodiments, the processing unit 1706 is further configured to: determine (e.g., with determining unit 1712) whether the status of the message data meets the display criteria.

In some embodiments, the processing unit 1706 is further configured to: in accordance with the determination that the status of the message data including the visual information does not meet the display criteria, replace (e.g., with display enabling unit 1710) the looped playback of the visual information with a still image of the visual information.

In some embodiments, the processing unit 1706 is further configured to: detect (e.g., with detecting unit 1714) user selection of the still image of the visual information in the text message transcript; and

In some embodiments, the processing unit 1706 is further configured to: in response to detection of the user selection, replace display (e.g., with display enabling unit 1710) of the text messaging user interface with display of an enlarged drawing area, wherein looped playback of the visual representation is displayed in the enlarged drawing area.

In some embodiments, the processing unit 1706 is further configured to: in response to detecting a user request to retain display of the visual information of the message data in the text message transcript, maintain display (e.g., with display enabling unit 1716) of the visual information in the text message transcript.

In some embodiments, the processing unit 1706 is further configured to: in accordance with the determination that the status of the message data including the visual information does not meet the display criteria, remove (e.g., with transcript editing unit 1716) the visual information from the text message transcript.

In some embodiments, the processing unit 1706 is further configured to: detect user selection of the looped playback of the visual information in the text message transcript; and in response to detection of the user selection, replace (e.g., display enabling unit 1710) display of the text messaging user interface with display of an enlarged drawing area, wherein looped playback of the visual representation is displayed in the enlarged drawing area.

In some embodiments, the processing unit 1706 is further configured to: while displaying the enlarged drawing area, detect a user request to reply to the contact; and in response to detecting the user request, replace display (e.g., display enabling unit 1710) of the visual information in the enlarged drawing area with a blank drawing canvas in the enlarged drawing area.

In some embodiments, the message data further comprises audio information, and the processing unit 1706 is further configured to: enable display (e.g., display enabling unit 1710) of a sound affordance; detect a user input on the sound affordance; and in response to detecting the user input, cause output of the audio information through a speaker.

In some embodiments, the visual information comprises a recorded video and a visual representation corresponding to a touch input received at an external device associated with the contact, further wherein displaying the looped playback of the visual information includes overlaying (e.g., with overlaying unit 1718) a looped playback of the video recording with a looped playback of the visual representation.

In some embodiments, the visual information includes a still image and a visual representation corresponding to a touch input received at an external device associated with the contact, further wherein displaying the looped playback of the visual information includes overlaying (e.g., with overlaying unit 1718) the still image with a looped playback of the visual representation.

In some embodiments, the visual information includes an encoded video, wherein the encoded video includes a visual representation of a touch input detected at an external device associated with the contact and at least one of a still image and a recorded video captured at the external device.

The operations described above with reference to FIG. 13 are, optionally, implemented by components depicted in FIGS. 1A-1B or FIG. 17. For example, receiving operation 1302, and displaying operations 1304, 1306, and 1308 are, optionally, implemented by event sorter 170, event recognizer 180, and event handler 190. Event monitor 171 in event sorter 170 detects a contact on touch-sensitive display 112, and event dispatcher module 174 delivers the event information to application 136-1. A respective event recognizer 180 of application 136-1 compares the event information to respective event definitions 186, and determines whether a first contact at a first location on the touch-sensitive surface corresponds to a predefined event or sub event, such as activation of an affordance on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in FIGS. 1A-1B.

Exemplary methods, non-transitory computer-readable storage media, systems and electronic devices are set out in the following items:
1. A method, comprising:
   at an electronic device having a touch-sensitive display and a camera:
   displaying, on the touch-sensitive display, a drawing area, wherein the drawing area includes a digital viewfinder that presents camera image data received from the camera;
   while displaying the drawing area, detecting a first touch input, at a first location in the drawing area, representing a first stroke;
   in response to detecting the first touch input, displaying a visual representation, at the first location in the drawing area, of the first stroke;
   while displaying the drawing area, detecting a user request to capture the camera image data presented in the digital viewfinder;
   in response to detecting the user request, capturing the camera image data presented in the digital viewfinder ; and
   sending data representing the captured camera image data and the first stroke to an external device, wherein the sent data indicates a portion of the captured camera image data that corresponds to the first location of the first stroke.
2. The method of item 1, further comprising, associating the captured camera image data with the first location of the first stroke.
3. The method of items 1 or 2, further comprising, associating the first stroke with a tracked point in the digital viewfinder that corresponds to the first location of the first stroke.
4. The method of any of items 1-3, further comprising,
   while capturing the camera image data:
   in accordance with a determination that the tracked point associated with the first stroke is displayed in the digital viewfinder, displaying the visual representation of the first stroke in the drawing area at the tracked point; and
   in accordance with a determination that the tracked point associated with the first stroke is not displayed in the digital viewfinder, ceasing to display the visual representation of the first stroke.
5. The method of any of items 1-4, further comprising:
   while capturing the camera image data:
   associating the first stroke with a compass point indicative of a first viewing direction of the digital viewfinder, wherein the compass point is based on a compass direction detected at the electronic device;
   in accordance with a determination that the first viewing direction is displayed in the digital viewfinder, displaying the visual representation of the first stroke in the drawing area at a position corresponding to the compass point; and
   in accordance with a determination that the first viewing direction is not displayed in the digital viewfinder, ceasing to display the visual representation of the first stroke in the drawing area.
6. The method of any of items 1-5, wherein the first stroke includes characteristic kinematics based on the detected first touch input, and the visual representation of the first stroke includes the characteristic kinematics.
7. The method of any of items 1-6, wherein the first stroke includes a characteristic intensity based on the detected first touch input, and the visual representation of the first stroke is based on the characteristic intensity.
8. The method of any of items 1-7, wherein the first touch input is detected prior to capturing the camera image data presented in the digital viewfinder, the method further comprising:
   maintaining display of the visual representation of the first stroke at the first location in the drawing area while capturing the camera image data presented in the digital viewfinder.
9. The method of any of items 1-7, wherein the first touch input is detected prior to capturing the camera image data presented in the digital viewfinder, the method further comprising:
   maintaining display of the visual representation of the first stroke at the first location in the drawing area for a partial duration of time while capturing the camera image data presented in the digital viewfinder.
10. The method of any of items 1-7, wherein the first touch input is detected while capturing the camera image data presented in the digital viewfinder, and wherein capturing the camera image data comprises recording a video of the camera image data presented in the digital viewfinder, the method further comprising:
   displaying the visual representation of the first stroke at the first location in the drawing area for at least a period of time while capturing the camera image data presented in the digital viewfinder.
11. The method of any of items 1-7, wherein the first touch input is detected while displaying the captured camera image data in the drawing area, wherein the displayed captured camera image data includes at least one of a still image captured by the camera and a playback of a video recorded by the camera.
12. The method of item 11, wherein the playback of the video is a looped playback of the video.
13. The method of any of items 6-12, further comprising, displaying, on touch-sensitive display, a playback of the visual representation of the first stroke at the first location in the drawing area.
14. The method of any of items 6-12, wherein the playback of the visual representation is a looped playback of the visual representation.
15. The method of any of items 11-14, further comprising:
   ceasing capturing the camera image data; and
   after ceasing capturing the camera image data:
      replacing the displayed digital viewfinder in the drawing area, and
      displaying a preview based on overlaying the playback of the visual representation on the displayed captured camera image data.
16. The method of item 15, wherein displaying the preview includes maintaining display of the visual representation at the first location for a duration of a single loop of the captured camera image data.
17. The method of item 15, wherein displaying the preview includes displaying the visual representation at the first location for at least a partial duration of a single loop of the captured camera image data.
18. The method of any of items 1-17, wherein the visual representation of the first stroke is displayed with a color corresponding to a selected color affordance.
19. The method of any of items 1-17, further comprising:
   after detecting the first touch input, detecting a second touch input, at a second location in the drawing area, representing a second stroke, wherein the first touch input and the second touch input are separated by an intervening amount of time; and
   in response to detecting the second touch input, displaying the visual representation, at the second location in the drawing area, of the second stroke.
20. The method of item 19, further comprising:
   displaying a preview comprising the captured camera image data, the visual representation of the first stroke at the first location, and the visual representation of the second stroke at the second location, wherein the visual representation of the first stroke and the visual representation of the second stroke are displayed in the preview in an order that their corresponding first touch input and second touch input were detected in the drawing area.
21. The method of item 20, wherein the captured camera image data comprises a video, further wherein displaying the preview comprises looping playback of the visual representation of the first stroke and the visual representation of the second stroke with the intervening amount of time over a looped playback of the video.
22. The method of any of items 1-21, wherein the visual representation of the first stroke comprises an animated graphic that is displayed in accordance with one or more a characteristics selected from the group consisting of a characteristic intensity, a characteristic kinematic, and a duration of the corresponding first touch input or second touch input.
23. The method of item 22, wherein the animated graphic is a beating heart.
24. The method of item 22, wherein the animated graphic is a breaking heart.
25. The method of item 22, wherein the animated graphic is a fireball.
26. The method of any of items 1-21, wherein the visual representation of the first stroke comprises a still graphic that is displayed in accordance with an orientation of the corresponding first touch input or the corresponding second touch input.
27. The method of item 26, further wherein the still graphic is a heart.
28. The method of item 26, further wherein the still graphic is a kiss.
29. The method of item 26, further wherein the still graphic is a tear drop.
30. The method of any of items 1-21, wherein the visual representation of the first stroke includes a first endpoint corresponding to an initiation of the first touch input, a second endpoint corresponding to liftoff termination of the first touch input, and a line corresponding to movement of the first touch input across the touch-sensitive display, wherein display of the visual representation of the line includes displaying characteristic kinematics of the movement of the first touch input from the first endpoint to the second endpoint.
31. The method of any of items 1-30, further comprising:
   displaying a send affordance in the drawing area;
   detecting a third touch input corresponding to selection of the send affordance;
   wherein sending data representing the captured camera image data and the first stroke to the external device occurs in in response to detecting the third touch input.
32. The method of any of items 1-31, further comprising,
   prior to sending data representing the captured camera image data and the first stroke to the external device and in accordance to a determination of a status of at the external device, encoding the captured camera image data with the visual representation of the first stroke;
   wherein sending data representing the captured camera image data and the first stroke to the external device includes sending the encoded captured camera image data.
33. The method of any of items 1-32, further comprising,
   displaying, on the touch-sensitive display screen at the electronic device, a text messaging user interface associated with a contact of the external device, wherein the text messaging user interface includes a message transcript area associated with the contact; and
   displaying at least a portion of the sent data, in the message transcript area.
34. The method of item 33, further comprising,
   looping playback, in the message transcript area, of the at least a portion of the sent data while the at least a portion of the sent data is a most recent data communication in the message transcript area that includes a visual representation of a touch input; and
   in response to a determination that the at least a portion of the sent data is no longer the most recent data communication comprising the visual representation of the touch input, ceasing looping playback of the at least a portion of the sent data and replacing the looped playback with a still frame based on the at least a portion of the sent data.
35. The method of any of items 29 and 30, further comprising, in response to a determination that the at least a portion of the sent data has been provided in the message transcript area for a predetermined period of time, removing display of the at least a portion of the sent data from the message transcript area.
36. A method, comprising:
   at an electronic device having a touch-sensitive display and a camera:
   displaying, on the touch-sensitive display, an image in a digital viewfinder, wherein the image is based on camera image data received from the camera;
   detecting a first touch input at a first location in the digital viewfinder;
   in response to detecting the first touch input and in accordance with a determination that the first touch input is detected while an operational mode of the camera is a recording mode, displaying, in the digital viewfinder, a visual representation corresponding to the first touch input at the first location; and
   in response to detecting the first touch input and in accordance with a determination that the first touch input is detected while an operational mode of the camera is a non-recording mode, altering the image displayed in the digital viewfinder by adjusting a characteristic of the camera image data.
37. The method of item 36, further comprising, determining whether the first touch input is detected while the operational mode of the camera is the recording mode or the non-recording mode.
38. The method of any of items 36 and 37, wherein the first touch input is a single-finger input and the characteristic is a focus of the camera image data.
39. The method of any of items 36 and 37, wherein the first touch input is a multiple-finger input and the characteristic is an optical magnification of the camera image data.
40. The method of any of items 36 and 37, wherein the visual representation is displayed in the digital viewfinder for a duration of the first touch input and fades upon detection of lift-off of the first touch input.
41. The method of any of items 36 and 37, wherein the visual representation is displayed in the digital viewfinder for a predetermined period of time before fading.
42. The method of any of items 36 and 37, wherein the visual representation is maintained in the digital viewfinder while the digital viewfinder is displayed.
43. The method of any of items 36, 37, and 40-42, wherein the visual representation includes an animation based on characteristic kinematics of the first touch input.
44. The method of any of items 36, 37, and 40-43, wherein the visual representation includes an animation based on characteristic intensity of the first touch input.
45. The method of any of items 36, 37, and 40-44, wherein displaying the visual representation includes looping playback of the visual representation.
46. The method of any of items 36, 37, and 40-45, wherein displaying the visual representation includes outputting at least one of an audio output and a haptic output associated with the visual representation.
47. The method of any of items 36, 37, and 40-46, wherein the first touch input is a single-finger tap at the first location in the digital viewfinder and the visual representation is at least one of a circle, an ellipses, and an oval at the first location.
48. The method of any of items 36, 37, and 40-46, wherein the first touch input is a single-finger hold that exceeds a predetermined duration and the visual representation is a teardrop at the first location of the first touch input.
49. The method of any of items 36, 37, and 40-46, wherein the first touch input is a single-finger contact having characteristic kinematics describing a movement of the single-finger contact beginning at the first location in the digital viewfinder and the visual representation is a line beginning at the first location with the characteristic kinematics.
50. The method of any of items 36, 37, and 40-46, wherein the first touch input is a multiple-finger contact in the digital viewfinder and the visual representation is centered at the first location between touch contacts of the multiple-finger contact.
51. The method of item 50, wherein the visual representation is oriented along an angle defined by the touch contacts on the touch-sensitive display.
52. The method of any of items 36, 37, 40-46, 50, and 51, wherein the multiple-finger contact is a two-finger contact on the touch-sensitive display and the visual representation is a kiss that is displayed at the first location for a duration of the two-finger contact and fades upon lift-off of the two-finger contact.
53. The method of any of items 36, 37, 42-46, 50, and 51, wherein the multiple-finger contact is a two-finger double-tap contact on the touch-sensitive display and the visual representation is a stamped image at the first location that is angled according to the angle defined by the two-finger contact, further wherein the stamped image does not fade from display of the image in the digital viewfinder.
54. The method of item 53, wherein the stamped image is a stamped kiss.
55. The method of any of items 36, 37, 40-46, 50, and 51, wherein the operational mode is the recording mode, further wherein the first touch input includes a varying characteristic intensity that fluctuates based on a varying intensity of the first touch input on the touch-sensitive display, the method further comprising:
   displaying the visual representation at the first location, wherein the visual representation is the animated graphic that is rendered according to the varying characteristic intensity of the first touch input at the first location.
56. The method of item 55, wherein the first touch input corresponds to a press-and-hold input with the varying characteristic intensity at the first location and the visual representation is an animated fireball having a variable color scheme and size that are scaled in accordance with the varying characteristic intensity of the press-and-hold input.
57. The method of any of items 36, 37, 40-46, 50, 51, and 21, wherein the visual representation is a beating heart that loops for a duration of the first touch input.
58. The method of any of items 36, 37, 40-46, 50, 51, and 20, wherein the visual representation is a multiple-part animation having at least a first part and a second part, wherein the first part is based on a first detected aspect of the first touch input and the second part is distinct from the first part and is based on a subsequently detected aspect of the first touch input.
59. The method of item 58, further wherein the multiple-part animation is a breaking heart animation, wherein:
   displaying the first part includes looping a beating heart animation at the first location for a duration of time corresponding to the first touch input on the touch-sensitive display at the first location, and
   displaying the second part includes ceasing looping of the beating heart animation and replacing the beating heart animation with display of a breaking heart animation based on the subsequently detected aspect, wherein the subsequently detected aspect is a movement of the first touch input that meets a predefined distance threshold.
60. A method, comprising:
   at an electronic device having a touch-sensitive display and a camera:
   displaying, on the touch-sensitive display, a text messaging user interface associated with a contact, wherein the text messaging user interface includes:
      a message transcript area, and
      a compact drawing area, wherein the compact drawing area includes an expand affordance corresponding to an enlarged drawing area;
   detecting a first user input corresponding to the expand affordance;
   in response to detecting the first user input, replacing the displayed text messaging interface with display of the enlarged drawing area, wherein the enlarged drawing area includes a camera affordance,
   detecting a second user input corresponding to the camera affordance; and
   in response to detecting the second user input, displaying a digital viewfinder, in the enlarged drawing area, that presents camera image data received from the camera.
61. The method of item 60, further comprising,
   detecting user input on an affordance representing the compact drawing area in the text messaging user interface; and
   in response to detecting the user input on the affordance, displaying the compact drawing area in the text messaging user interface.
62. The method of any of items 60 and 61, wherein the affordance representing the compact drawing area is displayed in a menu bar of the text messaging user interface, further wherein the menu bar includes a camera affordance corresponding to a camera roll, a text entry field corresponding to a soft keyboard for composing a textual message to the contact, and a record audio affordance that initiates recording of an audio message to the contact.
63. The method of item 62, further comprising,
   receiving an input corresponding to a request to display the soft keyboard;
   in response to the user request to display the soft keyboard, ceasing to display the compact drawing area; and
   displaying the soft keyboard.
64. The method of any of items 60-63, wherein the text messaging user interface includes at least a first portion and a second portion displayed below the first portion, wherein the message transcript area is displayed in the first portion and the compact drawing area is displayed in the second portion.
65. The method of any of items 60-64, wherein the enlarged drawing area includes a minimize affordance, the method further comprising,
   in response to detecting user input on the minimize affordance, replacing display of the enlarged drawing area with display of the text messaging user interface.
66. The method of item 65, further comprising:
   in response to detecting user input on the minimize affordance, displaying the compact drawing area.
67. The method of any of items 60-66, wherein the enlarged drawing area includes an enlarged drawing canvas and the compact drawing canvas includes a compact drawing area, wherein the enlarged drawing canvas and the compact drawing canvas have a common aspect ratio.
68. The method of any of items 60-67, further comprising,
   displaying a text entry field in the enlarged drawing area;
   in response to detection of user input on the text entry field, displaying a soft keyboard in the enlarged drawing area; and
   in response to detecting a set of user inputs on the soft keyboard corresponding to composition of a textual message and a request to send the textual message, composing a textual message and sending the textual message to the contact while maintaining display of the enlarged drawing area.
69. The method of any of items 60-68, further comprising,
   displaying a legend of one or more indicators in the compact drawing area, wherein each indicator represents a type of touch input and a visual representation corresponding to the type of touch input.
70. The method of any of items 60-69, wherein the enlarged drawing area and the compact drawing area include display of a plurality of color affordances and an indicator representing a currently-selected color affordance.
71. The method of item 70, further comprising,
   in response to detecting a user input on any one of the plurality of color affordances, wherein the user input corresponds to changing a color represented by the color affordance, displaying a color selection interface, wherein the color selection interface includes a plurality of selectable colors; and
   in response to detecting user input corresponding to selecting of a color of the plurality of colors, updating the color affordance with the selected color.
72. The method of item 71, wherein the color adjustment interface includes a brightness adjustment affordance.
73. The method of any of items 60-72, further comprising,
   detecting a first touch input, at a first location in the compact drawing area, representing a first stroke;
   in response to detecting the first touch input, displaying a visual representation, at the first location in the compact drawing area, of the first stroke; and
   automatically sending data corresponding to the visual representation of the first stroke to an external device associated with the contact.
74. The method of any of items 60-73, wherein the camera affordance is displayed at a first brightness level, the method further comprising,
   while displaying the enlarged drawing area, in response to detecting a third user input in the enlarged drawing area, dimming the camera affordance to a second brightness level less than the first brightness level; and
   after a predetermined period of time has elapsed since cessation of the third user input, restoring the camera affordance to the first brightness level.
75. The method of any of items 60-74, further comprising,
   while displaying the digital viewfinder in the enlarged drawing area, displaying,
   a record video affordance that toggles on and off recording a video based on the camera image data presented in the digital viewfinder,
   a still image capture affordance that takes a picture based on the camera image data presented in the digital viewfinder, and
   a camera flip affordance that toggles activation of a front or back camera.
76. The method of item 75, further comprising,
   in response to user selection of the record video affordance that toggles on recording of the video, displaying a countdown timer representing a remaining time until recording automatically ceases.
77. The method of any of items 75 and 76, further comprising,
   in response to user selection of the record video affordance that toggles on recording of the video, displaying an animated progress bar that fills horizontally indicating remaining duration until recording automatically ceases.
78. The method of any of items 60-77, further comprising, upon detection of user input on a displayed exit affordance corresponding to the digital viewfinder, ceasing displaying of the digital viewfinder in the enlarged drawing area and replacing the digital viewfinder with an enlarged drawing canvas.
79. A method, comprising:
   at an electronic device having a touch-sensitive display:
   receiving, at the electronic device, message data including a visual information capable of playback over time from a contact;
   displaying, on the touch-sensitive display, the message data including the visual information in a text messaging user interface of a messaging application, wherein the text messaging user interface includes a text message transcript associated with the contact, further wherein displaying the message data including the visual information comprises displaying a looped playback of the visual information in the text message transcript;
   in accordance with a determination that a status of the message data including the visual information meets a display criteria, maintaining the looped playback of the visual information in the text message transcript; and
   in accordance with a determination that a status of the message data including the visual information does not meet the display criteria, ceasing displaying the looped playback of the visual information in the text message transcript.
80. The method of item 79, wherein the display criteria includes a criterion that is met when the message data is a most-recently-communicated message data in the text message transcript with the contact.
81. The method of any of items 79 and 80, wherein the display criteria includes a criterion that is met when the message data has not yet expired.
82. The method of any of items 79-81, further comprising, determining whether the status of the message data meets the display criteria.
83. The method of any of items 79-81, further comprising, in accordance with the determination that the status of the message data including the visual information does not meet the display criteria, replacing the looped playback of the visual information with a still image of the visual information.
84. The method of item 83, further comprising,
   detecting user selection of the still image of the visual information in the text message transcript; and
   in response to detection of the user selection, replacing display of the text messaging user interface with display of an enlarged drawing area, wherein looped playback of the visual representation is displayed in the enlarged drawing area.
85. The method of item any of items 79-84, further comprising, in response to detecting a user request to retain display of the visual information of the message data in the text message transcript, maintaining display of the visual information in the text message transcript.
86. The method of any of items 79-85, further comprising, in accordance with the determination that the status of the message data including the visual information does not meet the display criteria, removing the visual information from the text message transcript.
87. The method of any of items 79-86, further comprising,
   detecting user selection of the looped playback of the visual information in the text message transcript; and
   in response to detection of the user selection, replacing display of the text messaging user interface with display of an enlarged drawing area, wherein looped playback of the visual representation is displayed in the enlarged drawing area.
88. The method of item 87, further comprising,
   while displaying the enlarged drawing area, detecting a user request to reply to the contact; and
   in response to detecting the user request, replacing display of the visual information in the enlarged drawing area with a blank drawing canvas in the enlarged drawing area.
89. The method of item any of items 79-88, wherein the message data further comprises audio information, the method further comprising:
   displaying a sound affordance;
   detecting a user input on the sound affordance; and
   in response to detecting the user input, causing output of the audio information through a speaker.
90. The method of any of items 79-89, wherein the visual information comprises a recorded video and a visual representation corresponding to a touch input received at an external device associated with the contact, further wherein displaying the looped playback of the visual information includes overlaying a looped playback of the video recording with a looped playback of the visual representation.
91. The method of any of items 79-89, wherein the visual information includes a still image and a visual representation corresponding to a touch input received at an external device associated with the contact, further wherein displaying the looped playback of the visual information includes overlaying the still image with a looped playback of the visual representation.
92. The method of any of items 79-89, wherein the visual information includes an encoded video, wherein the encoded video includes a visual representation of a touch input detected at an external device associated with the contact and at least one of a still image and a recorded video captured at the external device.
93. An electronic device, comprising:
   a touch-sensitive display;
   a camera;
   one or more processors;
   a memory; and
   one or more programs, wherein the one or more programs are stored in the memory and configured to be executed by the one or more processors, the one or more programs including instructions for:
      displaying, on the touch-sensitive display, a drawing area, wherein the drawing area includes a digital viewfinder that presents camera image data received from the camera;
      while displaying the drawing area, detecting a first touch input, at a first location in the drawing area, representing a first stroke;
      in response to detecting the first touch input, displaying a visual representation, at the first location in the drawing area, of the first stroke;
      while displaying the drawing area, detecting a user request to capture the camera image data presented in the digital viewfinder;
      in response to detecting the user request, capturing the camera image data presented in the digital viewfinder ; and
      sending data representing the captured camera image data and the first stroke to an external device, wherein the sent data indicates a portion of the captured camera image data that corresponds to the first location of the first stroke.
94. An non-transitory computer readable storage medium storing one or more programs, the one or more programs comprising instructions, which when executed by one or more processors of an electronic device, cause the device to:
   display, on a touch-sensitive display, a drawing area, wherein the drawing area includes a digital viewfinder that presents camera image data received from a camera;
   while displaying the drawing area, detect a first touch input, at a first location in the drawing area, representing a first stroke;
   in response to detecting the first touch input, display a visual representation, at the first location in the drawing area, of the first stroke;
   while displaying the drawing area, detect a user request to capture the camera image data presented in the digital viewfinder;
   in response to detecting the user request, capture the camera image data presented in the digital viewfinder ; and
   send data representing the captured camera image data and the first stroke to an external device, wherein the sent data indicates a portion of the captured camera image data that corresponds to the first location of the first stroke.
95. An electronic device, comprising:
   a touch-sensitive display;
   a camera;
   means for displaying, on the touch-sensitive display, a drawing area, wherein the drawing area includes a digital viewfinder that presents camera image data received from the camera;
   means for, while displaying the drawing area, detecting a first touch input, at a first location in the drawing area, representing a first stroke;
   means for, in response to detecting the first touch input, displaying a visual representation, at the first location in the drawing area, of the first stroke;
   means for, while displaying the drawing area, detecting a user request to capture the camera image data presented in the digital viewfinder;
   means for, in response to detecting the user request, capturing the camera image data presented in the digital viewfinder; and
   means for sending data representing the captured camera image data and the first stroke to an external device, wherein the sent data indicates a portion of the captured camera image data that corresponds to the first location of the first stroke.
96. An electronic device, comprising:
   a touch-sensitive display;
   a camera;
   one or more processors;
   a memory; and
   one or more programs, wherein the one or more programs are stored in the memory and configured to be executed by the one or more processors, the one or more programs including instructions for:
      displaying, on the touch-sensitive display, an image in a digital viewfinder, wherein the image is based on camera image data received from the camera;
      detecting a first touch input at a first location in the digital viewfinder;
      in response to detecting the first touch input and in accordance with a determination that the first touch input is detected while an operational mode of the camera is a recording mode, displaying, in the digital viewfinder, a visual representation corresponding to the first touch input at the first location; and
      in response to detecting the first touch input and in accordance with a determination that the first touch input is detected while an operational mode of the camera is a non-recording mode, altering the image displayed in the digital viewfinder by adjusting a characteristic of the camera image data.
97. An non-transitory computer readable storage medium storing one or more programs, the one or more programs comprising instructions, which when executed by one or more processors of an electronic device, cause the device to:
   display, on a touch-sensitive display, an image in a digital viewfinder, wherein the image is based on camera image data received from a camera;
   detect a first touch input at a first location in the digital viewfinder;
   in response to detecting the first touch input and in accordance with a determination that the first touch input is detected while an operational mode of the camera is a recording mode, display, in the digital viewfinder, a visual representation corresponding to the first touch input at the first location; and
   in response to detecting the first touch input and in accordance with a determination that the first touch input is detected while an operational mode of the camera is a non-recording mode, alter the image displayed in the digital viewfinder by adjusting a characteristic of the camera image data.
98. An electronic device, comprising:
   a touch-sensitive display;
   a camera;
   means for displaying, on the touch-sensitive display, an image in a digital viewfinder, wherein the image is based on camera image data received from a camera;
   means for detecting a first touch input at a first location in the digital viewfinder;
   means for, in response to detecting the first touch input and in accordance with a determination that the first touch input is detected while an operational mode of the camera is a recording mode, display, in the digital viewfinder, a visual representation corresponding to the first touch input at the first location; and
   means for, in response to detecting the first touch input and in accordance with a determination that the first touch input is detected while an operational mode of the camera is a non-recording mode, alter the image displayed in the digital viewfinder by adjusting a characteristic of the camera image data.
99. An electronic device, comprising:
   a touch-sensitive display;
   a camera;
   one or more processors;
   a memory; and
   one or more programs, wherein the one or more programs are stored in the memory and configured to be executed by the one or more processors, the one or more programs including instructions for:
      displaying, on the touch-sensitive display, a text messaging user interface associated with a contact, wherein the text messaging user interface includes:
         a message transcript area, and
         a compact drawing area, wherein the compact drawing area includes an expand affordance corresponding to an enlarged drawing area;
      detecting a first user input corresponding to the expand affordance;
      in response to detecting the first user input, replacing the displayed text messaging interface with display of the enlarged drawing area, wherein the enlarged drawing area includes a camera affordance,
      detecting a second user input corresponding to the camera affordance; and
      in response to detecting the second user input, displaying a digital viewfinder, in the enlarged drawing area, that presents camera image data received from the camera.
100. An non-transitory computer readable storage medium storing one or more programs, the one or more programs comprising instructions, which when executed by one or more processors of an electronic device, cause the device to:
   display, on a touch-sensitive display, a text messaging user interface associated with a contact, wherein the text messaging user interface includes:
      a message transcript area, and
      a compact drawing area, wherein the compact drawing area includes an expand affordance corresponding to an enlarged drawing area;
   detect a first user input corresponding to the expand affordance;
   in response to detecting the first user input, replace the displayed text messaging interface with display of the enlarged drawing area, wherein the enlarged drawing area includes a camera affordance,
   detect a second user input corresponding to the camera affordance; and
   in response to detecting the second user input, display a digital viewfinder, in the enlarged drawing area, that presents camera image data received from a camera.
101. An electronic device, comprising:
   a touch-sensitive display;
   a camera;
   means for displaying, on the touch-sensitive display, a text messaging user interface associated with a contact, wherein the text messaging user interface includes:
      a message transcript area, and
      a compact drawing area, wherein the compact drawing area includes an expand affordance corresponding to an enlarged drawing area;
   means for detecting a first user input corresponding to the expand affordance;
   means for, in response to detecting the first user input, replacing the displayed text messaging interface with display of the enlarged drawing area, wherein the enlarged drawing area includes a camera affordance,
   means for detecting a second user input corresponding to the camera affordance; and
   means for, in response to detecting the second user input, displaying a digital viewfinder, in the enlarged drawing area, that presents camera image data received from the camera.
102. An electronic device, comprising:
   a touch-sensitive display;
   one or more processors;
   a memory; and
   one or more programs, wherein the one or more programs are stored in the memory and configured to be executed by the one or more processors, the one or more programs including instructions for:
      receiving, at the electronic device, message data including a visual information capable of playback over time from a contact;
      displaying, on the touch-sensitive display, the message data including the visual information in a text messaging user interface of a messaging application, wherein the text messaging user interface includes a text message transcript associated with the contact, further wherein displaying the message data including the visual information comprises displaying a looped playback of the visual information in the text message transcript;
      in accordance with a determination that a status of the message data including the visual information meets a display criteria, maintaining the looped playback of the visual information in the text message transcript; and
      in accordance with a determination that a status of the message data including the visual information does not meet the display criteria, ceasing displaying the looped playback of the visual information in the text message transcript.
103. An non-transitory computer readable storage medium storing one or more programs, the one or more programs comprising instructions, which when executed by one or more processors of an electronic device, cause the device to:
   receive, at the electronic device, message data including a visual information capable of playback over time from a contact;
   display, on a touch-sensitive display, the message data including the visual information in a text messaging user interface of a messaging application, wherein the text messaging user interface includes a text message transcript associated with the contact, further wherein displaying the message data including the visual information comprises displaying a looped playback of the visual information in the text message transcript;
   in accordance with a determination that a status of the message data including the visual information meets a display criteria, maintain the looped playback of the visual information in the text message transcript; and
   in accordance with a determination that a status of the message data including the visual information does not meet the display criteria, cease displaying the looped playback of the visual information in the text message transcript.
104. An electronic device, comprising:
   a touch-sensitive display;
   means for receiving, at the electronic device, message data including a visual information capable of playback over time from a contact;
   means for displaying, on the touch-sensitive display, the message data including the visual information in a text messaging user interface of a messaging application, wherein the text messaging user interface includes a text message transcript associated with the contact, further wherein displaying the message data including the visual information comprises displaying a looped playback of the visual information in the text message transcript;
   means for, in accordance with a determination that a status of the message data including the visual information meets a display criteria, maintaining the looped playback of the visual information in the text message transcript; and
   means for, in accordance with a determination that a status of the message data including the visual information does not meet the display criteria, ceasing displaying the looped playback of the visual information in the text message transcript.
105. An electronic device, comprising:
   one or more processors;
   memory; and
   one or more programs, wherein the one or more programs are stored in the memory and configured to be executed by the one or more processors, the one or more programs including instructions for performing any of the methods of items 1-92.
106. A non-transitory computer readable storage medium storing one or more programs, the one or more programs comprising instructions, which when executed by one or more processors of an electronic device, cause the device to perform any of the methods of items 1-92.
107. An electronic device, comprising:
   means for performing any of the methods of items 1-92.
108. An electronic device, comprising:
   a touch-sensitive display unit configured to display a graphic user interface;
   a camera unit; and
   a processing unit coupled to the touch-sensitive display unit and the camera unit, the processing unit configured to:
      enable display of, on the touch-sensitive display unit, a drawing area, wherein the drawing area includes a digital viewfinder that presents camera image data received from the camera unit;
      while displaying the drawing area, detect a first touch input, at a first location in the drawing area, representing a first stroke;
      in response to detecting the first touch input, enable display of a visual representation, at the first location in the drawing area, of the first stroke;
      while displaying the drawing area, detect a user request to capture the camera image data presented in the digital viewfinder;
      in response to detecting the user request, capture the camera image data presented in the digital viewfinder; and
      send data representing the captured camera image data and the first stroke to an external device, wherein the sent data indicates a portion of the captured camera image data that corresponds to the first location of the first stroke.
109. The electronic device of item 108, wherein the processing unit is further configured to associate the captured camera image data with the first location of the first stroke.
110. The electronic device of items 108 or 109, wherein the processing unit is further configured to associate the first stroke with a tracked point in the digital viewfinder that corresponds to the first location of the first stroke.
111. The electronic device of any of items 108-110, wherein the processing unit is further configured to:
   while capturing the camera image data:
   in accordance with a determination that the tracked point associated with the first stroke is displayed in the digital viewfinder, enable display of the visual representation of the first stroke in the drawing area at the tracked point; and
   in accordance with a determination that the tracked point associated with the first stroke is not displayed in the digital viewfinder, cease to enable display of the visual representation of the first stroke.
112. The electronic device of any of items 108-111, wherein the processing unit is further configured to:
   while capturing the camera image data:
   associate the first stroke with a compass point indicative of a first viewing direction of the digital viewfinder, wherein the compass point is based on a compass direction detected at the electronic device;
   in accordance with a determination that the first viewing direction is displayed in the digital viewfinder, enable display of the visual representation of the first stroke in the drawing area at a position corresponding to the compass point; and
   in accordance with a determination that the first viewing direction is not displayed in the digital viewfinder, cease to enable display of the visual representation of the first stroke in the drawing area.
113. The electronic device of any of items 108-112, wherein the first stroke includes characteristic kinematics based on the detected first touch input, and the visual representation of the first stroke includes the characteristic kinematics.
114. The electronic device of any of items 108-113, wherein the first stroke includes a characteristic intensity based on the detected first touch input, and the visual representation of the first stroke is based on the characteristic intensity.
115. The electronic device of any of items 108-114, wherein the first touch input is detected prior to capturing the camera image data presented in the digital viewfinder, wherein the processing unit is further configured to:
   maintain display of the visual representation of the first stroke at the first location in the drawing area while capturing the camera image data presented in the digital viewfinder.
116. The electronic device of any of items 108-114, wherein the first touch input is detected prior to capturing the camera image data presented in the digital viewfinder, wherein the processing unit is further configured to:
   maintain display of the visual representation of the first stroke at the first location in the drawing area for a partial duration of time while capturing the camera image data presented in the digital viewfinder.
117. The electronic device of any of items 108-114, wherein the first touch input is detected while capturing the camera image data presented in the digital viewfinder, and wherein capturing the camera image data comprises recording a video of the camera image data presented in the digital viewfinder, wherein the processing unit is further configured to:
   enable display of the visual representation of the first stroke at the first location in the drawing area for at least a period of time while capturing the camera image data presented in the digital viewfinder.
118. The electronic device of any of items 108-114, wherein the first touch input is detected while displaying the captured camera image data in the drawing area, wherein the displayed captured camera image data includes at least one of a still image captured by the camera and a playback of a video recorded by the camera.
119. The electronic device of item 118, wherein the playback of the video is a looped playback of the video.
120. The electronic device of any of items 113-119, wherein the processing unit is further configured to, enable display of, on touch-sensitive display unit, a playback of the visual representation of the first stroke at the first location in the drawing area.
121. The electronic device of any of items 113-119, wherein the playback of the visual representation is a looped playback of the visual representation.
122. The electronic device of any of items 118-121, wherein the processing unit is further configured to:
   cease capturing the camera image data; and
   after ceasing capturing the camera image data:
      replace the displayed digital viewfinder in the drawing area, and
      enable display of a preview based on overlaying the playback of the visual representation on the displayed captured camera image data.
123. The electronic device of item 122, wherein displaying the preview includes maintaining display of the visual representation at the first location for a duration of a single loop of the captured camera image data.
124. The electronic device of item 122, wherein displaying the preview includes displaying the visual representation at the first location for at least a partial duration of a single loop of the captured camera image data.
125. The electronic device of any of items 108-124, wherein the visual representation of the first stroke is displayed with a color corresponding to a selected color affordance.
126. The electronic device of any of items 108-124, wherein the processing unit is further configured to:
   after detecting the first touch input, detect a second touch input, at a second location in the drawing area, representing a second stroke, wherein the first touch input and the second touch input are separated by an intervening amount of time; and
   in response to detecting the second touch input, enable display of the visual representation, at the second location in the drawing area, of the second stroke.
127. The electronic device of item 126, wherein the processing unit is further configured to:
   enable display of a preview comprising the captured camera image data, the visual representation of the first stroke at the first location, and the visual representation of the second stroke at the second location, wherein the visual representation of the first stroke and the visual representation of the second stroke are displayed in the preview in an order that their corresponding first touch input and second touch input were detected in the drawing area.
128. The electronic device of item 127, wherein the captured camera image data comprises a video, further wherein displaying the preview comprises looping playback of the visual representation of the first stroke and the visual representation of the second stroke with the intervening amount of time over a looped playback of the video.
129. The electronic device of any of items 108-128, wherein the visual representation of the first stroke comprises an animated graphic that is displayed in accordance with one or more a characteristics selected from the group consisting of a characteristic intensity, a characteristic kinematic, and a duration of the corresponding first touch input or second touch input.
130. The electronic device of item 129, wherein the animated graphic is a beating heart.
131. The electronic device of item 129, wherein the animated graphic is a breaking heart.
132. The electronic device of item 129, wherein the animated graphic is a fireball.
133. The electronic device of any of items 108-128, wherein the visual representation of the first stroke comprises a still graphic that is displayed in accordance with an orientation of the corresponding first touch input or the corresponding second touch input.
134. The electronic device of item 133, further wherein the still graphic is a heart.
135. The electronic device of item 133, further wherein the still graphic is a kiss.
136. The electronic device of item 133, further wherein the still graphic is a tear drop.
137. The electronic device of any of items 108-128, wherein the visual representation of the first stroke includes a first endpoint corresponding to an initiation of the first touch input, a second endpoint corresponding to liftoff termination of the first touch input, and a line corresponding to movement of the first touch input across the touch-sensitive display unit, wherein display of the visual representation of the line includes displaying characteristic kinematics of the movement of the first touch input from the first endpoint to the second endpoint.
138. The electronic device of any of items 108-137, wherein the processing unit is further configured to:
   enable display of a send affordance in the drawing area;
   detect a third touch input corresponding to selection of the send affordance;
   wherein sending data representing the captured camera image data and the first stroke to the external device occurs in in response to detecting the third touch input.
139. The electronic device of any of items 108-138, wherein the processing unit is further configured to,
   prior to sending data representing the captured camera image data and the first stroke to the external device and in accordance to a determination of a status of at the external device, encode the captured camera image data with the visual representation of the first stroke;
   wherein sending data representing the captured camera image data and the first stroke to the external device includes sending the encoded captured camera image data.
140. The electronic device of any of items 108-139, wherein the processing unit is further configured to,
   enable display of, on the touch-sensitive display screen at the electronic device, a text messaging user interface associated with a contact of the external device, wherein the text messaging user interface includes a message transcript area associated with the contact; and
   enable display of at least a portion of the sent data, in the message transcript area.
141. The electronic device of item 140, wherein the processing unit is further configured to,
   loop playback, in the message transcript area, of the at least a portion of the sent data while the at least a portion of the sent data is a most recent data communication in the message transcript area that includes a visual representation of a touch input; and
   in response to a determination that the at least a portion of the sent data is no longer the most recent data communication comprising the visual representation of the touch input, cease looping playback of the at least a portion of the sent data and replacing the looped playback with a still frame based on the at least a portion of the sent data.
142. The electronic device of any of items 136 and 137, wherein the processing unit is further configured to, in response to a determination that the at least a portion of the sent data has been provided in the message transcript area for a predetermined period of time, remove display of the at least a portion of the sent data from the message transcript area.
143. An electronic device, comprising:
   a touch-sensitive display unit configured to display a graphic user interface;
   a camera unit; and
   a processing unit coupled to the touch-sensitive display unit and the camera unit, the processing unit configured to:
      enable display of, on the touch-sensitive display unit, an image in a digital viewfinder, wherein the image is based on camera image data received from the camera;
      detect a first touch input at a first location in the digital viewfinder;
      in response to detecting the first touch input and in accordance with a determination that the first touch input is detected while an operational mode of the camera is a recording mode, enable display of, in the digital viewfinder, a visual representation corresponding to the first touch input at the first location; and
      in response to detecting the first touch input and in accordance with a determination that the first touch input is detected while an operational mode of the camera is a non-recording mode, alter the image displayed in the digital viewfinder by adjusting a characteristic of the camera image data.
144. The electronic device of item 143, wherein the processing unit is further configured to determine whether the first touch input is detected while the operational mode of the camera is the recording mode or the non-recording mode.
145. The electronic device of any of items 143 and 144, wherein the first touch input is a single-finger input and the characteristic is a focus of the camera image data.
146. The electronic device of any of items 143 and 144, wherein the first touch input is a multiple-finger input and the characteristic is an optical magnification of the camera image data.
147. The electronic device of any of items 143 and 144, wherein the visual representation is displayed in the digital viewfinder for a duration of the first touch input and fades upon detection of lift-off of the first touch input.
148. The electronic device of any of items 143 and 144, wherein the visual representation is displayed in the digital viewfinder for a predetermined period of time before fading.
149. The electronic device of any of items 143 and 144, wherein the visual representation is maintained in the digital viewfinder while the digital viewfinder is displayed.
150. The electronic device of any of items 143, 144, and 147-149, wherein the visual representation includes an animation based on characteristic kinematics of the first touch input.
151. The electronic device of any of items 143, 144, and 147-150, wherein the visual representation includes an animation based on characteristic intensity of the first touch input.
152. The electronic device of any of items 143, 144, and 147-151, wherein displaying the visual representation includes looping playback of the visual representation.
153. The electronic device of any of items 143, 144, and 147-152, wherein displaying the visual representation includes outputting at least one of an audio output and a haptic output associated with the visual representation.
154. The electronic device of any of items 143, 144, and 147-153, wherein the first touch input is a single-finger tap at the first location in the digital viewfinder and the visual representation is at least one of a circle, an ellipses, and an oval at the first location.
155. The electronic device of any of items 143, 144 and 147-153, wherein the first touch input is a single-finger hold that exceeds a predetermined duration and the visual representation is a teardrop at the first location of the first touch input.
156. The electronic device of any of items 143, 144, and 147-153, wherein the first touch input is a single-finger contact having characteristic kinematics describing a movement of the single-finger contact beginning at the first location in the digital viewfinder and the visual representation is a line beginning at the first location with the characteristic kinematics.
157. The electronic device of any of items 143, 144 and 147-153, wherein the first touch input is a multiple-finger contact in the digital viewfinder and the visual representation is centered at the first location between touch contacts of the multiple-finger contact.
158. The electronic device of item 157, wherein the visual representation is oriented along an angle defined by the touch contacts on the touch-sensitive display unit.
159. The electronic device of any of items 143, 144, 147-153, 157, and 158, wherein the multiple-finger contact is a two-finger contact on the touch-sensitive display unit and the visual representation is a kiss that is displayed at the first location for a duration of the two-finger contact and fades upon lift-off of the two-finger contact.
160. The electronic device of any of items 143, 144, 147-153, 157, and 158, wherein the multiple-finger contact is a two-finger double-tap contact on the touch-sensitive display unit and the visual representation is a stamped image at the first location that is angled according to the angle defined by the two-finger contact, further wherein the stamped image does not fade from display of the image in the digital viewfinder.
161. The electronic device of item 160, wherein the stamped image is a stamped kiss.
162. The electronic device of any of items 143, 144, 147-153, 157, and 158, wherein the operational mode is the recording mode, further wherein the first touch input includes a varying characteristic intensity that fluctuates based on a varying intensity of the first touch input on the touch-sensitive display unit, wherein the processing unit is further configured to:
   enable display of the visual representation at the first location, wherein the visual representation is the animated graphic that is rendered according to the varying characteristic intensity of the first touch input at the first location.
163. The electronic device of item 162, wherein the first touch input corresponds to a press-and-hold input with the varying characteristic intensity at the first location and the visual representation is an animated fireball having a variable color scheme and size that are scaled in accordance with the varying characteristic intensity of the press-and-hold input.
164. The electronic device of any of items 143, 144, 147-153, 157, 158, and 163, wherein the visual representation is a beating heart that loops for a duration of the first touch input.
165. The electronic device of any of items 143, 144, 147-153, 157, 158, and 162, wherein the visual representation is a multiple-part animation having at least a first part and a second part, wherein the first part is based on a first detected aspect of the first touch input and the second part is distinct from the first part and is based on a subsequently detected aspect of the first touch input.
166. The electronic device of item 165, further wherein the multiple-part animation is a breaking heart animation, wherein:
   displaying the first part includes looping a beating heart animation at the first location for a duration of time corresponding to the first touch input on the touch-sensitive display unit at the first location, and
   displaying the second part includes ceasing looping of the beating heart animation and replacing the beating heart animation with display of a breaking heart animation based on the subsequently detected aspect, wherein the subsequently detected aspect is a movement of the first touch input that meets a predefined distance threshold.
167. An electronic device, comprising:
   a touch-sensitive display unit configured to display a graphic user interface;
   a camera unit; and
   a processing unit coupled to the touch-sensitive display unit and the camera unit, the processing unit configured to:
      enable display of, on the touch-sensitive display unit, a text messaging user interface associated with a contact, wherein the text messaging user interface includes:
         a message transcript area, and
         a compact drawing area, wherein the compact drawing area includes an expand affordance corresponding to an enlarged drawing area;
      detect a first user input corresponding to the expand affordance;
      in response to detecting the first user input, replacing the displayed text messaging interface with display of the enlarged drawing area, wherein the enlarged drawing area includes a camera affordance,
      detect a second user input corresponding to the camera affordance; and
      in response to detecting the second user input, enable display of a digital viewfinder, in the enlarged drawing area, that presents camera image data received from the camera.
168. The electronic device of item 167 wherein the processing unit is further configured to,
   detect user input on an affordance representing the compact drawing area in the text messaging user interface; and
   in response to detecting the user input on the affordance, enable display of the compact drawing area in the text messaging user interface.
169. The electronic device of any of items 167 and 168, wherein the affordance representing the compact drawing area is displayed in a menu bar of the text messaging user interface, further wherein the menu bar includes a camera affordance corresponding to a camera roll, a text entry field corresponding to a soft keyboard for composing a textual message to the contact, and a record audio affordance that initiates recording of an audio message to the contact.
170. The electronic device of item 169, wherein the processing unit is further configured to,
   receive an input corresponding to a request to display the soft keyboard;
   in response to the user request to display the soft keyboard, cease to display the compact drawing area; and
   enable display of the soft keyboard.
171. The electronic device of any of items 167-170, wherein the text messaging user interface includes at least a first portion and a second portion displayed below the first portion, wherein the message transcript area is displayed in the first portion and the compact drawing area is displayed in the second portion.
172. The electronic device of any of items 167-171, wherein the enlarged drawing area includes a minimize affordance, wherein the processing unit is further configured to,
   in response to detecting user input on the minimize affordance, replace display of the enlarged drawing area with display of the text messaging user interface.
173. The electronic device of item 171, wherein the processing unit is further configured to:
   in response to detecting user input on the minimize affordance, enable display of the compact drawing area.
174. The electronic device of any of items 167-173, wherein the enlarged drawing area includes an enlarged drawing canvas and the compact drawing canvas includes a compact drawing area, wherein the enlarged drawing canvas and the compact drawing canvas have a common aspect ratio.
175. The electronic device of any of items 167-174, wherein the processing unit is further configured to,
   enable display of a text entry field in the enlarged drawing area;
   in response to detection of user input on the text entry field, enable display of a soft keyboard in the enlarged drawing area; and
   in response to detecting a set of user inputs on the soft keyboard corresponding to composition of a textual message and a request to send the textual message, compose a textual message and sending the textual message to the contact while maintaining display of the enlarged drawing area.
176. The electronic device of any of items 167-175, wherein the processing unit is further configured to,
   enable display of a legend of one or more indicators in the compact drawing area, wherein each indicator represents a type of touch input and a visual representation corresponding to the type of touch input.
177. The electronic device of any of items 167-176, wherein the enlarged drawing area and the compact drawing area include display of a plurality of color affordances and an indicator representing a currently-selected color affordance.
178. The electronic device of item 177, wherein the processing unit is further configured to,
   in response to detecting a user input on any one of the plurality of color affordances, wherein the user input corresponds to changing a color represented by the color affordance, enable display of a color selection interface, wherein the color selection interface includes a plurality of selectable colors; and
   in response to detecting user input corresponding to selecting of a color of the plurality of colors, update the color affordance with the selected color.
179. The electronic device of item 178, wherein the color adjustment interface includes a brightness adjustment affordance.
180. The electronic device of any of items 167-179, wherein the processing unit is further configured to,
   detect a first touch input, at a first location in the compact drawing area, representing a first stroke;
   in response to detecting the first touch input, enable display of a visual representation, at the first location in the compact drawing area, of the first stroke; and
   automatically send data corresponding to the visual representation of the first stroke to an external device associated with the contact.
181. The electronic device of any of items 167-180, wherein the camera affordance is displayed at a first brightness level, wherein the processing unit is further configured to,
   while displaying the enlarged drawing area, in response to detecting a third user input in the enlarged drawing area, dim the camera affordance to a second brightness level less than the first brightness level; and
   after a predetermined period of time has elapsed since cessation of the third user input, restore the camera affordance to the first brightness level.
182. The electronic device of any of items 167-181, wherein the processing unit is further configured to,
   while displaying the digital viewfinder in the enlarged drawing area, enable display of,
   a record video affordance that toggles on and off recording a video based on the camera image data presented in the digital viewfinder,
   a still image capture affordance that takes a picture based on the camera image data presented in the digital viewfinder, and
   a camera flip affordance that toggles activation of a front or back camera.
183. The electronic device of item 182, wherein the processing unit is further configured to,
   in response to user selection of the record video affordance that toggles on recording of the video, enable display of a countdown timer representing a remaining time until recording automatically ceases.
184. The electronic device of any of items 182 and 183, wherein the processing unit is further configured to,
   in response to user selection of the record video affordance that toggles on recording of the video, enable display of an animated progress bar that fills horizontally indicating remaining duration until recording automatically ceases.
185. The electronic device of any of items 167-184, wherein the processing unit is further configured to, upon detection of user input on a displayed exit affordance corresponding to the digital viewfinder, cease displaying of the digital viewfinder in the enlarged drawing area and replacing the digital viewfinder with an enlarged drawing canvas.
186. An electronic device, comprising:
   a touch-sensitive display unit configured to display a graphic user interface; and
   a processing unit coupled to the touch-sensitive display unit, the processing unit configured to:
      receive, at the electronic device, message data including a visual information capable of playback over time from a contact;
      enable display of, on the touch-sensitive display unit, the message data including the visual information in a text messaging user interface of a messaging application, wherein the text messaging user interface includes a text message transcript associated with the contact, further wherein displaying the message data including the visual information comprises displaying a looped playback of the visual information in the text message transcript;
      in accordance with a determination that a status of the message data including the visual information meets a display criteria, maintain the looped playback of the visual information in the text message transcript; and
      in accordance with a determination that a status of the message data including the visual information does not meet the display criteria, cease displaying the looped playback of the visual information in the text message transcript.
187. The electronic device of item 186, wherein the display criteria includes a criterion that is met when the message data is a most-recently-communicated message data in the text message transcript with the contact.
188. The electronic device of any of items 186 and 187, wherein the display criteria includes a criterion that is met when the message data has not yet expired.
189. The electronic device of any of items 186-188, wherein the processing unit is further configured to, determine whether the status of the message data meets the display criteria.
190. The electronic device of any of items 186-188, wherein the processing unit is further configured to, in accordance with the determination that the status of the message data including the visual information does not meet the display criteria, replace the looped playback of the visual information with a still image of the visual information.
191. The electronic device of item 190, wherein the processing unit is further configured to,
   detect user selection of the still image of the visual information in the text message transcript; and
   in response to detection of the user selection, replace display of the text messaging user interface with display of an enlarged drawing area, wherein looped playback of the visual representation is displayed in the enlarged drawing area.
192. The electronic device of item any of items 186-191, wherein the processing unit is further configured to, in response to detecting a user request to retain display of the visual information of the message data in the text message transcript, maintain display of the visual information in the text message transcript.
193. The electronic device of any of items 186-192, wherein the processing unit is further configured to, in accordance with the determination that the status of the message data including the visual information does not meet the display criteria, remove the visual information from the text message transcript.
194. The electronic device of any of items 186-193, wherein the processing unit is further configured to,
   detect user selection of the looped playback of the visual information in the text message transcript; and
   in response to detection of the user selection, replace display of the text messaging user interface with display of an enlarged drawing area, wherein looped playback of the visual representation is displayed in the enlarged drawing area.
195. The electronic device of item 194, wherein the processing unit is further configured to,
   while displaying the enlarged drawing area, detect a user request to reply to the contact; and
   in response to detecting the user request, replace display of the visual information in the enlarged drawing area with a blank drawing canvas in the enlarged drawing area.
196. The electronic device of any of items 186-195, wherein the message data further comprises audio information, wherein the processing unit is further configured to:
   enable display of a sound affordance;
   detect a user input on the sound affordance; and
   in response to detecting the user input, cause output of the audio information through a speaker.
197. The electronic device of any of items 186-196, wherein the visual information comprises a recorded video and a visual representation corresponding to a touch input received at an external device associated with the contact, further wherein displaying the looped playback of the visual information includes overlaying a looped playback of the video recording with a looped playback of the visual representation.
198. The electronic device of any of items 186-196, wherein the visual information includes a still image and a visual representation corresponding to a touch input received at an external device associated with the contact, further wherein displaying the looped playback of the visual information includes overlaying the still image with a looped playback of the visual representation.
199. The electronic device of any of items 186-196, wherein the visual information includes an encoded video, wherein the encoded video includes a visual representation of a touch input detected at an external device associated with the contact and at least one of a still image and a recorded video captured at the external device.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve the delivery to users of invitational content or any other content that may be of interest to them. The present disclosure contemplates that in some instances, this gathered data may include personal information data that uniquely identifies or can be used to contact or locate a specific person. Such personal information data can include demographic data, location-based data, telephone numbers, email addresses, home addresses, or any other identifying information.

The present disclosure recognizes that the use of such personal information data, in the present technology, can be used to the benefit of users. For example, the personal information data can be used to deliver targeted content that is of greater interest to the user. Accordingly, use of such personal information data enables calculated control of the delivered content. Further, other uses for personal information data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of advertisement delivery services, the present technology can be configured to allow users to select to "opt in" or "opt out" of participation in the collection of personal information data during registration for services. In another example, users can select not to provide location information for targeted content delivery services. In yet another example, users can select to not provide precise location information, but permit the transfer of location zone information.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences based on non-personal information data or a bare minimum amount of personal information, such as the content being requested by the device associated with a user, other non-personal information available to the content delivery services, or publically available information.

## Claims

1. A method, comprising:
at an electronic device having a touch-sensitive display and a camera:
displaying, on the touch-sensitive display, an image in a digital viewfinder, wherein the image is based on camera image data received from the camera;
detecting a first touch input at a first location in the digital viewfinder;
in response to detecting the first touch input and in accordance with a determination that the first touch input is detected while an operational mode of the camera is a recording mode, displaying, in the digital viewfinder, a visual representation corresponding to the first touch input at the first location; and
in response to detecting the first touch input and in accordance with a determination that the first touch input is detected while an operational mode of the camera is a non-recording mode, forgoing displaying, in the digital viewfinder, the visual representation corresponding to the first touch input.

2. The method of claim 1, wherein the first touch input is a single-finger input, the method further comprising:
in response to detecting the first touch input and in accordance with a determination that the first touch input is detected while an operational mode of the camera is a non-recording mode, altering the image displayed in the digital viewfinder by adjusting a focus of the camera image data.

3. The method of claim 1, wherein the first touch input is a multiple-finger input, the method further comprising:
in response to detecting the first touch input and in accordance with a determination that the first touch input is detected while an operational mode of the camera is a non-recording mode, altering the image displayed in the digital viewfinder by adjusting an optical magnification of the camera image data.

4. The method of claim 1, wherein the visual representation is displayed in the digital viewfinder for a duration of the first touch input and fades upon detection of lift-off of the first touch input.

5. The method of claim 1, wherein the visual representation is maintained in the digital viewfinder while the digital viewfinder is displayed.

6. The method of any of claims 1, 4, and 5, wherein the visual representation includes an animation based on characteristic kinematics of the first touch input.

7. The method of any of claims 1 and 4-6, wherein the visual representation includes an animation based on characteristic intensity of the first touch input.

8. The method of any of claims 1 and 4-7, wherein displaying the visual representation includes outputting at least one of an audio output and a haptic output associated with the visual representation.

9. The method of any of claims 1 and 4-8, wherein the first touch input is a single-finger tap at the first location in the digital viewfinder and the visual representation is at least one of a circle, an ellipses, and an oval at the first location.

10. The method of any of claims 1 and 4-9, wherein the first touch input is a single-finger hold that exceeds a predetermined duration and the visual representation is a teardrop at the first location of the first touch input.

11. The method of any of claims 1 and 4-10, wherein the first touch input is a single-finger contact having characteristic kinematics describing a movement of the single-finger contact beginning at the first location in the digital viewfinder and the visual representation is a line beginning at the first location with the characteristic kinematics.

12. The method of any of claims 1 and 4-11, wherein the first touch input is a multiple-finger contact in the digital viewfinder and the visual representation is centered at the first location between touch contacts of the multiple-finger contact.

13. The method of claim 12, wherein the visual representation is oriented along an angle defined by the touch contacts on the touch-sensitive display.

14. A computer readable storage medium storing one or more programs, the one or more programs comprising instructions, which when executed by one or more processors of an electronic device, cause the device to perform any of the methods of claims 1-13.

15. An electronic device, comprising;
one or more processors;
memory; and
one or more programs, wherein the one or more programs are stored in the memory and configured to be executed by the one or more processors, the one or more programs including instructions for performing the method of any of claims 1-13.
